# EUROPEAN PATENT APPLICATION

(11) **EP 3 854 485 A1**
(43) Date of publication of application: **28.07.2021**
(21) Application number: 19861642.7
(22) Date of filing: 19.09.2019
(51) Int. Cl.: B02C 23/18

(54) **FAN MILL**

(30) Priority: 21.09.2018 CN 201811110206
(71) Applicant: YUNNAN QIDAN PHARMACEUTICAL CO., LTD., Wenshan City, Wenshan Prefecture, Yunnan 663099 (CN); Kunming Tekang Technology Co., Ltd., Kunming, Yunnan 650200 (CN); Zhejiang Yunjie Technology Co., LTD., Zhejiang 325024 (CN)
(72) Inventor: JIA, Ping, Kunming Yunnan 650200 (CN); CUI, Xiuming, Wenzhou Zhejiang 325024 (CN); ZENG, Yawen, Wenzhou Zhejiang 325024 (CN); SHE, Yongxin, Wenzhou Zhejiang 325024 (CN)
(74) Representative: Dargiewicz, Joanna
(86) International application number: PCT/CN2019/106794
(87) International publication number: WO 2020/057617

(57) **Abstract**

A fan mill, comprising primary mills (47, 57) and secondary mills (49, 61), and first and second inner circulation pipes (48, 58, 52, 64). The first inner circulation pipes (48, 58) are connected to air outlets of the primary mills (47, 57) and inner circulation pipe interfaces (3, 11), and the second inner circulation pipes (52, 64) are connected to air outlets of the secondary mills (49, 61) and the inner circulation pipe interfaces (3, 11); the inner circulation pipe interfaces (3, 11) are located on a position close to an air inlet on a housing (1) of the primary mills (47, 57) or the secondary mills (49, 61), or located on feed pipes (56, 60) of which one end is connected to the air inlet of the housing (1); a kinetic energy recovery device is mounted in the feed pipes (56, 60), and the kinetic energy recovery device is connected to an impeller in the housing (1). Also provided are an application method of the mill and products processed by same.

## Description

### Technical Field

The present invention relates to a circulating mill for drying and grinding, and belongs to the fields of circulating fluidized bed technologies, Chinese herbal medicine processing technologies, agricultural product processing technologies, drying and grinding technologies, new material preparation technologies, and energy-saving and environmental protection technologies.

### Background

The invention patent 2018111102064 "CIRCULATING MILL, APPLICATION METHOD THEREOF, AND PRODUCT PROCESSED BY CIRCULATING MILL" discloses a circulating mill. The circulating mill can quickly make fresh products, liquid and other high-moisture and high-viscosity materials into dry powder at normal temperature and recover water from the materials in the form of liquid. It can also be used for ultrafine grinding of minerals. It has the characteristics of low energy consumption, large output, and good product quality. However, it has at least three following shortcomings. Firstly, a kinetic energy recovery blade structure for kinetic energy recovery of high-speed fluidized materials is unreasonable. A kinetic energy recovery blade is disposed in a mill impeller, high-speed fluidized materials at an outlet of a primary mill is used to impact the kinetic energy recovery blade in an impeller of a secondary mill to assist in driving the impeller of the secondary mill to rotate, high-speed fluidized materials at an outlet of the secondary mill is also used to impact the kinetic energy recovery blade in an impeller of the primary mill to assist in driving the impeller of the primary mill to rotate, so as to implement recovery and utilization of the kinetic energy of the high-speed fluidized materials to reduce the energy consumption of the circulation of the fluidized materials in the circulating mill. The structure of the kinetic energy recovery blade makes the fluidized materials have no flow channel to flow out in time after impacting the kinetic energy recovery blade, which hinders the continuous and effective impact of subsequent fluidized materials on the kinetic energy recovery blade, and the kinetic energy recovery rate of the fluidized materials is not high. In addition, the kinetic energy recovery blade with a simple structure cannot form a pressure difference between windward and leeward sides of the blade, and the pressure difference can also be used as an auxiliary force to drive the impeller to rotate in theory. Secondly, a heat exchanger of an operation medium supply branch relies only on a low-temperature air flow from a condenser to cool high-temperature and high-humidity tail gas discharged from a bag dust collector, heat required by the cooling air is only sensible heat, and the cooling of the tail gas not only gives out sensible heat, but also has the latent heat of water liquefaction. Due to the insufficient cooling supply, the temperature and moisture content of the air flow into the condenser cannot be reduced to be low enough, and the condenser needs to consume more energy so as to reduce the moisture content of the air flow to meet process requirements of the circulating mill. Returning in the circulating mill process refers to the return of the powder in the circulating mill main engine by an outer circulation channel. Returning improves the fluidization state of the high-humidity and high-viscosity materials and is of great significance to the circulating mill process. Thirdly, in the invention patent 2018111102064, only powder discharged by a cyclone dust collector becomes returned materials. For liquid and high-moisture and high-viscosity materials with moisture content over 95%, the effect is far from the target due to an insufficient return quantity. Reference may be made to Chinese invention patents 2018111102064, 2017111181038, 2015110139212, 2014108408080, and 2010101628876 for more technical backgrounds of the application.

### Summary of the Invention

A first objective of the present invention is to continuously improve the circulating mill described in the invention patent 2018111102064 to improve economy and reliability thereof, and a second objective of the present invention is to provide application methods of a circulating mill and products processed by a circulating mill.

A technical measure employed to achieve the first objective of the present invention is as follows: a first circulating mill is composed of a housing, an impeller, and a kinetic energy recovery device, the housing is provided with an inner circulation pipe interface near an air inlet, an air flow from the inner circulation pipe interface assists in driving the impeller to rotate by impacting the kinetic energy recovery device, the air inlet on the housing is an inlet of the first circulating mill, and an air outlet on the housing is an outlet of the first circulating mill.

The kinetic energy recovery device of the first circulating mill is implemented in such a way that an air inlet on a front disc expands to expose a blade or an annular window is formed on the front disc to expose the blade, and the air flow from the inner circulation pipe interface assists in driving the impeller to rotate by impacting the exposed blade.

Another technical measure employed to achieve the first objective of the present invention is as follows: a second circulating mill is composed of a housing, an impeller, a kinetic energy recovery device, and a feed pipe, the feed pipe is provided with an inner circulation pipe interface, one end of the feed pipe is connected to an air inlet on the housing, the kinetic energy recovery device is disposed in the feed pipe, an air flow from the inner circulation pipe interface assists in driving the impeller to rotate by impacting the kinetic energy recovery device, the other end of the feed pipe is an inlet of the second circulating mill, and an air outlet on the housing is an outlet of the second circulating mill.

In order to maximize the recovery and utilization of the kinetic energy of fluidized materials, the present invention further provides a third circulating mill, which is composed of a housing, an impeller, a kinetic energy recovery device, and a feed pipe. The feed pipe is provided with an inner circulation pipe interface, one end of the feed pipe is connected to an air inlet on the housing, the kinetic energy recovery device is disposed in the feed pipe, the impeller is driven to rotate by the kinetic energy recovery device impacted by the air flow from the inner circulation interface, the other end of the feed pipe is an inlet of the third circulating mill, and an air outlet on the housing is an outlet of the third circulating mill.

In one implementation, the kinetic energy recovery device of the second or third circulating mill is a kinetic energy recovery blade. The kinetic energy recovery blade is fixed to an impeller shaft or fixed to an impeller shaft elongating along the feed pipe, or one end of the kinetic energy recovery blade is fixed to a rear disc and/or a shaft sleeve and/or an impeller shaft, and the other end is fixed to an impeller shaft elongating along the feed pipe, or the other end is fixed to a connecting plate fixed to an impeller shaft elongating along the feed pipe.

In another implementation, the kinetic energy recovery device of the second or third circulating mill is a kinetic energy recovery impeller. The kinetic energy recovery impeller has many implementations. A first kinetic energy recovery impeller is composed of a kinetic energy recovery blade and an upper ring, one end of the kinetic energy recovery blade is fixed to a shaft sleeve and/or a rear disc, the other end is fixed to the upper ring, and a plurality of kinetic energy recovery blades are distributed circumferentially along the upper ring; and the upper ring is fixed to an impeller shaft elongating along the feed pipe.

In order to improve the rigidity of the kinetic energy recovery impeller of the circulating mill, a reinforcing ring of the kinetic energy recovery blade may be further disposed in a middle part of the kinetic energy recovery impeller. The reinforcing ring is fixed to a middle part of the kinetic energy recovery blade and an impeller shaft elongating along the feed pipe.

For ease of implementation, the kinetic energy recovery impeller is a second kinetic energy recovery impeller, which is composed of a kinetic energy recovery impeller shaft sleeve, a kinetic energy recovery blade, and an upper ring. One end of the kinetic energy recovery blade is fixed to the kinetic energy recovery impeller shaft sleeve, the kinetic energy recovery impeller shaft sleeve is fixed to a shaft sleeve or an impeller shaft, the other end is fixed to the upper ring, the upper ring is fixed to an impeller shaft elongating along the feed pipe, the elongated impeller shaft is provided with bearings fixed to a bracket, and the bracket is fixed to the feed pipe or a base.

In order to reduce the hindrance of the rotation of the kinetic energy recovery impeller on the air flow from the inner circulation pipe interface and increase the torque exerted by the air flow from the inner circulation pipe interface on the kinetic energy recovery impeller, the kinetic energy recovery impeller is a third kinetic energy recovery impeller, which is composed of a kinetic energy recovery impeller shaft sleeve, a kinetic energy recovery impeller shaft, a kinetic energy recovery blade, an upper ring, and a transmission. One end of the kinetic energy recovery blade is fixed to the kinetic energy recovery impeller shaft sleeve, the other end is fixed to the upper ring, the transmission is fixed to a feed pipe and a base, an input shaft of the transmission is the kinetic energy recovery impeller shaft, the kinetic energy recovery impeller shaft sleeve is fixed to the input shaft of the transmission, and an output shaft of the transmission is an impeller shaft or connected therewith; the upper ring is fixed to the input shaft of the transmission, one end of the input shaft of the transmission extending out of the upper ring is provided with bearings fixed to a bracket, and the bracket is fixed to the feed pipe and the base.

The kinetic energy recovery impeller may also be a fourth kinetic energy recovery impeller, which is composed of a kinetic energy recovery impeller shaft sleeve, a lower ring, a kinetic energy recovery blade, and an upper ring. One end of the kinetic energy recovery blade is fixed to the lower ring, the other end is fixed to the upper ring, and the lower ring is fixed to the kinetic energy recovery impeller shaft sleeve.

In order to increase a pressure difference between a windward side and a leeward side of the kinetic energy recovery blade, a cross section of the kinetic energy recovery blade is semicircular or wing-shaped, or the windward side is flat and the leeward side is cambered.

In order to further increase the torque exerted by the air flow from the inner circulation pipe interface on the kinetic energy recovery impeller, the diameter of the second and third kinetic energy recovery impellers of the circulating mill is 0.5 to 4 times that of the impeller.

An important function of the feed pipe is grading, and feed pipes of different structures have different grading capabilities. In order to meet requirements of different processes for grading effects, the feed pipe may be in following forms: a straight pipe with one end connected to an air inlet on the housing and the other end being an inlet of the circulating mill; or a tapered pipe with a small head connected to an air inlet on the housing and a large head being an inlet of the circulating mill; or a tapered pipe with a large head connected to an air inlet on the housing and a small head being an inlet of the circulating mill; or a tapered pipe with a small head connected to an air inlet on the housing and a large head provided with a cover, an opening in the middle of the cover being an inlet of the circulating mill; or a cyclone dust collector, of which an air inlet is an inner circulation pipe interface, an ash discharge port is connected to an air inlet on the housing, and an exhaust outlet is an inlet of the circulating mill; or an uncapped cyclone dust collector, of which an air inlet is an inner circulation pipe interface, an ash discharge port is connected to an air inlet on the housing, and an uncapped end is an inlet of the circulating mill.

On the basis of the technical solution of the circulating mill, the present invention provides six circulating mill main engines.

A first circulating mill main engine is composed of a primary mill, a secondary mill, and an inner circulation pipe, the primary mill and the secondary mill are the first circulating mill, an outlet of the primary mill is connected to an inner circulation pipe interface of the secondary mill through the inner circulation pipe, an outlet of the secondary mill is connected to an inner circulation pipe interface of the primary mill through the inner circulation pipe, an inlet of the primary mill is an inlet of the first circulating mill main engine, and an inlet of the secondary mill is an outlet of the first circulating mill main engine.

A second circulating mill main engine is composed of a primary mill, a secondary mill, and an inner circulation pipe, the primary mill and the secondary mill are the second circulating mill, an outlet of the primary mill is connected to an inner circulation pipe interface of the secondary mill through the inner circulation pipe, an outlet of the secondary mill is connected to an inner circulation pipe interface of the primary mill through the inner circulation pipe, an inlet of the primary mill is an inlet of the second circulating mill main engine, and an inlet of the secondary mill is an outlet of the second circulating mill main engine.

A third circulating mill main engine is the second circulating mill main engine from which the kinetic energy recovery devices in the feed pipes of the primary mill and the secondary mill are removed.

A fourth circulating mill main engine is improved based on the second circulating mill main engine. An outlet on the housing is connected to an inner circulation pipe interface on the feed pipe thereof through the inner circulation pipe, a three-way air inlet is disposed between one end of the feed pipe and the air inlet on the housing, a second opening of the three-way air inlet is an inlet of the fourth circulating mill main engine, and the other end of the feed pipe is an outlet of the fourth circulating mill main engine.

A fifth circulating mill main engine is the fourth circulating mill main engine from which the kinetic energy recovery device in the feed pipe is removed.

A sixth circulating mill main engine is composed of a primary mill, a secondary mill, and an inner circulation pipe, the primary mill is the second circulating mill, the secondary mill is the third circulating mill, an outlet of the primary mill is connected to an inner circulation pipe interface of the secondary mill through the inner circulation pipe, an outlet of the secondary mill is connected to an inner circulation pipe interface of the primary mill through the inner circulation pipe, an inlet of the primary mill is an inlet of the sixth circulating mill main engine, and an inlet of the secondary mill is an outlet of the sixth circulating mill main engine.

In order to straighten the inner circulation pipe and minimize wall hanging in the inner circulation pipe, an axis of the primary mill of the first or second or sixth circulating mill main engine is perpendicular to an axis of the secondary mill.

In order to adjust an air volume of the secondary mill, the inner circulation pipe connected to the outlet of the secondary mill of the first or second or sixth circulating mill main engine is provided with a circulating air volume adjusting device; or the feed pipe of the secondary mill of the second or sixth circulating mill main engine is provided with an air volume adjusting device disposed between the inner circulation pipe interface and one end of the feed pipe; or an air volume adjusting device is disposed between one end of the feed pipe of the fourth circulating mill main engine and the three-way air inlet.

In order to reduce the circulating air flow volume in the circulating mill main engine and reduce the temperature in the engine, a cross-sectional area of the inner circulation pipe connected to the outlet of the secondary mill is less than that of the inner circulation pipe connected to the outlet of the primary mill.

In order to reduce the pressure in the primary mill and reduce the eccentric force generated by the kinetic energy recovery impeller impacted by the air flow from the inner circulation pipe, the housing of the primary mill of the second or sixth circulating mill main engine is provided with 2 or 3 or 4 outlets, and the number of the secondary mill and the number of the inner circulation pipe interface on the feed pipe of the primary mill are the same as the number of the outlet on the housing of the primary mill.

On the basis of the technical solution of the circulating mill main engine, the present invention provides following four technical solutions for circulating mills.

A first circulating mill is composed of the first or second or third or fourth or fifth or sixth circulating mill main engine and a first accessory device, the first accessory device is composed of a dust collector and an outer circulation pipe, an air inlet of the dust collector is connected to the outlet of the circulating mill main engine, and an outlet of the outer circulation pipe is connected to the inlet of the circulating mill main engine.

A second circulating mill is composed of the first or second or third or fourth or fifth or sixth circulating mill main engine and a second accessory device, the second accessory device is composed of a dust collector and an outer circulation pipe, the outer circulation pipe is provided with a dust collector ash discharge interface, the dust collector ash discharge interface is provided with an adjusting valve, a dust collector ash discharge pipe is provided with a discharge port, an air inlet of the dust collector is connected to the outlet of the circulating mill main engine, an outlet of the outer circulation pipe is connected to the inlet of the circulating mill main engine, and a dust collector ash discharge port is connected to the adjusting valve.

A third circulating mill is composed of the first or second or third or fourth or fifth or sixth circulating mill main engine and a third accessory device, the third accessory device is composed of a cyclone dust collector, a bag dust collector, and an outer circulation pipe, the outer circulation pipe is provided with a cyclone dust collector ash discharge interface, an air inlet of the cyclone dust collector is connected to the outlet of the circulating mill main engine, a cyclone dust collector exhaust outlet is connected to an air inlet of the bag dust collector, a cyclone dust collector ash discharge port is connected to the cyclone dust collector ash discharge interface on the outer circulation pipe, and an outlet of the outer circulation pipe is connected to the inlet of the circulating mill main engine.

A fourth circulating mill is composed of the first or second or third or fourth or fifth or sixth circulating mill main engine and a fourth accessory device, the fourth accessory device is composed of a cyclone dust collector, a bag dust collector, an outer circulation pipe, and an operation medium supply branch, the outer circulation pipe is provided with a cyclone dust collector ash discharge interface, an air inlet of the cyclone dust collector is connected to the outlet of the circulating mill main engine, a cyclone dust collector exhaust outlet is connected to an air inlet of the bag dust collector, a cyclone dust collector ash discharge port is connected to the cyclone dust collector ash discharge interface on the outer circulation pipe, an outlet of the outer circulation pipe is connected to the inlet of the circulating mill main engine, and an air inlet of the outer circulation pipe is connected to an exhaust outlet of the operation medium supply branch.

The third or fourth accessory device further includes a return device composed of a 1# conveyor and a 2# conveyor, the 1# conveyor is provided with one feed port and two discharge ports, one discharge port is a main discharge port of the circulating mill, the 2# conveyor is provided with two feed ports and two discharge ports, the feed port of the 1# conveyor is connected to an ash discharge port of the bag dust collector, the other discharge port of the 1# conveyor is connected to one feed port of the 2# conveyor, the other feed port of the 2# conveyor is connected to the cyclone dust collector ash discharge port, one discharge port of the 2# conveyor is provided with a valve, an outlet of the valve is connected to the cyclone dust collector ash discharge interface on the outer circulation pipe, and the other discharge port of the 2# conveyor is an auxiliary discharge port of the circulating mill.

In order to facilitate the processing of liquid materials, an atomizer may be disposed on the outer circulation pipe as a feeding device of the liquid materials.

In order to facilitate the processing of solid materials, the outer circulation pipe may be provided with a screw feeder as a feeding device, a discharge port is at a tail end of a material pipe of the screw feeder, a tail end bearing inner ring is fixed to a screw blade close to the tail end through a bearing sleeve, and a tail end bearing seat is fixed to the material pipe.

In order to achieve full closed loop operation, a feeding port of the screw feeder and a main discharge port and an auxiliary discharge port of the return device may be provided with an air-closing device formed by a valve, a storage pipe, and a valve connected successively.

In order to enable the fourth circulating mill to also use natural air as an operation medium, an air purification chamber of the bag dust collector of the fourth circulating mill is further provided with a second exhaust outlet with a cover, and the outer circulation pipe is further provided with a second air inlet with a cover.

In order to grind large hard materials, the present invention further provides a mine circulating mill, which is implemented by disposing a mill on an outer circulation pipe of an accessory device.

The operation medium supply branch of the fourth circulating mill is used to provide an operation medium in line with the process requirements for the circulating mill. The present invention provides six operation medium supply branches for the circulating mill. A first operation medium supply branch is composed of a heat exchanger, a condenser, and a heater, the heat exchanger being composed of a heat exchange branch and a cooling branch, heat medium channel air inlets of the heat exchange branch and the cooling branch being gathered together through a heat exchanger air inlet pipe, an inlet of the heat exchanger air inlet pipe being an air inlet of the operation medium supply branch, heat medium channel exhaust outlets of the heat exchange branch and the cooling branch being connected to an air inlet of the condenser, an exhaust outlet of the condenser being connected to a refrigerant channel of the heat exchange branch through a condenser exhaust pipe, an exhaust outlet of the refrigerant channel of the heat exchange branch being connected to an air inlet of the heater through a refrigerant channel exhaust pipe, an exhaust outlet of the heater being an exhaust outlet of the operation medium supply branch, and the air inlet of the operation medium supply branch being connected to the exhaust outlet of the bag dust collector.

A second operation medium supply branch is improved based on the first operation medium supply branch. Heat medium channel air intake volume adjusting devices of the heat exchange branch and the cooling branch are disposed in the heat exchanger air inlet pipe to adjust heat medium channel air volumes of the heat exchange branch and the cooling branch.

A third operation medium supply branch is composed of a first heat exchanger, a second heat exchanger, a condenser, and a heater, a heat medium channel inlet of the first heat exchanger being an air inlet of the operation medium supply branch, an outlet of the heater being an exhaust outlet of the operation medium supply branch, an air flow channel of the operation medium supply branch being formed by the heat medium channel of the first heat exchanger, a heat medium channel of the second heat exchanger, a heat medium channel of the condenser, an air duct, a refrigerant channel of the second heat exchanger, and a refrigerant channel of the heater connected sequentially, a refrigerant channel of the condenser being an evaporator of a heat pump, a heat medium channel of the heater being a condenser of the heat pump, and the air inlet of the operation medium supply branch being connected to the exhaust outlet of the bag dust collector.

A fourth operation medium supply branch is improved based on the third operation medium supply branch. A compressor exhaust pipe of the heat pump is provided with a switching valve to divide the exhaust pipe into two branches. A first branch enters the heater and then leads to a radiator, a second branch is in communication with a first branch coming out of the heater, and the air duct is provided with a pipeline with valves connected to the outlet of the heater.

Alternatively, the operation medium supply branch is a fifth operation medium supply branch that is a heater for heating an operation medium.

Alternatively, the operation medium supply branch is a sixth operation medium supply branch that is a cooler for cooling the operation medium.

In order to trigger physical and chemical reactions of the materials in the machine, the accessory device further includes an optical device composed of a tee joint, a light source, a reflector, and a dust-proof fan, an opening of the tee joint being connected to the outlet of the circulating mill main engine or the exhaust outlet of the cyclone dust collector, a second opening being connected to the air inlet of the cyclone dust collector or the bag dust collector, the light source being disposed in a third opening of the tee joint, the third opening of the tee joint being connected to an exhaust outlet of the dust-proof fan, an inlet of the dust-proof fan being in communication with an air purification chamber of the bag dust collector, and the reflector being configured to concentrate light on fluidized materials.

In order to strengthen irradiation of light on the fluidized materials, the optical device may also be implemented in such a way that the optical device is composed of a cross joint, a light source, a reflector, and a dust-proof fan, an opening of the cross joint being connected to the outlet of the circulating mill main engine or the exhaust outlet of the cyclone dust collector, a second opening being connected to the air inlet of the cyclone dust collector or the bag dust collector, the light source being disposed in a third opening and a fourth opening of the cross joint, and the third opening and the fourth opening of the cross joint being connected to an exhaust outlet of the dust-proof fan.

The optical device may also be a light source disposed in the air inlet of the outer circulation pipe and a reflector, the reflector being configured to concentrate light on fluidized materials; the optical device may also be a light source disposed in the exhaust outlet of the bag dust collector and/or in the exhaust outlet of the condenser; the physical and chemical reactions of the materials in the machine may also be caused by an acoustic device, which is a sound generator disposed on the main engine or/and the accessory device.

In order to achieve the second objective of the present invention, the present invention provides an application method of a circulating mill and a product processed by a circulating mill.

The circulating mill has a variety of configuration manners, which can meet processing requirements of different materials, and a typical configuration manner is as follows:

A first configured circulating mill is the fourth circulating mill, and a circulating mill main engine is the second circulating mill main engine.

A second configured circulating mill is the fourth circulating mill, a circulating mill main engine is the second circulating mill main engine, and an accessory device is provided with the third feeding device.

A third configured circulating mill is the first circulating mill, and a circulating mill main engine is the fourth circulating mill main engine.

A fourth configured circulating mill is the fourth circulating mill, a circulating mill main engine is the second circulating mill main engine, and an accessory device is provided with the second feeding device, the second return device, and the fourth operation medium supply branch.

A fifth configured circulating mill is the fourth circulating mill, a circulating mill main engine is the sixth circulating mill main engine, primary and secondary mills are provided with the third kinetic energy recovery impeller of which the diameter is 0.5 to 4 times that of the impeller, and an accessory device is provided with the fifth operation medium supply branch.

A sixth configured circulating mill is the fourth circulating mill, a circulating mill main engine is the sixth circulating mill main engine, primary and secondary mills are provided with the third kinetic energy recovery impeller of which the diameter is 0.5 to 4 times that of the impeller, and an accessory device is provided with a mill for grinding large hard materials.
(1) A processing method of plant fresh fruit powder and plant fresh fruit powder processed by same. The method is performed according to following steps: S1: washing fresh plants; and S2: adding materials treated in S1 into acirculating mill to make dry powder. Plant fresh fruit powder is the plant fresh fruit powder processed using the method.
(2) A method for spray drying by using a circulating mill and powder processed by same. The method includes adding materials to the second configured circulating mill, and obtaining made dry powder collected and discharged by the bag dust collector. Powder prepared by spray drying is the powder processed using the method.
(3) A processing method of feedstuff and a product processed by same. The method is performed according to following steps:
   S1: preparation of raw material powder: adding feeding raw materials into the fifth configured circulating mill for processing to obtain dry feeding raw material powder; and S2: preparation of feedstuff: making the feeding raw material powder obtained in S1 into feedstuff. Feedstuff is the feedstuff processed using the method.
(4) A method for improving nutrient output of cultivated land and agricultural powder produced therefrom. The method is performed according to following steps: S1: seed selection: selecting suitable crop varieties based on unit yield, crop growth period, and plant nutrient content; S2: determination of the harvest time: determining the harvest time by maximizing "the harvest times in a year × nutrient yield per unit area"; the nutrient yield per unit area being the total amount of nutrients in the crop plant obtained from the previous harvest per unit planting area; S3: management measures: timely harvesting and timely sowing; S4: processing: S401: squeezing and dewatering: reducing the water content of harvested crops to less than 70% by squeezing and dewatering; S402: drying and powder-making: making the materials obtained in S401 into powder by using the fifth configured circulating mill; and S5: utilization: using the powder processed in S4 as raw food materials or feedstuff. Agricultural powder is the powder produced using the method.
(5) A pharmaceutical with volatile components as functional ingredients and a method for preparation and development thereof. The method is performed according to following steps: S1: large-scale preparation of volatile components: adding raw materials to the fourth configured circulating mill, and condensing, by the operating medium supply branch, gasified volatile components in the materials into liquid for discharge, so as to obtain liquid materials rich in volatile components; S2: separating and purifying the liquid materials rich in volatile components made in S1, to obtain materials with medicinal value; and S3: making the materials with medicinal value made in S2 into drugs, or studying the materials with medicinal value made in S2, and developing new drugs. A pharmaceutical with volatile components as functional ingredients is the pharmaceutical made or developed using the method.
(6) A method of simultaneously preparing volatile components in powder and powder feedstock and a product processed by same. The preparation method includes adding raw materials to the fourth configured circulating mill, collecting processed powder by a bag dust collector, changing the volatile components in the materials into a gaseous state during processing, and condensing, by the operation medium supply branch, the gaseous volatile components into liquid materials. The product is the powder or liquid volatile components processed using the method.
(7) A method for extracting volatile components from materials and a product processed by same. The method is performed according to following steps: adding raw materials to the fourth configured circulating mill, and condensing, by the operation medium supply branch, gaseous materials formed by gasification of the volatile components into liquid materials. A volatile component is the material made using the method.
(8) A preparation method of a plant dew beverage and a product processed by same. The method is performed according to following steps: S1: preparation of plant dew: removing impurities from fresh plants, washing them and adding them to the fourth configured circulating mill, and condensing, by the operation medium supply branch, gaseous water and gaseous volatile components formed by gasification of water and volatile components in the materials into liquid to obtain plant dew; and S2: beverage production: processing the plant dew obtained in step S1 into a plant dew beverage; or separating unneeded components from the plant dew obtained in step S1 to make a plant dew beverage. A plant dew beverage is the beverage made using the method.
(9) A crude oil distillation method and a product processed by same. The method is performed according to following steps: adding crude oil to the second configured circulating mill, and condensing, by the operation medium supply branch, gasified volatile components in the crude oil into liquid to obtain distillate. The product is the crude oil distillate prepared using the method.
(10) A method for producing sulfur-free konjac powder and a product processed by same. The method is performed according to following steps: S1: pre-processing of commodity fresh konjac: S101: washing and peeling; S102: cutting: cutting the konjac treated in S101 into pieces, wherein the pieces need not be regular, but the konjac with defects of bud eyes, insect holes, different color spots, plant root spots, root holes and wormholes is cut together, and the konjac without defects is cut together; S103: grading: grading the cut konjac pieces while the konjac is cut into pieces, with the defective ones as one grade and the non-defective ones as another grade; S104: squeezing and dewatering: reducing the water content of the konjac pieces graded in S103 to less than 75% by squeezing and dewatering; S2: customization of an operation medium: adjusting the operation medium to include an oxygen component of less than 10%; and S3: drying and powder-making: adding the konjac pieces of two grades processed in S1 to the fourth configured circulating mill to make sulfur-free konjac powder. Sulfur-free konjac powder is the konjac powder produced using the method.
(11) A method for producing starch and a product processed by same. The method is performed according to following steps: S1: pre-processing: removing impurities from raw materials and washing the raw materials; S2: drying and powder-making: adding the materials processed in step S1 to the first configured circulating mill to make powder; S3: starch separation: mixing the powder made in S2 with water for full agitation, and separating the starch after settling to obtain wet starch; and S4: adding the wet starch obtained in S3 to the fourth configured circulating mill for drying to obtain starch. Plant starch is the starch made using the method.
(12) A processing and utilization method of fertilizers and a product processed by same. The method is performed according to following steps: S1: preparation of fertilizer raw materials: making raw materials into powder by using the first configured circulating mill to obtain fertilizer raw material powder; or adding raw materials and other ingredients to the third configured circulating mill to make them into powder to obtain fertilizer raw material powder; and S2: utilization: using the fertilizer raw materials processed in step S1 as fertilizers; or processing the fertilizer raw material powder processed in step S2 into fertilizers. A fertilizer is the fertilizer made using the method.
(13) A preparation method for barley seedling powder and a product processed by same. The method is performed according to following steps: S1: pre-processing: removing impurities from harvested fresh barley seedlings and washing them; and S2: drying and powder-making: adding the barley seedlings processed in step S1 to the fourth configured circulating mill to make them into powder. Barley seedling powder is the barley seedling powder made using the method.
(14) A processing method for hemp seed protein powder and a product processed by same. The method is performed according to following steps: S1: pre-processing: shelling hemp seed for oil manufacture; and S2: preparation of protein powder: making the materials processed in S1 into powder by using the fourth configured circulating mill. Hemp seed protein powder is the hemp seed protein powder processed using the method.
(15) A processing and utilization method of hemp stem powder and a product. The method is performed according to following steps: S1: pre-processing: cutting hemp stem; or pre-crushing hemp stem into a length of 200mm, and peeling the hemp stem; or peeling hemp stem and then pre-crushing the hemp stem into a length of 200mm; S2: preparation of hemp stem powder: making the materials treated in S1 into powder by using the third configured circulating mill to obtain hemp stem powder; S3: utilization of hemp stem powder: pressing the hemp stem powder processed in S2 into profiles; or using the hemp stem powder processed in S2 as toothpaste fillers; or adding excipients to the hemp stem powder processed in S2 and pressing them to make profiles. Hemp stem powder is processed using the method. A profile is processed using the method. A toothpaste filler is the toothpaste filler processed using the method.
(16) A method for primary processing of hemp flower and leaf in a production area and a product processed by same. The method includes drying and pulverizing fresh hemp flower and leaf by using the fourth configured circulating mill to obtain hemp flower and leaf powder. Hemp flower and leaf powder is the hemp flower and leaf powder made using the method.
(17) A preparation method for dry granulation raw material powder and a product processed by same. The method includes adding raw materials to the fourth configured circulating mill to simultaneously complete grinding, mixing, and drying to obtain raw material powder required by dry granulation. Dry granulation raw material powder is the product processed using the method.
(18) A processing method of fish powder and a product processed by same. The method includes adding fresh fish to the fourth configured circulating mill to make powder. Fish powder is the fish powder processed using the method.
(19) A processing method of feeding bone powder and a product processed by same. The method includes adding fresh bone to the fourth configured circulating mill to make powder. Feeding bone powder is the product processed using the method.
(20) A preparation method of extract and a product processed by same. The method includes following steps: S1: preparation of raw material powder: making fresh raw materials into powder by using the fourth configured circulating mill; S2: preparing an extracting solution, S201: mixing the powder obtained in S1 with a solvent to dissolve extract, to obtain mixture slurry of an extracting solution and slag; S202: separation of the slag and the extracting solution: separating the mixture slurry made in S201 to obtain the extracting solution and the slag; S203: extraction of residual extract from slag: mixing the slag obtained in S202 with a solvent to dissolve residual extract in the slag, to obtain mixture slurry of an extracting solution and slag; separating the slag and the extracting solution by using the method in S202; repeating step S203, till the residual extract in the slag is no longer economically valuable to extract; S204: purification of the extracting solution: removing impurities from the extracting solution and purifying the extracting solution; S3: drying of the extracting solution: drying the extracting solution made in S2 by using the second configured circulating mill to obtain extract; and S4: drying of the slag: making the slag made in S2 into powder by using the fourth configured circulating mill. Extract is the extract made using the method.
(21) A processing method of forage grass and a product processed by same. The method includes making fresh forage grass or forage grass naturally dried for 1 to 5 days into powder by using the fifth configured circulating mill. Forage grass powder is the forage grass powder processed using the method.
(22) A preparation method of mineral powder and a product processed by same. The method is performed according to following steps: adding raw mineral materials to the sixth configured circulating mill through a feeding port of a mineral mill, pre-crushing, by the mill, the materials into coarse powder, driving, by an air flow in an outer circulation pipe, the coarse powder into the circulating mill main engine to further crush it into fine powder, and collecting fine powder with a required particle size separated out and entering the bag dust collector with the air flow to obtain mineral powder. Mineral powder is the mineral powder prepared using the method.
(23) A preparation method of perfume using plant aroma as functional components and a product processed by same. The method is performed according to following steps: S1: preparation of cell fluid: adding fresh plants to the fourth configured circulating mill for processing, and condensing, by the operation medium supply branch, gaseous water and gaseous volatile components formed by gasification of water and volatile components in the materials to obtain cell fluid; and S2: preparation of perfume: making the cell fluid obtained in S2 into perfume. Perfume is the perfume made using the method.
(24) A preparation method of fresh corn flour and a product processed by same. The method includes: S1: harvesting fresh corn and choosing fresh and tender corn to harvest; S2: shelling and threshing: shelling and threshing the fresh tender corn harvested in step S1 to obtain fresh corn kernels; and S3: preparation of fresh corn flour: adding the fresh corn kernels prepared in step S2 to the fourth configured circulating mill to make fresh corn flour. Fresh corn flour is the fresh corn flour made using the method.
(25) A preparation method of fresh bean flour and a product processed by same. The method includes: S1: harvesting fresh beans and choosing fresh beans near the end of a grain-filling period to harvest; S2: shelling: shelling the fresh beans harvested in step S1 to obtain fresh bean kernels; and S3: preparation of fresh bean flour: adding the fresh bean kernels prepared in step S2 to the fourth configured circulating mill to make fresh bean flour. Fresh bean flour is the fresh bean flour made using the method.
(26) A preparation method of fresh wheat flour and a product processed by same. The method includes: S1: harvesting fresh wheatears and choosing fresh wheatears near the end of a grain-filling period to harvest; S2: shelling: shelling the wheatears harvested in step S1 to obtain fresh wheat grains; and S3: preparation of fresh wheat flour: adding the fresh wheat grains prepared in step S2 to the fourth configured circulating mill to make fresh wheat flour. Fresh wheat flour is the fresh wheat flour made using the method.
(27) A preparation method of fresh rice flour and a product processed by same. The method includes: S1: harvesting rice and choosing rice near the end of a grain-filling period to harvest; S2: preparation of rice milk: removing rice milk from the rice harvested in step S1; and S3: drying of the rice milk: adding the rice milk prepared in step S2 to the fourth configured circulating mill to make fresh rice flour. Fresh rice flour is the fresh rice flour made using the method.
(28) A preparation method of potato powder and a product processed by same. The method includes: controlling the oxygen content of an operation medium to less than 8%, washing, peeling or unpeeling potatoes, and adding the potatoes to the fourth configured circulating mill to make dry powder. Potato powder is the potato powder made using the method.
(29) A preparation method of pumpkin powder and a product processed by same. The method includes: washing and peeling pumpkin, removing pulp, and adding the pumpkin to the fourth configured circulating mill to make dry powder. Pumpkin powder is the pumpkin powder made using the method.
(30) A preparation method of tomato powder. The method includes: washing fresh tomatoes, and adding the tomatoes to the fourth configured circulating mill to make dry powder. Tomato powder is the tomato powder made using the method.
   The same method can also be used to prepare green onion powder, ginger powder, cucumber powder, watermelon powder, pepper powder, garlic bolt powder, cabbage powder, bitter cabbage powder, carrot powder, tea powder, edible rose powder, coffee powder, edible powder, and the like.
(31) A preparation method of rose cell fluid and a product processed by same. The method includes: adding rose to the fourth configured circulating mill, and condensing, by the operation medium supply branch, vaporized moisture and rose scent into liquid. Rose cell fluid is the rose cell fluid made using the method.
   The same method can also be used to prepare cell fluid of fresh agricultural products such as garlic, apple, cantaloupe, and Chinese herbal medicines.
(32) A preparation method of fresh maca powder and maca glucosinolates and a product processed by same. The method is performed according to following steps: S1: washing fresh maca and adding the maca to the fourth configured circulating mill; S2: collecting fresh maca powder by the bag dust collector, and collecting maca cell fluid by the operation medium supply branch; and S3: purifying the maca cell fluid obtained in S2 to obtain maca glucosinolates. Fresh maca powder is made using the method. A maca glucosinolate is the maca glucosinolate made using the method.
(33) A preparation method of instant coffee and instant coffee processed by same. The method includes: S1: preparation of coffee powder: adding fresh or dried coffee beans to the fourth configured circulating mill to make dry powder; S2: preparation of coffee liquid: adding the coffee powder obtained in S1 to water, to dissolve soluble components in the coffee powder into the water to obtain mixture slurry of coffee liquid and coffee grounds, and filtering the mixture slurry to obtain the coffee liquid; S3: drying and powder-making of the coffee liquid: adding the coffee liquid obtained in S2 to the second configured circulating mill to make dry powder to obtain instant coffee. Instant coffee is the instant coffee made using the method.
(34) A preparation method of milk powder and a product processed by same. The method includes: adding emulsion to the second configured circulating mill to make milk powder. Milk powder is the milk powder made using the method.
(35) A preparation method of soybean milk powder and a product processed by same. The method includes: adding soybean milk to the second configured circulating mill to make soybean milk powder. Soybean Milk powder is the milk powder made using the method.
(36) A preparation method of Chinese herbal medicine powder and Chinese herbal medicine cell fluid and a product processed by same. The method includes: washing Chinese herbal medicines and adding them to the fourth configured circulating mill, discharging dry Chinese herbal medicine powder from a main discharge port, and collecting Chinese herbal medicine cell fluid by the operation medium supply branch. Chinese herbal medicine powder is the Chinese herbal medicine powder made using the method. Chinese herbal medicine cell fluid is the Chinese herbal medicine cell fluid prepared using the method.
(37) A preparation method of ginseng powder and ginseng cell fluid and a product processed by same. The method includes: washing ginseng and adding it to the fourth configured circulating mill, discharging ginseng powder from a main discharge port, and collecting ginseng cell fluid by the operation medium supply branch. Ginseng powder is made using the method. Ginseng cell fluid is the ginseng cell fluid prepared using the method.
   The same method can also be used to prepare the following Chinese herbal medicine powder and cell fluid thereof: radix linderae, atractylodes, radix paeoniae alba, fritillaria, hyacinth bletilla, American ginseng, red ginseng, Chinese yam, chrysanthemum morifolium ramat, rhizoma corydalis, radix scrophulariae, radix ophiopogonis, radix curcumae, notoginseng, pine needles, pear, notoginseng flower, notoginseng leaf, gastrodia elata, erigeron breviscapus, caulis dendrobii, radix angelicae sinensis, magnolia officinalis, radix scutellariae, amomum villosum, polygonum multiflorum, resina draconis, radix aconiti brachypodi, common alstonia leaf, kusnezoff monkshood root, pinellia, radix geutianae, eucommia, radix saposhnikoviae, poria cocos, honeysuckle, rhizoma polygonati, cordyceps sinensis, radix bupleuri, radix codonopsis, pepper, radix isatidis, aloe vera, amomum, rhizoma paridis, rhizoma ligustici wallichii, cordate houttuynia, loquat leaf, croton, gallnut, cornus, radix dipsaci, rhodiola, sea buckthorn powder, desertliving cistanche, astragalus, licorice, Chinese wolfberry, spikenard, valerian, red paeony root, notopterygium, selfheal, radix angelicae pubescentis, lily, radix polygonati officinalis, gynostemma, Chinese bulbul, cowherb seed, fruit of Chinese magnoliavine, dodder, hawthorn, artemisinin, cortex periplocae, moringa leaf, rhizoma zedoariae, gardenia, folium artemisiae argyi, cinnamon, ageratum, fructus anisi stellati, ganoderma lucidum, ganoderma lucidum spore, wild fungus, mushrooms, stevia, rhizoma acori tatarinowii, radix puerariae, radix pseudostellariae, phytolacca acinosa, polygonum cuspidatum, rhubarb, paniculate swallowwort root, motherwort, sophora, chrysanthemum, gordon euryale seed, tribulus terrestris, rhizoma bistortae, rhizoma drynariae, herba artemisiae scopariae, fructus arctii, forsythia, herba schizonepetae, uncaria, daphne genkwa, mint, coix seed, fructus xanthii, rhizoma arisaematis, radix fici hirtae, sargentodoxa cuneata, lysimachia christinae hance, raspberry, dogbane leaf, radix ranunculi ternati, semen cassiae, platycodon grandiflorum, papaya, radix sanguisorbae, fructus gleditsiae sinensis, antipyretic dichroa, cirsium japonicum, radix aconiti carmichaeli, radix peucedani, acanthopanax, rhizoma anemarrhenae, lycium ruthenicum, rhizoma alismatis, saffron, cardamom, matsutake, osmanthus fragrans, saussurea involucrata, folium mori, eurycoma longifolia, and the like.
(38) A preparation method of gecko powder and a product processed by same. The method includes: removing impurities from fresh geckos, washing them, and adding them to the fourth configured circulating mill to make dry powder. Gecko powder is processed using the method. The same method can also be used to prepare following animal powder: cuttlefish bone, leech, bezoar, deer antler, bear bile, ground beeltle, cantharidopsis powder, cicada slough, ant, centipede, pearl, black chicken, pig blood, eel, cubilose, crab shell, and the like.
(39) A preparation method of medicinal talc powder. The method includes: adding talc powder raw material to the fourth configured circulating mill to make dry powder. Medicinal talc powder is the talc powder processed using the method.
   The same method can also be used to prepare medicinal mirabilite powder, medicinal gypsum powder, and the like.
(40) A preparation method of seaweed powder and a product processed by same. The method includes: draining fresh seaweeds and adding them to the fourth configured circulating mill to make dry powder. Seaweed powder is the seaweed powder processed using the method.
(41) A preparation method of fragmented spirulina powder and a product processed by same. The method includes: adding fresh spirulina to the fourth configured circulating mill to make fragmented spirulina powder. Fragmented spirulina powder is the fragmented spirulina powder processed using the method.
(42) A preparation method of putty for construction and a product processed by same. The method includes: adding raw putty materials for construction to the sixth configured circulating mill to make powder. Putty for construction is the putty for construction processed using the method.
(43) A grinding method for cement clinker and a product processed by same. The method includes: operating the sixth configured circulating mill to add cement clinker to equipment through a feeding port of the mill, pre-crushing, by the mill, the materials into coarse powder, and driving, by an air flow in an outer circulation pipe, the coarse powder into the circulating mill main engine to further crush it into fine powder which is separated by the bag dust collector to obtain cement powder. Cement is the cement processed using the method.
   The same method can also be used to prepare titanium dioxide, calcium carbonate, lithopone, kaolin powder, coal powder, stone powder, ore powder, gypsum powder, feldspar powder, graphite powder, silica powder, and the like.
(44) A grinding method of iron powder and a product processed by same. The method includes: pre-fabricating iron powder raw materials into small pieces below 5mm and adding them to the circulating mill to make fine powder. Iron powder is the iron powder processed using the method.
   The same method can also be used to process tungsten powder, copper powder, cobalt powder, nickel powder, titanium powder, tantalum powder, aluminum powder, tin powder, lead powder, and other metal powder.
(45) A grinding method of pesticide powder and a product processed by same. The method includes: adding pesticide raw materials to the fourth configured circulating mill to make fine powder. Pesticide powder is the pesticide powder processed using the method.
(46) A method of sea water desalinization and a product processed by same. The method includes: adding sea water to the second configured circulating mill for spray drying, and condensing, by the operation medium supply branch, vaporized moisture into liquid water to obtain fresh water. Fresh water is the fresh water processed using the method.
(48) A method of drying sludge. The method includes adding sludge into the fifth configured circulating mill to make dry powder. Sludge is the sludge processed using the method.
   The method can also be used to process sewage sludge, septic tank sludge, farm manure, kitchen waste, tailings discharged from water treatment equipment, vegetable waste, and other high-humidity and high-viscosity materials.
(49) A method of processing edible and medicinal powder and retrieving cell fluid and a product processed by same. The method includes: washing edible and medicinal raw materials and adding them to the fourth configured circulating mill to make powder, obtaining the powder discharged from a first discharge port of the second return device, and condensing, by the operation medium supply branch, gaseous water and gaseous volatile components generated during processing into liquid to obtain cell fluid. Edible and medicinal powder is processed using the method. Cell fluid is the cell fluid prepared using the method.
(50) A preparation method of banana powder and banana powder. The method includes controlling the oxygen content in the operation medium to be less than 5% by mass, and making edible parts of bananas into banana powder by using the fourth configured circulating mill. Banana powder is the banana powder processed using the method.
(51) A preparation method of green banana powder and green banana powder. The method includes: controlling the oxygen content in the operation medium to be less than 5% by mass, and making peeled or unpeeled green bananas into green banana powder by using the fourth configured circulating mill. Green Banana powder is the banana powder processed using the method.
(52) A fragmentation method for washed pine pollen and washed fragmented pine pollen. The method includes centrifugally dehydrating washed pine pollen with water content of 65% to 75% into fragmented powder by using the fourth configured circulating mill. Washed fragmented pine pollen is the washed fragmented pine pollen processed using the method.
(53) A drying method for juice prepared by pressing and a product processed by same. The method is performed according to following steps: S1: equipment configuration: selecting the second configured circulating mill, and selecting nitrogen with oxygen content less than 6% as the operation medium; and S2: adding the juice prepared by pressing to the equipment configured in S1 to make powder, and obtaining the powder discharged from a maim discharge port. Powder processed from juice prepared by pressing is the powder processed using the method.
(54) A preparation method of barley green and a product processed by same. The method is performed according to following steps: S1: equipment configuration: selecting the second configured circulating mill, and controlling the oxygen content of the operation medium to be less than 5%; S2: preparing barley grass juice: S201: treatment of raw materials: rinsing tender barley grass; S202: juicing: juicing the barley grass prepared in S201 to obtain barley grass juice; S203: filtering: filtering solid substances in the barley grass juice prepared in S202 to obtain fine barley grass juice; and S3: spray drying: adding the fine barley grass juice prepared in S2 to the equipment configured in S1 for spray drying, and obtaining barley green discharged from a main discharge port. Barley green is the barley green processed using the method.
(55) A preparation method of soluble notoginseng powder and soluble notoginseng powder. The method includes making fresh notoginseng juice prepared by pressing into soluble notoginseng powder by using the second configured circulating mill. Soluble notoginseng powder is the soluble notoginseng powder processed using the method.
   The same method can also be used to prepare soluble maca powder, soluble apple powder, soluble emblic leafflower fruit powder, soluble matsutake powder, and the like.
(56) A fragmentation method of pine pollen and a product processed by same. The method is performed according to following steps: S1: configuring equipment: S101: employing the fourth circulating mill and the second circulating mill main engine, and configuring the accessory device with the fourth operation medium supply branch, S102: configuring the accessory device with the second feeding device and the second return device, S103: configuring the third or fourth optical device, and selecting an ultraviolet sterilization light source as the light source of the optical device, S104: setting the switching valve of the fourth operation medium supply branch to make the compressor exhaust pipe connected to the second branch and disconnected from the first branch, and opening the valve on the pipeline between the air duct and the outlet of the heater, S105: selecting nitrogen with oxygen content less than 10% as the operation medium; and S2: fragmentation of pine pollen: adding pine pollen to the equipment configured in S1 to make fragmented pine pollen. Fragmented pine pollen is the fragmented pine pollen processed using the method.
(57) A preparation method of ultrafine powder of Chinese herbal medicines. The method includes: making dry Chinese herbal medicines into ultrafine powder by using the equipment configured in step S1 in the fragmentation method of pine pollen and the product processed by same in (56). Ultrafine powder of Chinese herbal medicines is the ultrafine powder of Chinese herbal medicines processed using the method.

In the circulating mill of the present invention, a kinetic energy recovery device is disposed in the circulating mill main engine to implement recovery and utilization of high-speed fluidized kinetic energy, an energy efficiency ratio of the operation medium supply branch is increased to more than 6 by using a natural cold source to assist in cooling high-temperature tail gas, and a feeding device is employed to increase the quantity of return and improve the fluidity of materials, which improves the economy and reliability of the circulating mill described in the invention patent 2018111102064. The application method of the circulating mill according to the present invention solves a common pain point problem of poor quality or high cost of traditional drying and grinding methods, and provides an economical solution for processing of forage agricultural products, processing of Chinese herbal medicines, drying of liquid materials, grinding of minerals, preparation of metal powder, preparation of pharmaceuticals with volatile components as functional ingredients, sludge drying, and the like. Thee product processed by the circulating mill in the present invention eliminates the link that causes the quality problem during processing of the traditional method, the product quality is good, and the processing cost is low.

### Brief Description of Drawings

Fig. 1 is a first circulating mill according to Embodiment 1;
Fig. 2 is a second circulating mill according to Embodiment 2 and a third circulating mill according to Embodiment 3;
Fig. 3 is a kinetic energy recovery blade of a second circulating mill according to Embodiment 4;
Fig. 4 is a first kinetic energy recovery impeller according to Embodiment 5;
Fig. 5 is a second kinetic energy recovery impeller according to Embodiment 6;
Fig. 6 is a third kinetic energy recovery impeller according to Embodiment 7;
Fig. 7 is a fourth kinetic energy recovery impeller according to Embodiment 8;
Fig. 8 is a first circulating mill main engine according to Embodiment 9;
Fig. 9 is a second circulating mill main engine according to Embodiment 10;
Fig. 10 is a fourth circulating mill main engine according to Embodiment 12;
Fig. 11 is a seventh circulating mill main engine according to Embodiment 15;
Fig. 12 is first and second operation medium supply branches according to Embodiment 17;
Fig. 13 is a third operation medium supply branch according to Embodiment 18;
Fig. 14 is a fourth operation medium supply branch according to Embodiment 19;
Fig. 15 is a return device of a circulating mill according to Embodiment 20;
Fig. 16 is a first circulating mill according to Embodiment 21;
Fig. 17 is a second circulating mill according to Embodiment 22;
Fig. 18 is a third circulating mill according to Embodiment 23;
Fig. 19 is a fourth circulating mill according to Embodiment 24;
Fig. 20 is a screw feeder for a circulating mill according to Embodiment 25; and
Fig. 21 is an optical device and an acoustic device according to Embodiment 26.

### Detailed Description of Preferred Embodiments

The present invention is further described below with reference to drawings and embodiments, but the embodiments do not constitute limitations on the present invention. The embodiments provided in the present invention are obviously insufficient to demonstrate the full application of the present invention. Those skilled in the art should understand that without deviating from the technical features of the present invention, various combinations can be made to achieve specific purposes and various modifications can be made to meet different requirements. Therefore, the present invention is not limited to specific embodiments disclosed below, but includes all possible embodiments falling within the scope of the claims and solutions, use and application methods of the circulating mill equipment and the products processed by the circulating mill which are readily available through the present invention.

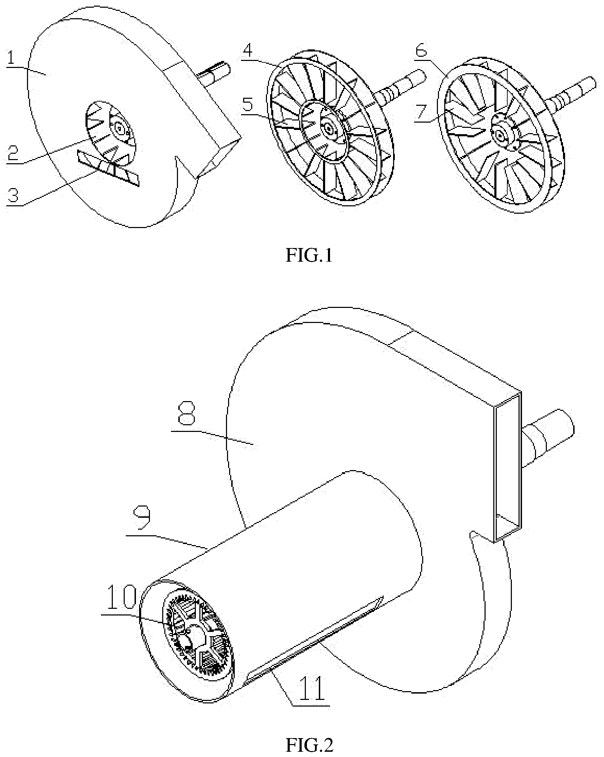

Embodiment 1: A first circulating mill is improved based on a centrifugal fan, which, as shown on the left of Fig. 1, is composed of a housing 1, a kinetic energy recovery device, and an impeller 2. The housing is provided with an inner circulation pipe interface 3 near an air inlet. An air flow from the inner circulation pipe interface 3 drives or assists in driving the impeller to rotate by impacting the kinetic energy recovery device. As shown on the right of Fig. 1, the kinetic energy recovery device is implemented in such a way that an air inlet on a front disc 6 expands to expose a blade 7, and the air flow from the inner circulation pipe interface assists in driving the impeller to rotate by impacting the exposed blade 7. Alternatively, as shown in Fig. 1, an air inlet on a front disc 4 expands to expose a blade 5, and the air flow from the inner circulation pipe interface assists in driving the impeller to rotate by impacting the exposed blade 5.

Embodiment 2: A second circulating mill is improved based on a centrifugal fan, which, referring to Fig. 2, is composed of a housing 8, an impeller, a kinetic energy recovery device 10, and a feed pipe 9. The feed pipe 9 is provided with an inner circulation pipe interface 11, one end of the feed pipe is connected to an air inlet on the housing 8, the kinetic energy recovery device 10 is disposed in the feed pipe 9, an air flow from the inner circulation pipe interface 11 drives or assists in driving the impeller to rotate by impacting the kinetic energy recovery device 10, the other end of the feed pipe is an inlet of the second circulating mill, and an air outlet on the housing is an outlet of the second circulating mill.

Embodiment 3: A third circulating mill is improved based on a centrifugal fan, which, referring to Fig. 2, is composed of a housing 8, an impeller, a kinetic energy recovery device 10, and a feed pipe 9. The feed pipe 9 is provided with an inner circulation pipe interface 11, one end of the feed pipe is connected to an air inlet on the housing 8, the kinetic energy recovery device 10 is disposed in the feed pipe 9, the impeller is driven to rotate by the kinetic energy recovery device 10 impacted by the air flow from the inner circulation interface 11, the other end of the feed pipe is an inlet of the second circulating mill, and an air outlet on the housing is an outlet of the second circulating mill.

The second circulating mill and the third circulating mill are basically the same in structure and are different in that the air flow from the inner circulation pipe interface assists only in driving the impeller of the second circulating mill to rotate and the impeller of the third circulating mill can be driven to rotate completely by the kinetic energy recovery device impacted by the air flow from the inner circulation interface.

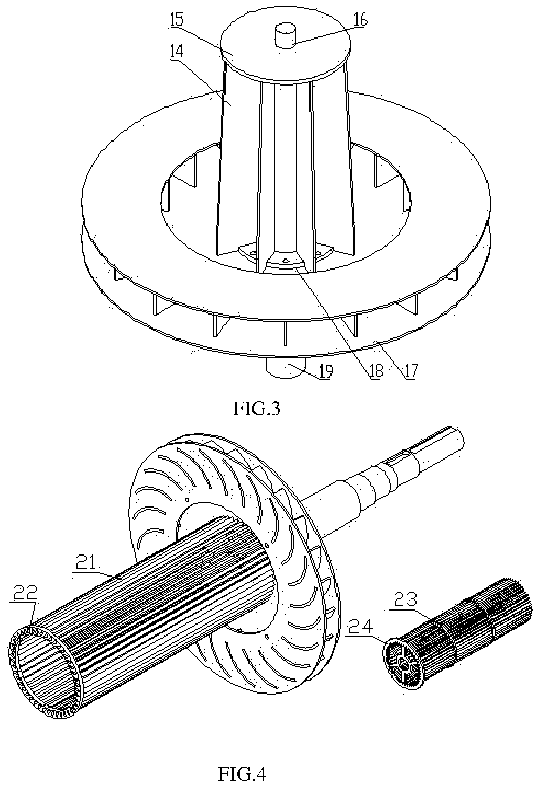

Embodiment 4: In a kinetic energy recovery blade of the second circulating mill, referring to Fig. 3, one end of the kinetic energy recovery blade 14 is fixed to a rear disc 17 and/or a shaft sleeve 18 and/or an impeller shaft 19, and the other end is fixed to an impeller shaft 16 elongating along a feed pipe, or the other end is fixed to a connecting plate 15. The connecting plate 15 is fixed to the impeller shaft 16 elongating along the feed pipe. The kinetic energy recovery blade of the second circulating mill may also be implemented in a simpler way that the kinetic energy recovery blade is fixed to an impeller shaft or fixed to an impeller shaft elongating along a feed pipe.

Embodiment 5: A first kinetic energy recovery impeller, referring to Fig. 4, is composed of a kinetic energy recovery blade 21 and an upper ring 22. One end of the kinetic energy recovery blade 21 is fixed to a shaft sleeve and/or a rear disc, the other end is fixed to the upper ring 22, and a plurality of kinetic energy recovery blades are distributed circumferentially along the upper ring; or the upper ring 24 is fixed to an impeller shaft elongating along a feed pipe; or the first kinetic energy recovery impeller further includes a reinforcing ring 23. The reinforcing ring 23 is fixed to a middle part of the kinetic energy recovery blade or the reinforcing ring 23 is fixed to a middle part of the kinetic energy recovery blade and an impeller shaft elongating along a feed pipe.

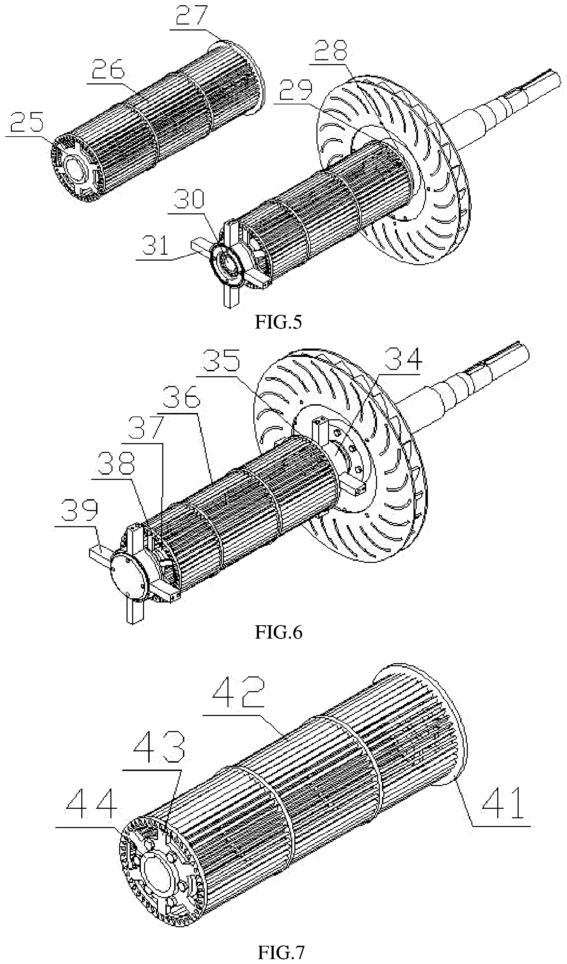

Embodiment 6: A second kinetic energy recovery impeller, referring to Fig. 5, is composed of a kinetic energy recovery impeller shaft sleeve 25, a kinetic energy recovery blade 26, and an upper ring 27. One end of the kinetic energy recovery blade 26 is fixed to the kinetic energy recovery impeller shaft sleeve 25, the other end is fixed to the upper ring 27, a cross section of the kinetic energy recovery blade 26 is semi-circular or wing-shaped or a windward side of the kinetic energy recovery blade 26 is flat, a leeward side is cambered, and a kinetic energy recovery impeller shaft sleeve 29 is fixed to a shaft sleeve 28 or an impeller shaft; the upper ring is fixed to an impeller shaft 30 elongating along a feed pipe. The elongated impeller shaft is provided with bearings fixed to a bracket 31, and the bracket 31 is fixed to the feed pipe and a base.

Embodiment 7: A third kinetic energy recovery impeller, referring to Fig. 6, is composed of a kinetic energy recovery impeller shaft sleeve 35, a kinetic energy recovery impeller shaft 37, a kinetic energy recovery blade 36, an upper ring 38, and a transmission 34. One end of the kinetic energy recovery blade 36 is fixed to the kinetic energy recovery impeller shaft sleeve 35, the other end is fixed to the upper ring 38, the transmission 34 is fixed to a feed pipe and a base, an input shaft of the transmission 34 is the kinetic energy recovery impeller shaft 37, the kinetic energy recovery impeller shaft sleeve 35 and the upper ring 38 are fixed to the input shaft of the transmission, and an output shaft of the transmission is an impeller shaft or connected to an impeller shaft, one end of the input shaft of the transmission extending out of the upper ring is provided with bearings fixed to a bracket 39, and the bracket 39 is fixed to the feed pipe and the base. In order to efficiently recover the kinetic energy of fluidized materials, the diameter of the kinetic energy recovery impeller in this embodiment is 1.5 times that of the impeller.

Embodiment 8: A fourth kinetic energy recovery impeller, referring to Fig. 7, is composed of a kinetic energy recovery impeller shaft sleeve 44, a lower ring 43, a kinetic energy recovery blade 42, and an upper ring 41. One end of the kinetic energy recovery blade 42 is fixed to the lower ring 43, the other end is fixed to the upper ring 41, and the lower ring 43 is fixed to the kinetic energy recovery impeller shaft sleeve 44.

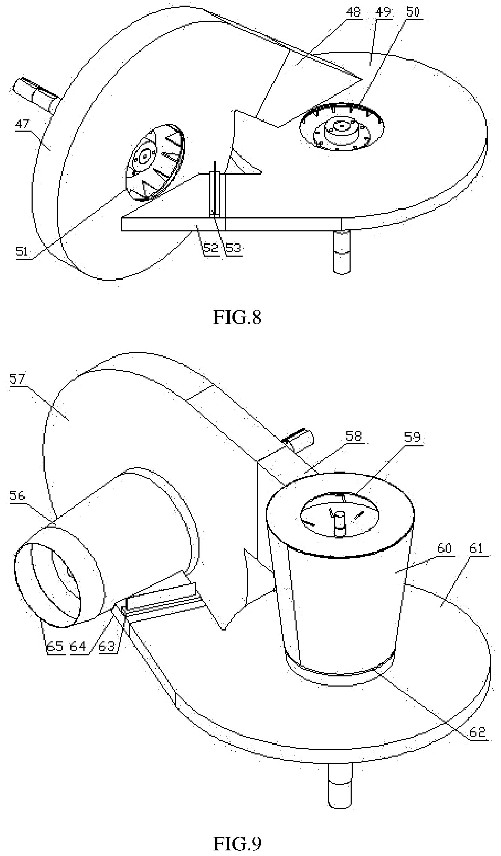

Embodiment 9: A first circulating mill main engine, referring to Fig. 8, is composed of a primary mill 47, a secondary mill 49, and an inner circulation pipe. The primary mill and the secondary mill are the first circulating mill according to Embodiment 1, an outlet of the primary mill is connected to an inner circulation pipe interface of the secondary mill through an inner circulation pipe 48, an outlet of the secondary mill is connected to an inner circulation pipe interface of the primary mill through an inner circulation pipe 52, an inlet 51 of the primary mill is an inlet of the circulating mill main engine, and an inlet 50 of the secondary mill is an outlet of the circulating mill main engine. An axis of the primary mill 47 is perpendicular to that of the secondary mill 49. A cross sectional area of the outlet of the secondary mill is 29% of that of the outlet of the primary mill. The inner circulation pipe 52 between the outlet of the secondary mill and the inner circulation pipe interface of the primary mill is provided with an air volume adjusting device 53.

Embodiment 10: A second circulating mill main engine, referring to Fig. 9, is composed of a primary mill 57, a secondary mill 61, and an inner circulation pipe. The primary mill 57 and the secondary mill 61 are the second circulating mill according to Embodiment 2, an outlet of the primary mill 57 is connected to an inner circulation pipe interface on a feed pipe 60 of the secondary mill 61 through an inner circulation pipe 58, an outlet of the secondary mill 61 is connected to an inner circulation pipe interface on a feed pipe 56 of the primary mill through an inner circulation pipe 64, an inlet of the primary mill is an inlet 65 of the circulating mill main engine, and an inlet of the secondary mill is an outlet 59 of the circulating mill main engine. An axis of the primary mill 57 is perpendicular to that of the secondary mill 61. A cross sectional area of the outlet of the secondary mill is 26% of that of the outlet of the primary mill. The inner circulation pipe 64 between the outlet of the secondary mill and the inner circulation pipe interface of the primary mill is provided with an air volume adjusting device 63. The feed pipe 60 of the secondary mill is also provided with an air volume adjusting device 62. The air volume adjusting device 62 is disposed between the inner circulation pipe interface and one end of the feed pipe.

Embodiment 11: A third circulating mill main engine is based on the second circulating mill main engine according to Embodiment 10 from which the kinetic energy recovery devices of the primary mill and the secondary mill are removed. The third circulating mill main engine in this embodiment is simpler in structure than the second circulating mill main engine in Embodiment 10, which has a certain significance in processing dry materials without considering an energy-saving effect.

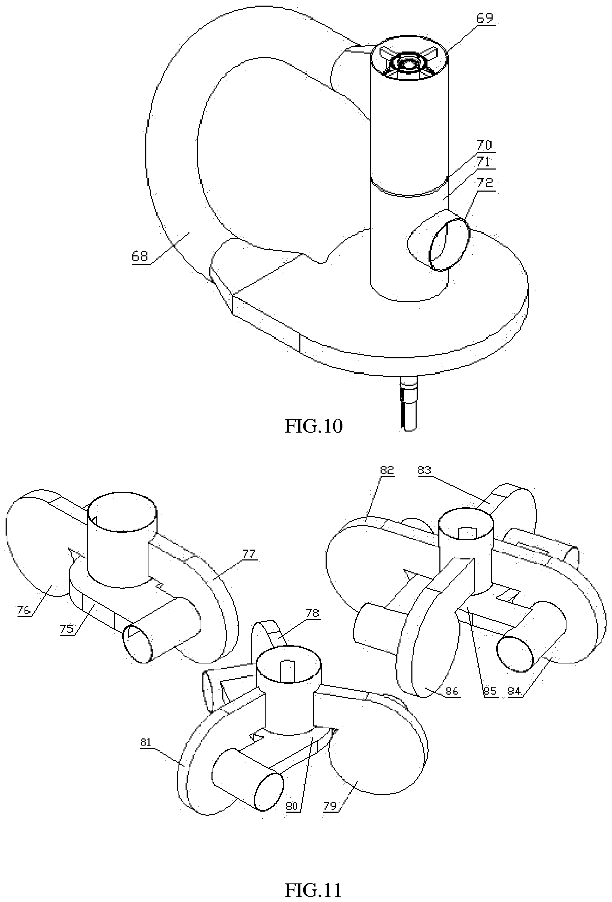

Embodiment 12: A fourth circulating mill main engine, referring to Fig. 10, is improved based on the second circulating mill main engine according to Embodiment 2. An outlet on the housing is connected to an inner circulation pipe interface on the feed pipe through an inner circulation pipe 68, a three-way air inlet 71 is disposed between one end of the feed pipe and the air inlet on the housing, a second opening of the three-way air inlet is an inlet 72 of the fourth circulating mill main engine, and the other end of the feed pipe is an outlet 69 of the circulating mill main engine. An air volume adjusting device 70 is disposed between one end of the feed pipe and the three-way air inlet 71.

The fourth circulating mill main engine in Embodiment 12 is simpler in structure that the first and second circulating mill main engines in Embodiments 9 and 10, but due to the bending of the inner circulation pipe, the wall hanging is more serious, and the equipment cost has a certain advantage when materials with low water content are processed.

Embodiment 13: A fifth circulating mill main engine is the fourth circulating mill main engine according to Embodiment 12 from which the kinetic energy recovery device is removed.

Embodiment 14: A sixth circulating mill main engine is composed of a primary mill, a secondary mill, and an inner circulation pipe, the primary mill is the second circulating mill according to Embodiment 2, the secondary mill is the third circulating mill according to Embodiment 3, an outlet of the primary mill is connected to an inner circulation pipe interface of the secondary mill through the inner circulation pipe, an outlet of the secondary mill is connected to an inner circulation pipe interface of the primary mill through the inner circulation pipe, an inlet of the primary mill is an inlet of the sixth circulating mill main engine, and an inlet of the secondary mill is an outlet of the sixth circulating mill main engine.

The sixth circulating mill main engine and the second circulating mill main engine are basically the same in structure, but are different in that the secondary mill of the sixth circulating mill main engine is the third circulating mill according to Embodiment 3, while the secondary mill of the second circulating mill main engine is the second circulating mill according to Embodiment 2. The rotation of the secondary mill of the sixth circulating mill main engine can be completely driven by the air flow from the outlet of the primary mill. In order to achieve this objective, the power recovery impeller of the secondary mill is the third kinetic energy recovery impeller of which the diameter of the power recovery impeller is 0.5 to 4 times that of the impeller according to Embodiment 7. In this embodiment, the circulating mill main engine thus has the highest kinetic energy recovery efficiency, can reduce the energy consumption of the existing mineral mill by more than 30%, and has obvious advantages in large-scale grinding processing such as minerals, cement, sludge, and forage grass.

A circulation channel in the first circulating mill main engine composed of a primary mill, an inner circulation pipe, a secondary mill, and an inner circulation pipe, circulation channels in the second, third, and sixth circulating mill main engines composed of a primary mill, an inner circulation pipe, a secondary mill feed pipe, a secondary mill, an inner circulation pipe, and a primary mill feed pipe, and circulation channels in the fourth and fifth circulating mill main engines composed of a circulating mill, an inner circulation pipe, a feed pipe, and a three-way air inlet are referred to as inner circulation channels, which are main places for the circulating mill to carry out grinding and drying.

In addition to implementing the kinetic energy recovery and utilization of high-speed fluidized materials in the inner circulation channels to reduce the circulating energy consumption of a circulating fluidized bed, the technical solutions of the first, second, and sixth circulating mill main engines also lay the foundation for solving the key problem of processing high-humidity and high-viscosity materials in the circulating fluidized bed, i.e., the wall hanging problem. Practice has proved that an air flow velocity at an outlet of a common centrifugal fan, equivalent to the lowest flow velocity of the fluidized materials in the inner circulation channels, has been able to form an effective impact on the materials adhered in the inner circulation channels to make them fall off, and then continuous impact is sufficient to ensure that most materials with moisture content below 60% do not form wall hangings. A curved circulation channel is a place where wall hanging is most serious. The circulating mill main engine uses a structure form of primary and secondary mills, which creates a condition for straightening the inner circulation pipe.

Relatively, due to the space limitation of the kinetic energy recovery device, the first circulating mill has a worse kinetic energy recovery effect than the second, fourth, and sixth circulating mills.

Embodiment 15: A seventh circulating mill main engine is a circulating mill main engine composed of one primary mill and a plurality of secondary mills. The primary mill is the second circulating mill, and the secondary mills may be the second or third circulating mill. Referring to Fig. 11, in the upper left part, a housing of a primary mill 75 is provided with two outlets respectively connected to inner circulation pipe interfaces on feed pipes of a secondary mill 76 and a secondary mill 77 through inner circulation pipes. A feed pipe of the primary mill is provided with two inner circulation pipe interfaces respectively connected to outlets of the two secondary mills through inner circulation pipes. In the lower middle part, a housing of a primary mill 80 is provided with three outlets respectively connected to inner circulation pipe interfaces on feed pipes of a secondary mill 78, a secondary mill 79, and a secondary mill 81 through inner circulation pipes. A feed pipe of the primary mill 80 is provided with three inner circulation pipe interfaces respectively connected to outlets of the three secondary mills through inner circulation pipes. In the upper right part, a housing of a primary mill 85 is provided with four outlets respectively connected to inner circulation pipe interfaces on feed pipes of a secondary mill 82, a secondary mill 83, a secondary mill 84, and a secondary mill 86 through inner circulation pipes. A feed pipe of the primary mill 85 is provided with four inner circulation pipe interfaces respectively connected to outlets of the four secondary mills through inner circulation pipes.

The seventh circulating mill main engine in this embodiment is a transformation of the second and sixth circulating mill main engines. The second and sixth circulating mill main engines are used in occasions of large mills, and have problems such as too high pressure in the primary mill, a too long flow channel, and large energy consumption, as well as unbalanced impact of fluidized materials from the outlet of the secondary mill on the kinetic energy recovery impeller of the primary mill, while the seventh circulating mill main engine in this embodiment solves the above problems.

Embodiment 16: For a variety of feed pipes of the circulating mill, an important function of the feed pipe of the circulating mill is grading, and feed pipes of different structures have different grading capabilities. The common feed pipe may be in following forms: a straight pipe with one end connected to an air inlet on the housing of the secondary mill and the other end being an outlet of the circulating mill main engine; or a tapered pipe with a small head connected to an air inlet on the housing of the secondary mill and a large head provided with a cover, an opening in the middle of the cover being an outlet of the circulating mill main engine; or a tapered pipe with a small head connected to an air inlet on the housing of the secondary mill and a large head being an outlet of the circulating mill main engine; or a tapered pipe with a large head connected to an air inlet on the housing of the secondary mill and a small head being an outlet of the circulating mill main engine; or a cyclone dust collector, of which an air inlet is an inner circulation pipe interface, an ash discharge port is connected to an air inlet on the housing of the secondary mill, and an exhaust outlet is an outlet of the circulating mill main engine; or an uncapped cyclone dust collector, of which an air inlet is an inner circulation pipe interface, an ash discharge port is connected to an air inlet on the housing of the secondary mill, and an uncapped end is an outlet of the circulating mill.

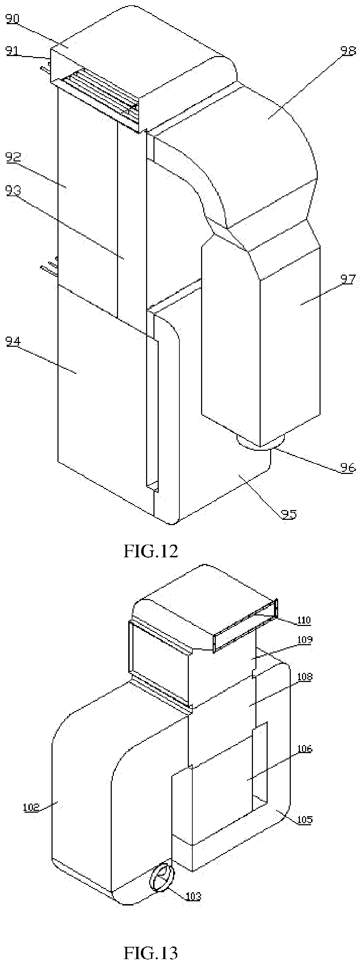

Embodiment 17: First and second operation medium supply branches, referring to Fig. 12, each are composed of a heat exchanger, a condenser 94, and a heater 97. The heat exchanger is composed of a heat exchange branch 93 and a cooling branch 92, heat medium channel air inlets of the heat exchange branch 93 and the cooling branch 92 are gathered together through a heat exchanger air inlet pipe 90, an inlet of the heat exchanger air inlet pipe is the air inlet 91 of the operation medium supply branch, heat medium channel exhaust outlets of the heat exchange branch and the cooling branch are connected to an air inlet of the condenser 94, an exhaust outlet of the condenser is connected to an inlet of a refrigerant channel of the heat exchange branch 93 through a condenser exhaust pipe 95, an exhaust outlet of the refrigerant channel of the heat exchange branch 93 is connected to an air inlet of the heater 97 through a refrigerant channel exhaust pipe 98, and an exhaust outlet of the heater is an exhaust outlet 96 of the operation medium supply branch.

The second operation medium supply branch is formed by disposing heat medium channel air intake volume adjusting devices of the heat exchange branch and the cooling branch in the heat exchanger air inlet pipe of the first operation medium supply branch, which can adjust an air volume ratio between the two heat medium channels of the heat exchange branch and the cooling branch.

This embodiment further improves the operation medium supply branch in the early stage of the project, intended to provide a cheap operation medium in line with process requirements for the circulating mill, to dehumidify tail gas discharged from the circulating mill and then heat it to be recycled as an intake air flow, to provide economic feasibility for the use of special operation mediums such as nitrogen, and also to achieve the collection of water rich in volatile components of the materials in the form of liquid. The humidity in the tail gas discharged from the circulating mill is very high. During cooling, both sensible heat and latent heat are released, and the cold air discharged from the condenser can absorb only the sensible heat. As a result, the cooling load of the condenser of the operation medium supply branch in the early stage is too large and the economy is not good enough. In this embodiment, the heat exchanger is divided into a heat exchange branch and a cooling branch, a heat medium channel air intake volume adjusting device is used to adjust an air intake volume of the heat exchange branch to make the heat released by cooling of the air flow in the heat medium channel match the heat absorbed by the cold air in the refrigerant channel. Then, the evaporator of the heat pump is used to supply cooling for the condenser and the condenser of the heat pump is also used to supply heat for the heater. Under a configuration condition of 20°C natural wind or natural water as the refrigerant of the cooling branch, the energy efficiency ratio of more than 7:1 can be achieved theoretically in this embodiment, which provides a cheap operation medium in line with process requirements for the circulating mill.

Embodiment 18: A third operation medium supply branch, referring to Fig. 13, is composed of a first heat exchanger 109, a second heat exchanger 108, a condenser 106, and a heater 102. A heat medium channel inlet of the first heat exchanger 109 is an air inlet 110 of the operation medium supply branch, an outlet of the heater 102 is an exhaust outlet 103 of the operation medium supply branch, an air flow channel of the operation medium supply branch is formed by the heat medium channel of the first heat exchanger 109, a heat medium channel of the second heat exchanger 108, a heat medium channel of the condenser 106, an air duct 105, a refrigerant channel of the second heat exchanger 108, and a refrigerant channel of the heater 102 connected sequentially, a refrigerant channel of the condenser 106 is an evaporator of a heat pump, and a heat medium channel of the heater 102 is a condenser of the heat pump.

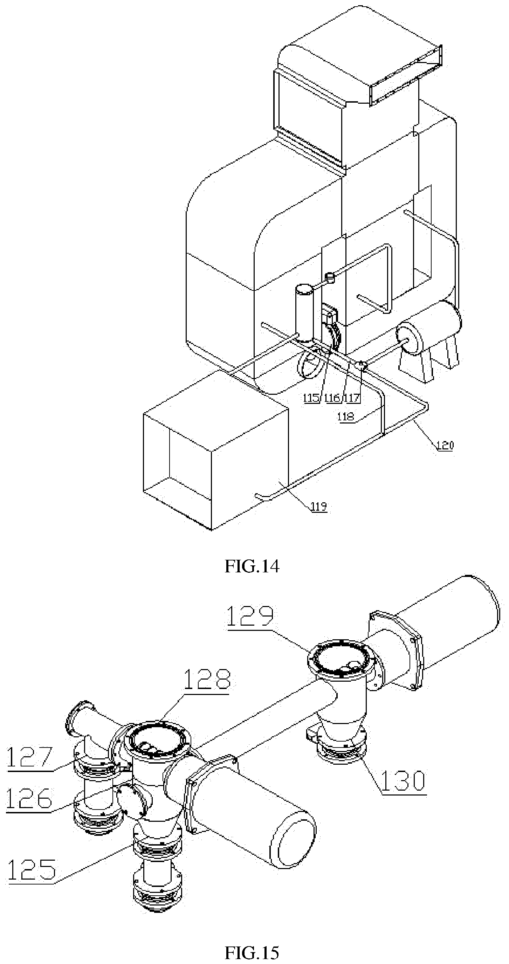

Embodiment 19: A fourth operation medium supply branch, referring to Fig. 14, is improved based on the third operation medium supply branch according to Embodiment 18. A compressor exhaust pipe of the heat pump is provided with a switching valve 117 to divide the exhaust pipe into two branches. A first branch 116 enters the heater and then leads to a radiator 119, a second branch 120 is in communication with a first branch 108 coming out of the heater, and the air duct is provided with a pipeline 115 with valves connected to the outlet of the heater.

When the circulating mill is configured to process dry materials with low moisture content, such as dry notoginseng, since there is no heat consumed by water vaporization, the heat into which the kinetic energy of the impeller is converted may increase the temperature in the machine, which is not conducive to the processing of heat-sensitive materials. This embodiment may significantly adjust the temperature of the operation medium supplied by the operation medium supply branch according to process requirements.

When natural air is used as the operation medium, the circulating mill may also be provided with only a heater or a cooler to heat or cool the operation medium, and an exhaust outlet of the heater or the cooler is connected to the air inlet of the outer circulation pipe.

Embodiment 20: A return device of the circulating mill, referring to Fig. 15, is composed of a 1# conveyor and a 2# conveyor. The 1# conveyor is provided with one feed port 128 and two discharge ports, one discharge port is a main discharge port 127 of the circulating mill, the 2# conveyor is provided with two feed ports and two discharge ports, the feed port of the 1# conveyor is connected to an ash discharge port of the bag dust collector, the other discharge port 126 of the 1# conveyor is connected to one feed port of the 2# conveyor, the other feed port 129 of the 2# conveyor is connected to the cyclone dust collector ash discharge port, one discharge port 130 of the 2# conveyor is provided with a valve, an outlet of the valve is connected to the cyclone dust collector ash discharge interface on the outer circulation pipe, and the other discharge port of the 2# conveyor is an auxiliary discharge port 125 of the circulating mill. The main discharge port and the auxiliary discharge port of the circulating mill may be further provided with an air-closing device formed by a valve, a storage pipe, and a valve connected successively, to prevent a large amount of leakage of the operation medium from the discharge port during discharging.

One of the difficulties that the circulating Mill faces in processing high-humidity and high-viscosity materials is that the materials adhere to machine parts, namely, wall hanging. An effective solution is to reduce the moisture content of the materials. The return device of the circulating mill reduces the moisture content of the material in the machine with a method of preferentially sending powder collected by the bag dust collector back to the circulating mill main engine through the 2# conveyor. In this way, even if it is liquid, wall hanging can be completely eliminated by adjusting the feeding amount and the return amount. On the basis of the impact and peeling effects of high-speed fluidized materials in the inner circulation channel inherent to the circulating mill main engine, the circulating mill theoretically solves the problem of wall hanging of drying and powder-making of the high-humidity and high-viscosity materials. When materials with good fluidity and dispersity are processed and requirements on the fineness or moisture content of the products are not high, the materials collected by the cyclone dust collector can be discharged from the auxiliary discharge port by inverting the return device.

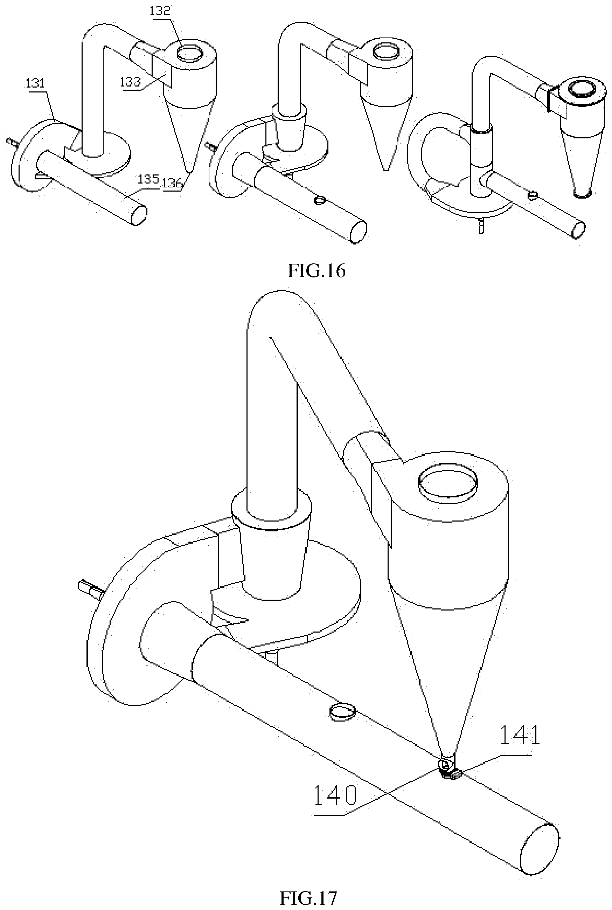

Embodiment 21: A first circulating mill, referring to Fig. 16, is composed of a circulating mill main engine 131 and a first accessory device. The first accessory device is composed of a dust collector 133 and an outer circulation pipe 135. An air inlet of the dust collector 133 is connected to an outlet of the circulating mill main engine, a dust collector exhaust outlet 132 is an exhaust gas outlet, a dust collector ash discharge port 136 is a discharge port, and an outlet of the outer circulation pipe is connected to an inlet of the circulating mill main engine. The circulating mill main engine shown on the left of Fig. 6 is the first circulating mill main engine, the circulating mill main engine shown in the middle is the second or third or sixth circulating mill main engine, and the circulating mill main engine shown on the right is the fourth or fifth circulating mill main engine. The outer circulation pipe in this embodiment may be further provided with a first screw feeder.

In the circulating mill according to this embodiment, due to the opening of the outer circulation channel, the moisture and particle size of a product are completely determined by grading performance of the circulating mill main engine, and thus the circulating mill is suitable for occasions such as sludge and fertilizer processing with low requirements on the moisture content and particle size of the product.

Embodiment 22: A second circulating mill, referring to Fig. 17, is improved based on the equipment in Embodiment 21. The outer circulation pipe is provided with a dust collector ash discharge interface provided with an adjusting valve 141. A dust collector ash discharge pipe is provided with a discharge port 140, and the adjusting valve 141 is connected to a dust collector ash discharge port.

Compared with Embodiment 21, this embodiment can control the moisture content and particle size of a product by adjusting the discharge amount and the discharge time through the adjusting valve.

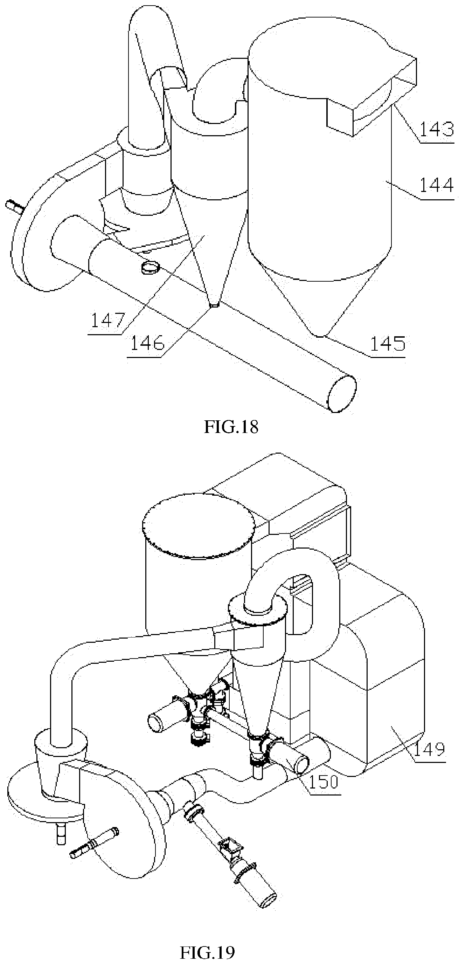

Embodiment 23: A third circulating mill, referring to Fig. 18, is improved based on the equipment in Embodiment 21. The outer circulation pipe is provided with a cyclone dust collector ash discharge interface 146. The dust collector in Embodiment 21 is replaced with a cyclone dust collector 147. A bag dust collector 144 is added. An inlet of the cyclone dust collector 147 is connected to an outlet of the circulating mill main engine. An air outlet of the cyclone dust collector 147 is connected to an inlet of the bag dust collector 144. An ash discharge port of the cyclone dust collector 147 is connected to the cyclone dust collector ash discharge interface 146 on the outer circulation pipe. A bag dust collector exhaust outlet is an exhaust air outlet 143, and a bag dust collector ash discharge port is a discharge port 145.

Due to the use of two-stage separation and the implementation of external circulation, the moisture content of the product processed by the equipment in this embodiment can be as low as 1% and the particle size is less than 800 meshes. In addition, since the powder discharged from the ash discharge pipe of the cyclone dust collector returns to the circulating mill main engine with the air flow, the moisture content of the materials is reduced and the dispersity and fluidity of the material are greatly improved.

Embodiment 24: A fourth circulating mill, referring to Fig. 19, is formed by adding an operation medium supply branch 149 and a return device 150 based on the equipment in Embodiment 23. A bag dust collector exhaust outlet is connected to an air inlet of the operation medium supply branch, and an air inlet of an outer circulation pipe is connected to an exhaust outlet of the operation medium supply branch. In this embodiment, the air purification chamber of the bag dust collector of the circulating mill may be further provided with a second exhaust outlet including a cover, and the outer circulation pipe may be further provided with a second air inlet including a cover, so as to facilitate the use of natural air as the operation medium.

When the equipment according to this embodiment uses a heat pump as a heat source and a cold source of the operation medium supply branch, in theory, the energy consumption of the whole machine in terms of drying and powder-making of materials with moisture content of 60% can be reduced to 0.5 KWH/KG dry powder, and the moisture content of most fresh agricultural products is about 90%. For low-value forage materials such as fresh corn stalk, it is not economically feasible to directly use the circulating mill for processing. However, even low-value agricultural products become economically feasible by reducing moisture to less than 60% by good economic squeezing dehydration and then processing them with the circulating mill. Since the operation medium is recycled, the full closed circuit process in this embodiment adopting a special operation medium has good economy, which creates conditions for the processing of materials that are flammable, explosive, toxic, and need to inhibit chemical changes. In addition, the equipment according to this embodiment is also actually economical to collect or recycle the moisture in the materials in a form of liquid and thus can be used as a distillation device. For plant materials, the water collected by the equipment is actually cell fluid. The cell fluid is of great value because it is rich in volatile components of plants, which can be further processed into spices such as rose essential oil and pharmaceuticals such as volatile oils in notoginseng.

Compared with the above inner circulation channel, in this project, a circulation channel composed of a circulating mill main engine, a cyclone dust collector, and an outer circulation pipe is referred to as an outer circulation channel, a circulation channel composed of a bag dust collector, a return device, an outer circulation pipe, a circulating mill main engine, and a cyclone dust collector is referred to as a return channel, and a channel composed of an operation medium supply branch, an outer circulation pipe, a circulating mill main engine, a cyclone dust collector, and a bag dust collector is referred to as a tail gas circulation channel.

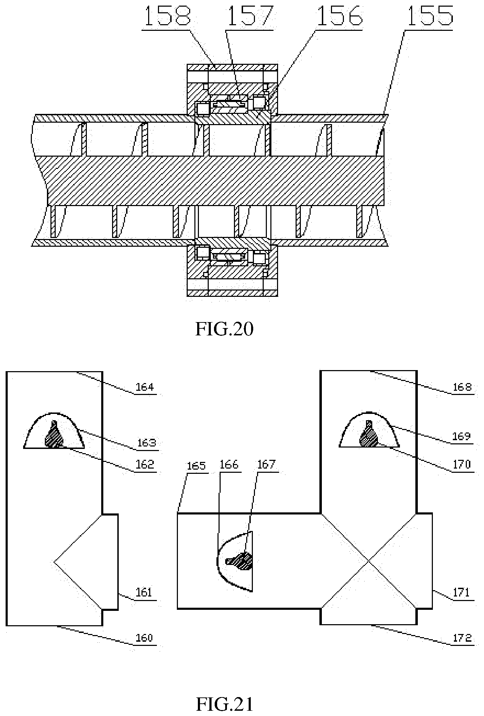

Embodiment 25: The circulating mill adopts a screw feeder. Referring to Fig. 20, a discharge port 155 is at a tail end of a material pipe of the screw feeder, a tail end bearing inner ring 157 is fixed to a screw blade through a bearing sleeve 156, and a tail end bearing seat 158 is fixed to the material pipe. A feeding port of the screw feeder may be further provided with an air-closing device formed by a valve, a storage pipe, and a valve connected successively, so as to prevent a large amount of leakage of the operation medium from the feeding port during feeding.

Embodiment 26: An optical device and an acoustic device. Referring to Fig. 21, on the left is a first or second optical device composed of a tee joint, a light source 162, a reflector 163, and a dust-proof fan. An opening 160 of the tee joint is connected to the outlet of the circulating mill main engine or the exhaust outlet of the cyclone dust collector, a second opening 161 is connected to the air inlet of the cyclone dust collector or the bag dust collector, the light source 162 is disposed in a third opening of the tee joint, the third opening of the tee joint is connected to an exhaust outlet of the dust-proof fan, an inlet of the dust-proof fan is in communication with an air purification chamber of the bag dust collector, and the reflector 163 is configured to concentrate light on fluidized materials. On the right is a third or fourth optical device composed of a cross joint, a light source, a reflector, and a dust-proof fan. An opening 172 of the cross joint is connected to the outlet of the circulating mill main engine or the exhaust outlet of the cyclone dust collector, a second opening 171 is connected to the air inlet of the cyclone dust collector or the bag dust collector, the light source 167 is disposed in a third opening of the cross joint, the reflector 166 is configured to concentrate light of the light source 167 on fluidized materials, the light source 170 is disposed in a fourth opening of the cross joint, and the reflector 169 is configured to concentrate light of the light source 170 on the fluidized materials. The light of the third and fourth optical devices can simultaneously illuminate incoming and outgoing directions of the fluidized materials, and the effect is better than that of the first optical device. A fifth optical device is a light source disposed in the air inlet of the outer circulation pipe and a reflector, a sixth optical device is a light source disposed in the exhaust outlet of the bag dust collector, and a seventh optical device is a light source disposed in the operation medium supply branch where liquid water converges.

By choosing light sources of different wavelengths, the optical device can be used to sterilize the fluidized materials by ultraviolet, trigger the photochemical reaction of the materials to degrade chlorophyll and harmful components, and promote the generation of beneficial components. The applicant's early Chinese invention patent 2013107484148 adopts a method of disposing an ultraviolet sterilization lamp in the circulation channel to sterilize fluidized materials. As powder may adhere to the surface of the lamp to block light, the sterilization effect is greatly reduced. In this embodiment, the first, second, third, and fourth optical devices solve the problems by preventing the powder from adhering to the surface of the light source through the air flow introduced by the dust-proof fan, there is no dust in the air inlet of the outer circulation pipe, the exhaust outlet of the bag dust collector, the exhaust outlet of the condenser, and the operation medium supply branch, and the light transmittance of gaseous and liquid materials is good, so that they are ideal places for use of optical devices.

The acoustic device is configured to trigger physical and chemical reactions of materials in the machine. The acoustic device is a sound generator disposed on the circulating mill main engine and/or the accessory device. When the sound generator is an ultrasonic generator, it can assist in cleaning the equipment, heat and sterilize materials in the machine, or vibrate to promote physical and chemical reactions, and the like.

Embodiment 27: A large mine circulating mill is composed of the sixth circulating mill main engine according to Embodiment 14 and an accessory device. The secondary mill is the third circulating mill according to Embodiment 3, the kinetic energy recovery impellers of the primary mill and the secondary mill are the third kinetic energy recovery impeller according to Embodiment 6, the diameter of the kinetic energy recovery impeller is 1.2 times that of the impeller, the accessory device is the third accessory device, and the outer circulation pipe is provided with a large hard material mill for pre-crushing.

Embodiment 28: An application method of the circulating mill and products processed by same.

The circulating mill has a variety of configuration manners, which can meet processing requirements of different materials, and a typical configuration manner is as follows:
A first configured circulating mill is the fourth circulating mill, and a circulating mill main engine is the second circulating mill main engine.
A second configured circulating mill is the fourth circulating mill, a circulating mill main engine is the second circulating mill main engine, and an accessory device is provided with the third feeding device.
A third configured circulating mill is the first circulating mill, and a circulating mill main engine is the fourth circulating mill main engine.
A fourth configured circulating mill is the fourth circulating mill, a circulating mill main engine is the second circulating mill main engine, and an accessory device is provided with the second feeding device, the second return device, and the fourth operation medium supply branch.
A fifth configured circulating mill is the fourth circulating mill, a circulating mill main engine is the sixth circulating mill main engine, primary and secondary mills are provided with the third kinetic energy recovery impeller of which the diameter is 0.5 to 4 times that of the impeller, and an accessory device is provided with the fifth operation medium supply branch.
A sixth configured circulating mill is the fourth circulating mill, a circulating mill main engine is the sixth circulating mill main engine, primary and secondary mills are provided with the third kinetic energy recovery impeller of which the diameter is 0.5 to 4 times that of the impeller, and an accessory device is provided with a mill for grinding large hard materials.
   (1) A processing method of plant fresh fruit powder and plant fresh fruit powder processed by same. The method is performed according to following steps: S1: washing fresh plants; and S2: adding materials treated in S1 into the first configured circulating mill to make dry powder. Plant fresh fruit powder is processed using the method.
   (2) A method for spray drying by using a circulating mill and powder processed by same. The method includes adding materials to the second configured circulating mill, and obtaining made dry powder collected and discharged by the bag dust collector. Powder prepared by spray drying is the powder processed using the method.
   (3) A processing method of feedstuff and a product processed by same. The method is performed according to following steps: S1: preparation of raw material powder: adding feeding raw materials into the fifth configured circulating mill for processing to obtain dry feeding raw material powder; and S2: preparation of feedstuff: making the feeding raw material powder obtained in S1 into feedstuff. Feedstuff is the feedstuff processed using the method.
   (4) A method for improving nutrient output of cultivated land and agricultural powder produced therefrom. The method is performed according to following steps: S1: seed selection: selecting suitable crop varieties based on unit yield, crop growth period, and plant nutrient content; S2: determination of the harvest time: determining the harvest time by maximizing "the harvest times in a year × nutrient yield per unit area"; the nutrient yield per unit area being the total amount of nutrients in the crop plant obtained from the previous harvest per unit planting area; S3:management measures: timely harvesting and timely sowing; S4: processing: S401: squeezing and dewatering: reducing the water content of harvested crops to less than 70% by squeezing and dewatering; S402: drying and powder-making: making the materials obtained in S401 into powder by using the fifth configured circulating mill; and S5: utilization: using the powder processed in S4 as raw food materials or feedstuff. Agricultural powder is the powder produced using the method.
   (5) A pharmaceutical with volatile components as functional ingredients and a method for preparation and development thereof. The method is performed according to following steps: S1: large-scale preparation of volatile components: adding raw materials to the fourth configured circulating mill, and condensing, by the operating medium supply branch, gasified volatile components in the materials into liquid for discharge, so as to obtain liquid materials rich in volatile components; S2: separating and purifying the liquid materials rich in volatile components made in S1, to obtain materials with medicinal value; and S3: making the materials with medicinal value made in S2 into drugs, or studying the materials with medicinal value made in S2, and developing new drugs. A pharmaceutical with volatile components as functional ingredients is the pharmaceutical made or developed using the method.
   (6) A method of simultaneously preparing volatile components in powder and powder feedstock and a product processed by same. The preparation method includes adding raw materials to the fourth configured circulating mill, collecting processed powder by a bag dust collector, changing the volatile components in the materials into a gaseous state during processing, and condensing, by the operation medium supply branch, the gaseous volatile components into liquid materials. The product is the powder or liquid volatile components processed using the method.
   (7) A method for extracting volatile components from materials and a product processed by same. The method is performed according to following steps: adding raw materials to the fourth configured circulating mill, and condensing, by the operation medium supply branch, gaseous materials formed by gasification of the volatile components into liquid materials. A volatile component is the material made using the method.
   (8) A preparation method of a plant dew beverage and a product processed by same. The method is performed according to following steps: S1: preparation of plant dew: removing impurities from fresh plants, washing them and adding them to the fourth configured circulating mill, and condensing, by the operation medium supply branch, gaseous water and gaseous volatile components formed by gasification of water and volatile components in the materials into liquid to obtain plant dew; and S2: beverage production: processing the plant dew obtained in step S1 into a plant dew beverage; or separating unneeded components from the plant dew obtained in step S1 to make a plant dew beverage.
   (9) A crude oil distillation method and a product processed by same. The method is performed according to following steps: adding crude oil to the second configured circulating mill, and condensing, by the operation medium supply branch, gasified volatile components in the crude oil into liquid to obtain distillate. The product is the crude oil distillate prepared using the method.
   (10) A method for producing sulfur-free konjac powder and a product processed by same. The method is performed according to following steps: S1: pre-processing of commodity fresh konjac: S101: washing and peeling; S102: cutting: cutting the konjac treated in S101 into pieces, wherein the pieces need not be regular, but the konjac with defects of bud eyes, insect holes, different color spots, plant root spots, root holes and wormholes is cut together, and the konjac without defects is cut together; S103: grading: grading the cut konjac pieces while the konjac is cut into pieces, with the defective ones as one grade and the non-defective ones as another grade; S104: squeezing and dewatering: reducing the water content of the konjac pieces graded in S103 to less than 75% by squeezing and dewatering; S2: customization of an operation medium: adjusting the operation medium to include an oxygen component of less than 10%; and S3: drying and powder-making: adding the konjac pieces of two grades processed in S1 to the fourth configured circulating mill to make sulfur-free konjac powder. Sulfur-free konjac powder is the konjac powder produced using the method.
   (11) A method for producing starch and a product processed by same. The method is performed according to following steps: S1: pre-processing: removing impurities from raw materials and washing the raw materials; S2: drying and powder-making: adding the materials processed in step S1 to the first configured circulating mill to make powder; S3: starch separation: mixing the powder made in S2 with water for full agitation, and separating the starch after settling to obtain wet starch; and S4: adding the wet starch obtained in S3 to the fourth configured circulating mill for drying to obtain starch. Plant starch is the starch made using the method.
   (12) A processing and utilization method of fertilizers and a product processed by same. The method is performed according to following steps: S1: preparation of fertilizer raw materials: making raw materials into powder by using the first configured circulating mill to obtain fertilizer raw material powder; or adding raw materials and other ingredients to the third configured circulating mill to make them into powder to obtain fertilizer raw material powder; and S2: utilization: using the fertilizer raw materials processed in step S1 as fertilizers; or processing the fertilizer raw material powder processed in step S2 into fertilizers. A fertilizer is the fertilizer made using the method.
   (13) A preparation method for barley seedling powder and a product processed by same. The method is performed according to following steps: S1: pre-processing: removing impurities from harvested fresh barley seedlings and washing them; and S2: drying and powder-making: adding the barley seedlings processed in step S1 to the fourth configured circulating mill to make them into powder. Barley seedling powder is the barley seedling powder made using the method.
   (14) A processing method for hemp seed protein powder and a product processed by same. The method is performed according to following steps: S1: pre-processing: shelling hemp seed for oil manufacture; and S2: preparation of protein powder: making the materials processed in S1 into powder by using the fourth configured circulating mill. Hemp seed protein powder is the hemp seed protein powder processed using the method.
   (15) A processing and utilization method of hemp stem powder and a product. The method is performed according to following steps: S1: pre-processing: cutting hemp stem; or pre-crushing hemp stem into a length of 200mm, and peeling the hemp stem; or peeling hemp stem and then pre-crushing the hemp stem into a length of 200mm; S2: preparation of hemp stem powder: making the materials treated in S1 into powder by using the third configured circulating mill to obtain hemp stem powder; S3: utilization of hemp stem powder: pressing the hemp stem powder processed in S2 into profiles; or using the hemp stem powder processed in S2 as toothpaste fillers; or adding excipients to the hemp stem powder processed in S2 and pressing them to make profiles. Hemp stem powder is processed using the method. A profile is processed using the method. A toothpaste filler is the toothpaste filler processed using the method.
      The water content of the hemp stem is not high, and the wall hanging problem may not occur during processing by the fourth configured circulating mill.
   (16) A method for primary processing of hemp flower and leaf in a production area and a product processed by same. The method includes drying and pulverizing fresh hemp flower and leaf by using the fourth configured circulating mill to obtain hemp flower and leaf powder. Hemp flower and leaf powder is the hemp flower and leaf powder made using the method.
   (17) A preparation method for dry granulation raw material powder and a product processed by same. The method includes adding raw materials to the fourth configured circulating mill to simultaneously complete grinding, mixing, and drying to obtain raw material powder required by dry granulation. Dry granulation raw material powder is the product processed using the method.
   (18) A processing method of fish powder and a product processed by same. The method includes adding fresh fish to the fourth configured circulating mill to make powder. Fish powder is the fish powder processed using the method.
   (19) A processing method of feeding bone powder and a product processed by same. The method includes adding fresh bone to the fourth configured circulating mill to make powder. Feeding bone powder is the product processed using the method.
   (20) A preparation method of extract and a product processed by same. The method includes following steps: S1:preparation of raw material powder: making fresh raw materials into powder by using the fourth configured circulating mill; S2: preparing an extracting solution, S201: mixing the powder obtained in S1 with a solvent to dissolve extract, to obtain mixture slurry of an extracting solution and slag; S202: separation of the slag and the extracting solution: separating the mixture slurry made in S201 to obtain the extracting solution and the slag; S203: extraction of residual extract from slag: mixing the slag obtained in S202 with a solvent to dissolve residual extract in the slag, to obtain mixture slurry of an extracting solution and slag; separating the slag and the extracting solution by using the method in S202; repeating step S203, till the residual extract in the slag is no longer economically valuable to extract; S204: purification of the extracting solution: removing impurities from the extracting solution and purifying the extracting solution; S3: drying of the extracting solution: drying the extracting solution made in S2 by using the second configured circulating mill to obtain extract; and S4: drying of the slag: making the slag made in S2 into powder by using the fourth configured circulating mill. Extract is the extract made using the method.
   (21) A processing method of forage grass and a product processed by same. The method includes making fresh forage grass or forage grass naturally dried for 1 to 5 days into powder by using the fifth configured circulating mill. Forage grass powder is the forage grass powder processed using the method.
   (22) A preparation method of mineral powder and a product processed by same. The method is performed according to following steps: adding raw mineral materials to the sixth configured circulating mill through a feeding port of a mineral mill, pre-crushing, by the mill, the materials into coarse powder, driving, by an air flow in an outer circulation pipe, the coarse powder into the circulating mill main engine to be further crushed into fine powder, collecting fine powder with a required particle size separated out and entering a bag dust collector with the air flow to obtain mineral powder. Mineral powder is the mineral powder prepared using the method.
   (23) A preparation method of perfume using plant aroma as functional components and a product processed by same. The method is performed according to following steps: S1: preparation of cell fluid: adding fresh plants to the fourth configured circulating mill for processing, and condensing, by the operation medium supply branch, gaseous water and gaseous volatile components formed by gasification of water and volatile components in the materials to obtain cell fluid; and S2: preparation of perfume: making the cell fluid obtained in S2 into perfume. Perfume is the perfume made using the method.
   (24) A preparation method of fresh corn flour and a product processed by same. The method includes: S1: harvesting fresh corn and choosing fresh and tender corn to harvest; S2: shelling and threshing: shelling and threshing the fresh tender corn harvested in step S1 to obtain fresh corn kernels; and S3: preparation of fresh corn flour: adding the fresh corn kernels prepared in step S2 to the fourth configured circulating mill to make fresh corn flour. Fresh corn flour is the fresh corn flour made using the method.
   (25) A preparation method of fresh bean flour and a product processed by same. The method includes: S1: harvesting fresh beans and choosing fresh beans near the end of a grain-filling period to harvest; S2: shelling: shelling the fresh beans harvested in step S1 to obtain fresh bean kernels; and S3: preparation of fresh bean flour: adding the fresh bean kernels prepared in step S2 to the fourth configured circulating mill to make fresh bean flour. Fresh bean flour is the fresh bean flour made using the method.
   (26) A preparation method of fresh wheat flour and a product processed by same. The method includes: S1: harvesting fresh wheatears and choosing fresh wheatears near the end of a grain-filling period to harvest; S2: shelling: shelling the wheatears harvested in step S1 to obtain fresh wheat grains; and S3: preparation of fresh wheat flour: adding the fresh wheat grains prepared in step S2 to the fourth configured circulating mill to make fresh wheat flour. Fresh wheat flour is the fresh wheat flour made using the method.
   (27) A preparation method of fresh rice flour and a product processed by same. The method includes: S1: harvesting rice and choosing rice near the end of a grain-filling period to harvest; S2: preparation of rice milk: removing rice milk from the rice harvested in step S1; and S3: drying of the rice milk: adding the rice milk prepared in step S2 to the fourth configured circulating mill to make fresh rice flour. Fresh rice flour is the fresh rice flour made using the method.
   (28) A preparation method of potato powder and a product processed by same. The method includes: controlling the oxygen content of an operation medium to less than 8%, washing, peeling or unpeeling potatoes, and adding the potatoes to the fourth configured circulating mill to make dry powder. Potato powder is the potato powder made using the method.
   (29) A preparation method of pumpkin powder and a product processed by same. The method includes: washing and peeling pumpkin, removing pulp, and adding the pumpkin to the fourth configured circulating mill to make dry powder. Pumpkin powder is the pumpkin powder made using the method.
   (30) A preparation method of tomato powder. The method includes: washing fresh tomatoes, and adding the tomatoes to the fourth configured circulating mill to make dry powder. Tomato powder is the tomato powder made using the method.
      The same method can also be used to prepare green onion powder, ginger powder, cucumber powder, watermelon powder, pepper powder, garlic bolt powder, cabbage powder, bitter cabbage powder, carrot powder, tea powder, edible rose powder, coffee powder, and other edible powder.
   (31) A preparation method of rose cell fluid and a product processed by same. The method includes: adding rose to the fourth configured circulating mill, and condensing, by the operation medium supply branch, vaporized moisture and rose scent into liquid. Rose cell fluid is the rose cell fluid made using the method.
      The same method can also be used to prepare cell fluid of fresh agricultural products such as garlic, apple, cantaloupe, and Chinese herbal medicines.
   (32) A preparation method of fresh maca powder and maca glucosinolates and a product processed by same. The method is performed according to following steps: S1: washing fresh maca and adding the maca to the fourth configured circulating mill; S2: collecting fresh maca powder by the bag dust collector, and collecting maca cell fluid by the operation medium supply branch; and S3: purifying the maca cell fluid obtained in S2 to obtain maca glucosinolates. Fresh maca powder is made using the method. A maca glucosinolate is the maca glucosinolate made using the method.
   (33) A preparation method of instant coffee and instant coffee processed by same. The method includes: S1: preparation of coffee powder: adding fresh or dried coffee beans to the fourth configured circulating mill to make dry powder; S2: preparation of coffee liquid: adding the coffee powder obtained in S1 to water, to dissolve soluble components in the coffee powder into the water to obtain mixture slurry of coffee liquid and coffee grounds, and filtering the mixture slurry to obtain the coffee liquid; S3: drying and powder-making of the coffee liquid: adding the coffee liquid obtained in S2 to the second configured circulating mill to make dry powder to obtain instant coffee. Instant coffee is the instant coffee made using the method.
   (34) A preparation method of milk powder and a product processed by same. The method includes: adding emulsion to the second configured circulating mill to make milk powder. Milk powder is the milk powder made using the method.
   (35) A preparation method of soybean milk powder and a product processed by same. The method includes: adding soybean milk to the second configured circulating mill to make soybean milk powder. Soybean Milk powder is the milk powder made using the method.
   (36) A preparation method of Chinese herbal medicine powder and Chinese herbal medicine cell fluid and a product processed by same. The method includes: washing Chinese herbal medicines and adding them to the fourth configured circulating mill, discharging dry Chinese herbal medicine powder from a main discharge port, and collecting Chinese herbal medicine cell fluid by the operation medium supply branch. Chinese herbal medicine powder is the Chinese herbal medicine powder made using the method. Chinese herbal medicine cell fluid is the Chinese herbal medicine cell fluid prepared using the method.
   (37) A preparation method of ginseng powder and ginseng cell fluid and a product processed by same. The method includes: washing fresh ginseng and adding it to the fourth configured circulating mill, discharging ginseng powder from a main discharge port, and collecting ginseng cell fluid by the operation medium supply branch. Ginseng powder is made using the method. Ginseng cell fluid is the ginseng cell fluid prepared using the method.
      The same method can also be used to prepare the following fresh Chinese herbal medicine powder and cell fluid thereof, radix linderae, atractylodes, radix paeoniae alba, fritillaria, hyacinth bletilla, American ginseng, red ginseng, Chinese yam, chrysanthemum morifolium ramat, rhizoma corydalis, radix scrophulariae, radix ophiopogonis, radix curcumae, notoginseng, pine needles, pear, notoginseng flower, notoginseng leaf, gastrodia elata, erigeron breviscapus, caulis dendrobii, radix angelicae sinensis, magnolia officinalis, radix scutellariae, amomum villosum, polygonum multiflorum, resina draconis, radix aconiti brachypodi, common alstonia leaf, kusnezoff monkshood root, pinellia, radix geutianae, eucommia, radix saposhnikoviae, poria cocos, honeysuckle, rhizoma polygonati, cordyceps sinensis, radix bupleuri, radix codonopsis, pepper, radix isatidis, aloe vera, amomum, rhizoma paridis, rhizoma ligustici wallichii, cordate houttuynia, loquat leaf, croton, gallnut, cornus, radix dipsaci, rhodiola, sea buckthorn powder, desertliving cistanche, astragalus, licorice, Chinese wolfberry, spikenard, valerian, red paeony root, notopterygium, selfheal, radix angelicae pubescentis, lily, radix polygonati officinalis, gynostemma, Chinese bulbul, cowherb seed, fruit of Chinese magnoliavine, dodder, hawthorn, artemisinin, cortex periplocae, moringa leaf, rhizoma zedoariae, gardenia, folium artemisiae argyi, cinnamon, ageratum, fructus anisi stellati, ganoderma lucidum, ganoderma lucidum spore, wild fungus, mushrooms, stevia, rhizoma acori tatarinowii, radix puerariae, radix pseudostellariae, phytolacca acinosa, polygonum cuspidatum, rhubarb, paniculate swallowwort root, motherwort, sophora, chrysanthemum, gordon euryale seed, tribulus terrestris, rhizoma bistortae, rhizoma drynariae, herba artemisiae scopariae, fructus arctii, forsythia, herba schizonepetae, uncaria, daphne genkwa, mint, coix seed, fructus xanthii, rhizoma arisaematis, radix fici hirtae, sargentodoxa cuneata, lysimachia christinae hance, raspberry, dogbane leaf, radix ranunculi ternati, semen cassiae, platycodon grandiflorum, papaya, radix sanguisorbae, fructus gleditsiae sinensis, antipyretic dichroa, cirsium japonicum, radix aconiti carmichaeli, radix peucedani, acanthopanax, rhizoma anemarrhenae, lycium ruthenicum, rhizoma alismatis, saffron, cardamom, matsutake, osmanthus fragrans, saussurea involucrata, folium mori, eurycoma longifolia, and the like.
   (38) A preparation method of gecko powder and a product processed by same. The method includes: washing fresh geckos and adding them to the fourth configured circulating mill to make dry powder. Gecko powder is processed using the method. The same method can also be used to prepare following animal powder: cuttlefish bone, leech, bezoar, deer antler, bear bile, ground beeltle, cantharidopsis powder, cicada slough, ant, centipede, pearl, black chicken, pig blood, eel, cubilose, crab shell, and the like.
   (39) A preparation method of medicinal talc powder. The method includes: adding talc powder raw material to the fourth configured circulating mill to make dry powder. Medicinal talc powder is the talc powder processed using the method.
      The same method can also be used to prepare medicinal mirabilite powder, medicinal gypsum powder, and the like.
   (40) A preparation method of seaweed powder and a product processed by same. The method includes: draining fresh seaweeds and adding them to the fourth configured circulating mill to make dry powder. Seaweed powder is the seaweed powder processed using the method.
   (41) A preparation method of fragmented spirulina powder and a product processed by same. The method includes: adding fresh spirulina to the fourth configured circulating mill to make fragmented spirulina powder. Fragmented spirulina powder is the fragmented spirulina powder processed using the method.
   (42) A preparation method of putty for construction and a product processed by same. The method includes: adding raw putty materials for construction to the sixth configured circulating mill to make powder. Putty for construction is the putty for construction processed using the method.
   (43) A grinding method for cement clinker and a product processed by same. The method includes: operating the sixth configured circulating mill to add cement clinker to equipment through a feeding port of the mill, pre-crushing, by the mill, the materials into coarse powder, and driving, by an air flow in an outer circulation pipe, the coarse powder into the circulating mill main engine to further crush it into fine powder which is separated by the bag dust collector to obtain cement powder. Cement is the cement processed using the method.
      The same method can also be used to prepare titanium dioxide, calcium carbonate, lithopone, kaolin powder, coal powder, stone powder, ore powder, gypsum powder, feldspar powder, graphite powder, silica powder, and the like.
   (44) A grinding method of iron powder and a product processed by same. The method includes: pre-fabricating iron powder raw materials into small pieces below 5mm and adding them to the circulating mill to make fine powder. Iron powder is the iron powder processed using the method.
      The same method can also be used to process tungsten powder, copper powder, cobalt powder, nickel powder, titanium powder, tantalum powder, aluminum powder, tin powder, lead powder, and other metal powder.
   (45) A grinding method of pesticide powder and a product processed by same. The method includes: adding pesticide raw materials to the fourth configured circulating mill to make fine powder. Pesticide powder is the pesticide powder processed using the method.
   (46) A method of sea water desalinization and a product processed by same. The method includes: adding sea water to the second configured circulating mill for spray drying, and condensing, by the operation medium supply branch, vaporized moisture into liquid water to obtain fresh water. Fresh water is the fresh water processed using the method.
   (48) A method of drying sludge. The method includes adding sludge into the fifth configured circulating mill to make dry powder. Sludge is the sludge processed using the method.
      The method can also be used to process sewage sludge, septic tank sludge, farm manure, kitchen waste, tailings discharged from water treatment equipment, vegetable waste, and other high-humidity and high-viscosity materials.
   (49) A method of processing edible and medicinal powder and retrieving cell fluid and a product processed by same. The method includes: washing edible and medicinal raw materials and adding them to the fourth configured circulating mill to make powder, obtaining the powder discharged from a main discharge port, and condensing, by the operation medium supply branch, gaseous water and gaseous volatile components generated during processing into liquid to obtain cell fluid. Edible and medicinal powder is processed using the method. Cell fluid is the cell fluid prepared using the method.
   (50) A preparation method of banana powder and banana powder. The method includes making edible parts of bananas into banana powder by using the fourth configured circulating mill. Banana powder is the banana powder processed using the method.
   (51) A preparation method of green banana powder and green banana powder. The method includes: controlling the oxygen content in the operation medium to be less than 5% by mass, and making peeled or unpeeled green bananas into green banana powder by using the fourth configured circulating mill. Green Banana powder is the banana powder processed using the method.
   (52) A fragmentation method for washed pine pollen and washed fragmented pine pollen. The method includes centrifugally dehydrating washed pine pollen with water content of 65% to 75% into fragmented powder by using the fourth configured circulating mill. Washed fragmented pine pollen is the washed fragmented pine pollen processed using the method.
   (53) A drying method for juice prepared by pressing and a product processed by same. The method is performed according to following steps: S1: equipment configuration: selecting the second configured circulating mill, and selecting nitrogen with oxygen content less than 6% as the operation medium; and S2: adding the juice prepared by pressing to the equipment configured in S1 to make powder, and obtaining the powder discharged from a maim discharge port. Powder processed from juice prepared by pressing is the powder processed using the method.
   (54) A preparation method of barley green and a product processed by same. The method is performed according to following steps: S1: equipment configuration: selecting the second configured circulating mill, and controlling the oxygen content of the operation medium to be less than 5%; S2: preparing barley grass juice: S201: treatment of raw materials: rinsing tender barley grass; S202: juicing: juicing the barley grass prepared in S201 to obtain barley grass juice; S203: filtering: filtering solid substances in the barley grass juice prepared in S202 to obtain fine barley grass juice; and S3: spray drying: adding the fine barley grass juice prepared in S2 to the equipment configured in S1 for spray drying, and obtaining barley green discharged from a main discharge port. Barley green is the barley green processed using the method.
   (55) A preparation method of soluble notoginseng powder and soluble notoginseng powder. The method includes making fresh notoginseng juice prepared by pressing into soluble notoginseng powder by using the second configured circulating mill. Soluble notoginseng powder is the soluble notoginseng powder processed using the method.
      The same method can also be used to prepare soluble maca powder, soluble apple powder, soluble emblic leafflower fruit powder, soluble matsutake powder, and the like.
   (56) A fragmentation method of pine pollen and a product processed by same. The method is performed according to following steps: S1: configuring equipment: S101: employing the fourth circulating mill and the second circulating mill main engine, and configuring the accessory device with the fourth operation medium supply branch, S102: configuring the accessory device with the second feeding device and the second return device, S103: configuring the third or fourth optical device, and selecting an ultraviolet sterilization light source as the light source of the optical device, S104: setting the switching valve of the fourth operation medium supply branch to make the compressor exhaust pipe connected to the second branch and disconnected from the first branch, and opening the valve on the pipeline between the air duct and the outlet of the heater, S 105: selecting nitrogen with oxygen content less than 10% as the operation medium; and S2: fragmentation of pine pollen: adding pine pollen to the equipment configured in S1 to make fragmented pine pollen. Fragmented pine pollen is the fragmented pine pollen processed using the method.
      The operation medium of the equipment used by the method is cold air, which solves the problem that the heat into which the kinetic energy of the main engine is converted increases the temperature in the machine. Due to the setting of the ultraviolet sterilization device, processed materials and incoming materials can be processed at the same time.
   (52) The operation medium for equipment used by the fragmentation method for washed pine pollen and the washed fragmented pine pollen is hot air. Due to the high moisture content of the materials, the water vaporization consumes the heat in the hot air and the heat into which the kinetic energy of the main engine is converted. Under appropriate working conditions, the temperature in the machine can be maintained at normal temperature.
   (57) A preparation method of ultrafine powder of Chinese herbal medicines and ultrafine powder of Chinese herbal medicines. The method includes: making dry Chinese herbal medicines into ultrafine powder by using the equipment configured in step S1 in the fragmentation method of pine pollen and the product processed by same in (56). Ultrafine powder of Chinese herbal medicines is the ultrafine powder of Chinese herbal medicines processed using the method.

## Claims

1. A circulating mill, improved based on a centrifugal fan, wherein
a first circulating mill is composed of a housing, an impeller, and a kinetic energy recovery device, the housing is provided with an inner circulation pipe interface near an air inlet, an air flow from the inner circulation pipe interface assists in driving the impeller to rotate by impacting the kinetic energy recovery device, the air inlet on the housing is an inlet of the first circulating mill, and an air outlet on the housing is an outlet of the first circulating mill;
or a second circulating mill is composed of a housing, an impeller, a kinetic energy recovery device, and a feed pipe, the feed pipe is provided with an inner circulation pipe interface, one end of the feed pipe is connected to an air inlet on the housing, the kinetic energy recovery device is disposed in the feed pipe, an air flow from the inner circulation pipe interface assists in driving the impeller to rotate by impacting the kinetic energy recovery device, the other end of the feed pipe is an inlet of the second circulating mill, and an air outlet on the housing is an outlet of the second circulating mill;
or a third circulating mill is composed of a housing, an impeller, a kinetic energy recovery device, and a feed pipe, The feed pipe is provided with an inner circulation pipe interface, one end of the feed pipe is connected to an air inlet on the housing, the kinetic energy recovery device is disposed in the feed pipe, the impeller is driven to rotate by the kinetic energy recovery device impacted by the air flow from the inner circulation interface, the other end of the feed pipe is an inlet of the third circulating mill, and an air outlet on the housing is an outlet of the third circulating mill;

2. The circulating mill according to claim 1, wherein the kinetic energy recovery device of the first circulating mill is implemented in such a way that an air inlet on a front disc expands to expose a blade or an annular window is formed on the front disc to expose the blade, and the air flow from the inner circulation pipe interface assists in driving the impeller to rotate by impacting the exposed blade;
or the kinetic energy recovery device of the second or third circulating mill is a kinetic energy recovery blade, the kinetic energy recovery blade is fixed to an impeller shaft or fixed to an impeller shaft elongating along the feed pipe, or one end of the kinetic energy recovery blade is fixed to a rear disc and/or a shaft sleeve and/or an impeller shaft, and the other end is fixed to an impeller shaft elongating along the feed pipe, or the other end is fixed to a connecting plate fixed to an impeller shaft elongating along the feed pipe;
or the kinetic energy recovery device of the second or third circulating mill is a first kinetic energy recovery impeller which is composed of a kinetic energy recovery blade and an upper ring, one end of the kinetic energy recovery blade being fixed to a shaft sleeve and/or a rear disc, the other end being fixed to the upper ring, and a plurality of kinetic energy recovery blades being distributed circumferentially along the upper ring; or is composed of a kinetic energy recovery blade and an upper ring, one end of the kinetic energy recovery blade being fixed to a shaft sleeve and/or a rear disc, the other end being fixed to the upper ring, and the upper ring being fixed to an impeller shaft elongating along a feed pipe; or is composed of a kinetic energy recovery blade, a reinforcing ring, and an upper ring, one end of the kinetic energy recovery blade being fixed to a shaft sleeve and/or a rear disc, the other end being fixed to the upper ring, and the reinforcing ring being fixed to a middle part of the kinetic energy recovery blade; or is composed of a kinetic energy recovery blade, a reinforcing ring, and an upper ring, one end of the kinetic energy recovery blade being fixed to a shaft sleeve and/or a rear disc, the other end being fixed to the upper ring, and the reinforcing ring being fixed to a middle part of the kinetic energy recovery blade and an impeller shaft elongating along a feed pipe;
or the kinetic energy recovery device of the second or third circulating mill is a second kinetic energy recovery impeller which is composed of a kinetic energy recovery impeller shaft sleeve, a kinetic energy recovery blade, and an upper ring, one end of the kinetic energy recovery blade being fixed to the kinetic energy recovery impeller shaft sleeve, and the other end being fixed to the upper ring; or is composed of a kinetic energy recovery impeller shaft sleeve, a kinetic energy recovery blade, and an upper ring, one end of the kinetic energy recovery blade being fixed to the kinetic energy recovery impeller shaft sleeve, the other end being fixed to the upper ring, a cross section of the kinetic energy recovery blade being semi-circular, and the kinetic energy recovery impeller shaft sleeve being fixed to a shaft sleeve or an impeller shaft; or is composed of a kinetic energy recovery impeller shaft sleeve, a kinetic energy recovery blade, and an upper ring, one end of the kinetic energy recovery blade being fixed to the kinetic energy recovery impeller shaft sleeve, the other end being fixed to the upper ring, a cross section of the kinetic energy recovery blade being wing-shaped, the upper ring being fixed to an impeller shaft elongating along a feed pipe, and the elongated impeller shaft being provided with bearings fixed to a bracket; or is composed of a kinetic energy recovery impeller shaft sleeve, a kinetic energy recovery blade, and an upper ring, one end of the kinetic energy recovery blade being fixed to the kinetic energy recovery impeller shaft sleeve, the other end being fixed to the upper ring, a windward side of the kinetic energy recovery blade being flat, a leeward side being cambered, the upper ring being fixed to an impeller shaft elongating along a feed pipe, the elongated impeller shaft being provided with bearings fixed to a bracket, and the bracket being fixed to the feed pipe and/or a base;
or the kinetic energy recovery device of the second or third circulating mill is a third kinetic energy recovery impeller, and an A-type third kinetic energy recovery impeller is composed of a kinetic energy recovery impeller shaft sleeve, a kinetic energy recovery impeller shaft, a kinetic energy recovery blade, an upper ring, and a transmission, one end of the kinetic energy recovery blade being fixed to the kinetic energy recovery impeller shaft sleeve, the other end being fixed to the upper ring, the transmission being fixed to a feed pipe and a base, an input shaft of the transmission being a kinetic energy recovery impeller shaft, the kinetic energy recovery impeller shaft sleeve being fixed to the input shaft of the transmission, and an output shaft of the transmission being an impeller shaft; the upper ring being fixed to the input shaft of the transmission, one end of the input shaft of the transmission extending out of the upper ring being provided with bearings fixed to a bracket, and the bracket being fixed to the feed pipe and the base;
or a B-type third kinetic energy recovery impeller is composed of a kinetic energy recovery impeller shaft sleeve, a kinetic energy recovery impeller shaft, a kinetic energy recovery blade, an upper ring, and a transmission; one end of the kinetic energy recovery blade is fixed to the kinetic energy recovery impeller shaft sleeve, the other end is fixed to the upper ring, the transmission is fixed to a feed pipe and a base, an input shaft of the transmission is the kinetic energy recovery impeller shaft, the kinetic energy recovery impeller shaft sleeve is fixed to the input shaft of the transmission, and an output shaft of the transmission is an impeller shaft; the upper ring is fixed to the input shaft of the transmission, one end of the input shaft of the transmission extending out of the upper ring is provided with bearings fixed to a bracket, and the bracket is fixed to the feed pipe and the base, and the diameter of the B-type third kinetic energy recovery impeller is 0.5 to 4 times that of the impeller;
or a C-type third kinetic energy recovery impeller is composed of a kinetic energy recovery impeller shaft sleeve, a kinetic energy recovery impeller shaft, a kinetic energy recovery blade, an upper ring, and a transmission; one end of the kinetic energy recovery blade is fixed to the kinetic energy recovery impeller shaft sleeve, the other end is fixed to the upper ring, the transmission is fixed to a feed pipe, an input shaft of the transmission is the kinetic energy recovery impeller shaft, the kinetic energy recovery impeller shaft sleeve is fixed to the input shaft of the transmission, and an output shaft of the transmission is an impeller shaft;
or a D-type third kinetic energy recovery impeller is composed of a kinetic energy recovery impeller shaft sleeve, a kinetic energy recovery impeller shaft, a kinetic energy recovery blade, an upper ring, and a transmission; one end of the kinetic energy recovery blade is fixed to the kinetic energy recovery impeller shaft sleeve, the other end is fixed to the upper ring, the transmission is fixed to a feed pipe or a base, an input shaft of the transmission is the kinetic energy recovery impeller shaft, the kinetic energy recovery impeller shaft sleeve is fixed to the input shaft of the transmission, and an output shaft of the transmission is an impeller shaft or connected therewith, the upper ring is fixed to the input shaft of the transmission, one end of the input shaft of the transmission extending out of the upper ring is provided with bearings fixed to a bracket;
or the kinetic energy recovery device of the second or third circulating mill is a fourth kinetic energy recovery blade, which is composed of a kinetic energy recovery impeller shaft sleeve, a lower ring, a kinetic energy recovery blade, and an upper ring. One end of the kinetic energy recovery blade is fixed to the lower ring, the other end is fixed to the upper ring, and the lower ring is fixed to the kinetic energy recovery impeller shaft sleeve;
or the feed pipe of the second or third circulating mill is a straight pipe, one end of the straight pipe is connected to an air inlet on the housing and the other end being an inlet of the circulating mill; or a tapered pipe with a small head connected to an air inlet on the housing and a large head being an inlet of the circulating mill; or a tapered pipe with a large head connected to an air inlet on the housing and a small head being an inlet of the circulating mill; or a tapered pipe with a small head connected to an air inlet on the housing and a large head provided with a cover, an opening in the middle of the cover being an inlet of the circulating mill; or a cyclone dust collector, of which an air inlet is an inner circulation pipe interface, an ash discharge port is connected to an air inlet on the housing, and an exhaust outlet is an inlet of the circulating mill; or an uncapped cyclone dust collector, of which an air inlet is an inner circulation pipe interface, an ash discharge port is connected to an air inlet on the housing, and an uncapped end is an inlet of the circulating mill.

3. A circulating mill main engine, wherein
a first circulating mill main engine is composed of a primary mill, a secondary mill, and an inner circulation pipe, the primary mill and the secondary mill are the first circulating mill according to claim 1, an outlet of the primary mill is connected to an inner circulation pipe interface of the secondary mill through the inner circulation pipe, an outlet of the secondary mill is connected to an inner circulation pipe interface of the primary mill through the inner circulation pipe, an inlet of the primary mill is an inlet of the first circulating mill main engine, and an inlet of the secondary mill is an outlet of the first circulating mill main engine;
or a second circulating mill main engine is composed of a primary mill, a secondary mill, and an inner circulation pipe, and the primary mill and the secondary mill are the second circulating mill according to claim 1, an outlet of the primary mill is connected to an inner circulation pipe interface of the secondary mill through the inner circulation pipe, an outlet of the secondary mill is connected to an inner circulation pipe interface of the primary mill through the inner circulation pipe, an inlet of the primary mill is an inlet of the second circulating mill main engine, and an inlet of the secondary mill is an outlet of the second circulating mill main engine;
or a third circulating mill main engine is composed of the second circulating mill main engine from which the kinetic energy recovery devices in the feed pipes of the primary mill and the secondary mill are removed.
or a fourth circulating mill main engine is improved based on the second circulating mill according to claim 1, an outlet on the housing is connected to an inner circulation pipe interface on the feed pipe through an inner circulation pipe, a three-way air inlet is disposed between one end of the feed pipe and the air inlet on the housing, a second opening of the three-way air inlet is an inlet of the fourth circulating mill main engine, and the other end of the feed pipe is an outlet of the fourth circulating mill main engine;
or a fifth circulating mill main engine is composed of the fourth circulating mill main engine from which the kinetic energy recovery device is removed;
or a sixth circulating mill main engine is composed of a primary mill, a secondary mill, and an inner circulation pipe, the primary mill is the second circulating mill according to claim 1, and the secondary mill is the third circulating mill according to claim 1, an outlet of the primary mill is connected to an inner circulation pipe interface of the secondary mill through the inner circulation pipe, an outlet of the secondary mill is connected to an inner circulation pipe interface of the primary mill through the inner circulation pipe, an inlet of the primary mill is an inlet of the sixth circulating mill main engine, and an inlet of the secondary mill is an outlet of the sixth circulating mill main engine.

4. The circulating mill main engine according to claim 3, wherein
an axis of the primary mill of the first or second or sixth circulating mill main engine is perpendicular to an axis of the secondary mill;
or the inner circulation pipe connected to the outlet of the secondary mill of the first or second or sixth circulating mill main engine is provided with a circulating air volume adjusting device; or the feed pipe of the secondary mill of the second or sixth circulating mill main engine is provided with an air volume adjusting device disposed between the inner circulation pipe interface and one end of the feed pipe; or an air volume adjusting device is disposed between one end of the feed pipe of the fourth circulating mill main engine and a three-way air inlet;
or a cross-sectional area of the inner circulation pipe connected to the outlet of the secondary mill of the first or second or sixth circulating mill main engine is less than that of the inner circulation pipe connected to the outlet of the primary mill;
or the housing of the primary mill of the second or sixth circulating mill main engine is provided with 2 or 3 or 4 outlets, and the number of the secondary mill and the number of the inner circulation pipe interface on the feed pipe of the primary mill are the same as the number of the outlet on the housing of the primary mill.

5. A circulating mill, wherein a first circulating mill is composed of the first or second or third or fourth or fifth or sixth circulating mill main engine according to claim 3 and a first accessory device, the first accessory device is composed of a dust collector and an outer circulation pipe, an air inlet of the dust collector is connected to the outlet of the circulating mill main engine, and an outlet of the outer circulation pipe is connected to the inlet of the circulating mill main engine;
or a second circulating mill is composed of the first or second or third or fourth or fifth or sixth circulating mill main engine according to claim 3 and a second accessory device, the second accessory device is composed of a dust collector and an outer circulation pipe, the outer circulation pipe is provided with a dust collector ash discharge interface, the dust collector ash discharge interface is provided with an adjusting valve, a dust collector ash discharge pipe is provided with a discharge port, an air inlet of the dust collector is connected to the outlet of the circulating mill main engine, an outlet of the outer circulation pipe is connected to the inlet of the circulating mill main engine, and a dust collector ash discharge port is connected to the adjusting valve;
or a third circulating mill is composed of the first or second or third or fourth or fifth or sixth circulating mill main engine according to claim 3 and a third accessory device, the third accessory device is composed of a cyclone dust collector, a bag dust collector, and an outer circulation pipe, the outer circulation pipe is provided with a cyclone dust collector ash discharge interface, an air inlet of the cyclone dust collector is connected to the outlet of the circulating mill main engine, a cyclone dust collector exhaust outlet is connected to an air inlet of the bag dust collector, a cyclone dust collector ash discharge port is connected to the cyclone dust collector ash discharge interface on the outer circulation pipe, and an outlet of the outer circulation pipe is connected to the inlet of the circulating mill main engine;
or a fourth circulating mill is composed of the first or second or third or fourth or fifth or sixth circulating mill main engine according to claim 3 and a fourth accessory device, the fourth accessory device is composed of a cyclone dust collector, a bag dust collector, an outer circulation pipe, and an operation medium supply branch, the outer circulation pipe is provided with a cyclone dust collector ash discharge interface, an air inlet of the cyclone dust collector is connected to the outlet of the circulating mill main engine, a cyclone dust collector exhaust outlet is connected to an air inlet of the bag dust collector, a cyclone dust collector ash discharge port is connected to the cyclone dust collector ash discharge interface on the outer circulation pipe, an outlet of the outer circulation pipe is connected to the inlet of the circulating mill main engine, and an air inlet of the outer circulation pipe is connected to an exhaust outlet of the operation medium supply branch.

6. The circulating mill according to claim 5, wherein the third or fourth accessory device comprises a first return device composed of a 1# conveyor and a 2# conveyor, the 1# conveyor being provided with one feed port and two discharge ports, one discharge port being a main discharge port of the circulating mill, the 2# conveyor being provided with two feed ports and two discharge ports, the feed port of the 1# conveyor being connected to an ash discharge port of the bag dust collector, the other discharge port of the 1# conveyor being connected to one feed port of the 2# conveyor, the other feed port of the 2# conveyor being connected to the cyclone dust collector ash discharge port, one discharge port of the 2# conveyor being provided with a valve, an outlet of the valve being connected to the cyclone dust collector ash discharge interface on the outer circulation pipe, and the other discharge port of the 2# conveyor being an auxiliary discharge port of the circulating mill; or comprises a second return device composed of a 1# conveyor and a 2# conveyor, the 1# conveyor being provided with one feed port and two discharge ports, one discharge port being a main discharge port of the circulating mill, the 2# conveyor being provided with two feed ports and two discharge ports, the feed port of the 1# conveyor being connected to an ash discharge port of the bag dust collector, the other discharge port of the 1# conveyor being connected to one feed port of the 2# conveyor, the other feed port of the 2# conveyor being connected to the cyclone dust collector ash discharge port, one discharge port of the 2# conveyor being provided with a valve, an outlet of the valve being connected to the cyclone dust collector ash discharge interface on the outer circulation pipe, the other discharge port of the 2# conveyor being an auxiliary discharge port of the circulating mill, and the main discharge port and the auxiliary discharge port of the circulating mill being provided with an air-closing device formed by a valve, a storage pipe, and a valve connected successively;
or the first or second or third or fourth accessory device comprises a first feeding device that is a screw feeder, a discharge port being at a tail end of a material pipe of the screw feeder, the discharge port being in communication with the outer circulation pipe, a tail end bearing being fixed to a screw blade close to the tail end through a bearing lining, and a tail end bearing seat being fixed to the material pipe; or comprises a second feeding device that is a screw feeder, a discharge port being at a tail end of a material pipe of the screw feeder, the discharge port being in communication with the outer circulation pipe, an inner ring of a tail end bearing being fixed to a screw blade close to the tail end through a bearing sleeve, a tail end bearing seat being fixed to the material pipe, and a feeding port of the feeding device being provided with an air-closing device formed by a valve, a storage pipe, and a valve connected successively; or the first or second or third or fourth accessory device further comprises a third feeding device that is an atomizer mounted on the outer circulation pipe;
or the first or second or third or fourth accessory device further comprises a mill disposed on the outer circulation pipe;
or an air purification chamber of the bag dust collector of the fourth accessory device is further provided with a second exhaust outlet with a cover, and the outer circulation pipe is further provided with a second air inlet with a cover.

7. The circulating mill according to claim 5, wherein the operation medium supply branch of the fourth accessory device is a first operation medium supply branch composed of a heat exchanger, a condenser, and a heater, the heat exchanger being composed of a heat exchange branch and a cooling branch, heat medium channel air inlets of the heat exchange branch and the cooling branch being gathered together through a heat exchanger air inlet pipe, an inlet of the heat exchanger air inlet pipe being an air inlet of the operation medium supply branch, heat medium channel exhaust outlets of the heat exchange branch and the cooling branch being connected to an air inlet of the condenser, an exhaust outlet of the condenser being connected to an inlet of a refrigerant channel of the heat exchange branch through a condenser exhaust pipe, an exhaust outlet of the refrigerant channel of the heat exchange branch being connected to an air inlet of the heater through a refrigerant channel exhaust pipe, an exhaust outlet of the heater being an exhaust outlet of the operation medium supply branch, and the air inlet of the operation medium supply branch being connected to the exhaust outlet of the bag dust collector;
or is a second operation medium supply branch composed of a heat exchanger, a condenser, and a heater, the heat exchanger being composed of a heat exchange branch and a cooling branch, heat medium channel air inlets of the heat exchange branch and the cooling branch being gathered together through a heat exchanger air inlet pipe, an inlet of the heat exchanger air inlet pipe being an air inlet of the operation medium supply branch, heat medium channel exhaust outlets of the heat exchange branch and the cooling branch being connected to an air inlet of the condenser, an exhaust outlet of the condenser being connected to an inlet of a refrigerant channel of the heat exchange branch through a condenser exhaust pipe, an exhaust outlet of the refrigerant channel of the heat exchange branch being connected to an air inlet of the heater through a refrigerant channel exhaust pipe, an exhaust outlet of the heater being an exhaust outlet of the operation medium supply branch, the heat exchanger air inlet pipe being provided with a heat medium channel air inlet volume adjusting device for the heat exchange branch and the cooling branch, and the air inlet of the operation medium supply branch being connected to the exhaust outlet of the bag dust collector;
or is a third operation medium supply branch composed of a first heat exchanger, a second heat exchanger, a condenser, and a heater, a heat medium channel inlet of the first heat exchanger being an air inlet of the operation medium supply branch, an outlet of the heater being an exhaust outlet of the operation medium supply branch, an air flow channel of the operation medium supply branch being formed by the heat medium channel of the first heat exchanger, a heat medium channel of the second heat exchanger, a heat medium channel of the condenser, an air duct, a refrigerant channel of the second heat exchanger, and a refrigerant channel of the heater connected sequentially, a refrigerant channel of the condenser being an evaporator of a heat pump, a heat medium channel of the heater being a condenser of the heat pump, and the air inlet of the operation medium supply branch being connected to the exhaust outlet of the bag dust collector;
or is a fourth operation medium supply branch composed of a first heat exchanger, a second heat exchanger, a condenser, a heater, and a radiator, a heat medium channel inlet of the first heat exchanger being an air inlet of the operation medium supply branch, an outlet of the heater being an exhaust outlet of the operation medium supply branch, an air flow channel of the operation medium supply branch being formed by the heat medium channel of the first heat exchanger, a heat medium channel of the second heat exchanger, a heat medium channel of the condenser, an air duct, a refrigerant channel of the second heat exchanger, and a refrigerant channel of the heater connected sequentially, a refrigerant channel of the condenser being an evaporator of a heat pump, a heat medium channel of the heater being a condenser of the heat pump, a compressor exhaust pipe of the heat pump being provided with a switching valve to divide the exhaust pipe into two branches, a first branch entering the heater and then leading to the radiator, a second branch being in communication with a first branch coming out of the heater, the air duct being provided with a pipeline with valves connected to the outlet of the heater, and the air inlet of the operation medium supply branch being connected to the exhaust outlet of the bag dust collector;
or a fifth operation medium supply branch that is a heater for heating an operation medium;
or a sixth operation medium supply branch that is a cooler for cooling the operation medium.

8. The circulating mill according to claim 5, wherein the fourth circulating mill is provided with a first optical device composed of a tee joint, a light source, a reflector, and a dust-proof fan, an opening of the tee joint being connected to the outlet of the circulating mill main engine, a second opening being connected to the air inlet of the cyclone dust collector, the light source being disposed in a third opening of the tee joint, the third opening of the tee joint being connected to an exhaust outlet of the dust-proof fan, an inlet of the dust-proof fan being in communication with an air purification chamber of the bag dust collector, and the reflector being configured to concentrate light on fluidized materials;
or a second optical device composed of a tee joint, a light source, a reflector, and a dust-proof fan, an opening of the tee joint being connected to the exhaust outlet of the cyclone dust collector, a second opening being connected to the air inlet of the bag dust collector, the light source being disposed in a third opening of the tee joint, the third opening of the tee joint being connected to an exhaust outlet of the dust-proof fan, an inlet of the dust-proof fan being in communication with an air purification chamber of the bag dust collector, and the reflector being configured to concentrate light on fluidized materials;
or a third optical device composed of a cross joint, a light source, a reflector, and a dust-proof fan, an opening of the cross joint being connected to the outlet of the circulating mill main engine, a second opening being connected to the air inlet of the cyclone dust collector, the light source being disposed in a third opening and a fourth opening of the cross joint, the third opening and the fourth opening of the cross joint being connected to an exhaust outlet of the dust-proof fan, an inlet of the dust-proof fan being in communication with an air purification chamber of the bag dust collector, and the reflector being configured to concentrate light on fluidized materials;
or a fourth optical device composed of a cross joint, a light source, a reflector, and a dust-proof fan, an opening of the cross joint being connected to the exhaust outlet of the cyclone dust collector, a second opening being connected to the air inlet of the bag dust collector, the light source being disposed in a third opening and a fourth opening of the cross joint, the third opening and the fourth opening of the cross joint being connected to an exhaust outlet of the dust-proof fan, an inlet of the dust-proof fan being in communication with an air purification chamber of the bag dust collector, and the reflector being configured to concentrate light on fluidized materials;
or a fifth optical device that is a light source disposed in the air inlet of the outer circulation pipe and a reflector, the reflector being configured to concentrate light on fluidized materials;
or a sixth optical device that is a light source disposed in the exhaust outlet of the bag dust collector;
or a seventh optical device that is a light source disposed in the operation medium supply branch;
or the first or second or third or fourth circulating mill comprises a sound generator disposed on the circulating mill main engine and/or the accessory device.

9. An application method of a circulating mill, wherein the circulating mill has a variety of configuration manners, which can meet processing requirements of different materials, and a typical configuration manner is as follows:
a first configured circulating mill is the fourth circulating mill according to claim 5, and a circulating mill main engine is the second circulating mill main engine according to claim 3;
a second configured circulating mill is the fourth circulating mill according to claim 5, and a circulating mill main engine is the second circulating mill main engine according to claim 3, and an accessory device is provided with the third feeding device according to claim 6;
a third configured circulating mill is the first circulating mill according to claim 5, and a circulating mill main engine is the fourth circulating mill main engine according to claim 3;
a fourth configured circulating mill is the fourth circulating mill according to claim 5, and a circulating mill main engine is the second circulating mill main engine according to claim 3, and the accessory device is provided with the second feeding device and the second return device according to claim 6 and the fourth operation medium supply branch according to claim 7;
a fifth configured circulating mill is the fourth circulating mill according to claim 5, and a circulating mill main engine is the sixth circulating mill main engine according to claim 3, and the primary and secondary mills are provided with the B-type third kinetic energy recovery impeller according to claim 2, and the accessory device is provided with the fifth operation medium supply branch according to claim 7;
a sixth configured circulating mill is the third circulating mill according to claim 5, and a circulating mill main engine is the sixth circulating mill main engine according to claim 3, and the primary and secondary mills are provided with the B-type third kinetic energy recovery impeller according to claim 2, and an outer circulation pipe of the accessory device is provided with the mill according to claim 6;
the application method of the circulating mill comprises:
(1) a preparation method of plant fresh fruit powder by using a circulating mill, performed according to following steps:
S1: washing fresh plants; and
S2: adding materials treated in S1 into the first configured circulating mill to make dry powder;
or (2) a method for spray drying by using a circulating mill, in which materials are added to the second configured circulating mill, and dry powder is discharged from a main discharge port;
or (3) a processing method of feedstuff by using a circulating mill, performed according to following steps:
S1: preparation of raw material powder: adding feeding raw materials into the fifth configured circulating mill for processing to obtain dry feeding raw material powder; and
S2: preparation of feedstuff: making the feeding raw material powder obtained in S1 into feedstuff;
or (4) a method for improving nutrient output of cultivated land, performed according to following steps:
S1: seed selection: selecting suitable crop varieties based on unit yield, crop growth period, and plant nutrient content;
S2: determination of the harvest time: determining the harvest time by maximizing "the harvest times in a year × nutrient yield per unit area"; the nutrient yield per unit area being the total amount of nutrients in the crop plant obtained from the previous harvest per unit planting area;
S3:management measures: timely harvesting and timely sowing;
S4: processing:
S401: squeezing and dewatering: reducing the water content of harvested crops to less than 70% by squeezing and dewatering;
S402: drying and powder-making: making a materials obtained in S401 into powder by using the fifth configured circulating mill;
S5: utilization: using the powder processed in S4 as raw food materials or feedstuff;
or (5) a pharmaceutical with volatile components as functional ingredients and a method for preparation and development thereof, performed according to following steps:
S1: large-scale preparation of volatile components: adding raw materials to the fourth configured circulating mill, and condensing, by the operating medium supply branch, gasified volatile components in the materials into liquid for discharge, so as to obtain liquid materials rich in volatile components;
S2: separating and purifying the liquid materials rich in volatile components made in S1, to obtain materials with medicinal value;
S3: making the materials with medicinal value made in S2 into drugs, or studying the materials with medicinal value made in S2, and developing new drugs;
or (6) a method of simultaneously preparing volatile components in powder and powder feedstock, the preparation method includes adding raw materials to the fourth configured circulating mill, the processed powder is discharged from a main discharge port, changing the volatile components in the materials into a gaseous state during processing, and condensing, by the operation medium supply branch, the gaseous volatile components into liquid materials;
or (7) a method for extracting volatile components from materials and a product processed by same, performed according to following steps:
adding raw materials to the fourth configured circulating mill, and condensing, by the operation medium supply branch, gaseous materials formed by gasification of the volatile components into liquid materials;
or (8) a preparation method of a plant dew beverage, performed according to following steps:
S1: preparation of plant dew: removing impurities from fresh plants, washing them and adding them to the fourth configured circulating mill, and condensing, by the operation medium supply branch, gaseous water and gaseous volatile components formed by gasification of water and volatile components in the materials into liquid to obtain plant dew;
S2: beverage production: processing the plant dew obtained in step S1 into a plant dew beverage;
or (9) a crude oil distillation method, performed according to following steps:
adding crude oil to a second configured circulating mill, and condensing, by the operation medium supply branch, gasified volatile components in the crude oil into liquid to obtain distillate;
or (10) a method for producing sulfur-free konjac powder, comprises:
a first method, performed according to following steps:
S1: pre-processing of commodity fresh konjac:
S101: washing and peeling;
S102: cutting: cutting the konjac treated in S101 into pieces, wherein the pieces need not be regular, but the konjac with defects of bud eyes, insect holes, different color spots, plant root spots, root holes and wormholes is cut together, and the konjac without defects is cut together;
S103: grading: grading the cut konjac pieces while the konjac is cut into pieces, with the defective ones as one grade and the non-defective ones as another grade;
S2: customization of an operation medium: adjusting the operation medium to include an oxygen component of less than 7%;
S3: drying and powder-making: adding the konjac pieces of two grades processed in S1 to the fourth configured circulating mill to make sulfur-free konjac powder;
or a second method, performed according to following steps:
S1: pre-processing of commodity fresh konjac:
S101: washing and peeling;
S102: cutting: cutting the konjac treated in S101 into pieces, wherein the pieces need not be regular, but the konjac with defects of bud eyes, insect holes, different color spots, plant root spots, root holes and wormholes is cut together, and the konjac without defects is cut together;
S103: grading: grading the cut konjac pieces while the konjac is cut into pieces, with the defective ones as one grade and the non-defective ones as another grade;
S104: squeezing and dewatering: reducing the water content of the konjac pieces graded in S103 to less than 75% by squeezing and dewatering;
S2: customization of an operation medium: adjusting the operation medium to include an oxygen component of less than 10%;
S3: drying and powder-making: adding the konjac pieces of two grades processed in S1 to the fourth configured circulating mill to make sulfur-free konjac powder;
or (11) a method for producing starch, performed according to following steps:
S1: pre-processing: removing impurities from raw materials and washing the raw materials;
S2: drying and powder-making: adding the materials processed in step S1 to a first configured circulating mill to make powder;
S3: starch separation: mixing the powder made in S2 with water for full agitation, and separating the starch after settling to obtain wet starch;
S4: adding the wet starch obtained in S3 to the fourth configured circulating mill for drying to obtain starch;
or (12) a processing and utilization method of fertilizers, performed according to following steps:
S1: preparation of fertilizer raw materials: making raw materials into powder by using a first configured circulating mill to obtain fertilizer raw material powder; or adding raw materials and other ingredients to the third configured circulating mill to make them into powder to obtain fertilizer raw material powder;
S2: utilization: using the fertilizer raw materials processed in step S1 as fertilizers; or processing the fertilizer raw material powder processed in step S2 into fertilizers;
or (13) a preparation method for barley seedling powder, performed according to following steps:
S1: pre-processing: removing impurities from harvested fresh barley seedlings and washing them;
S2: drying and powder-making: adding the barley seedlings processed in step S1 to the fourth configured circulating mill to make them into powder;
Or (14) a processing method for hemp seed protein powder, performed according to following steps:
S1: pre-processing: shelling hemp seed for oil manufacture;
S2: preparation of protein powder: making the materials processed in S1 into powder by using the fourth configured circulating mill;
Or (15) a processing and utilization method of hemp stem powder, performed according to following steps:
S1: pre-processing: cutting hemp stem; or pre-crushing hemp stem into a length of 200mm, and peeling the hemp stem; or peeling hemp stem and then pre-crushing the hemp stem into a length of 200mm;
S2: preparation of hemp stem powder: making the materials treated in S1 into powder by using the third configured circulating mill to obtain hemp stem powder;
S3: utilization of hemp stem powder: pressing the hemp stem powder processed in S2 into profiles; or using the hemp stem powder processed in S2 as toothpaste fillers; or adding excipients to the hemp stem powder processed in S2 and pressing them to make profiles;
or (16) a method for primary processing of hemp flower and leaf in a production area, the method includes drying and pulverizing fresh hemp flower and leaf by using a fourth configured circulating mill to obtain hemp flower and leaf powder;
or (17) a preparation method for dry granulation raw material powder, performed according to following steps:
adding raw materials to the fourth configured circulating mill to simultaneously complete grinding, mixing, and drying to obtain raw material powder required by dry granulation;
or (18) a processing method of fish powder, the method includes adding fresh fish to the fourth configured circulating mill to make powder;
or (19) a processing method of feeding bone powder, the method includes adding fresh bone to the fourth configured circulating mill to make powder;
or (20) a preparation method of extract, wherein
a method comprises following steps:
S1: preparation of raw material powder: making extracted fresh raw materials into powder by using the fourth configured circulating mill;
S2: preparing an extracting solution,
S201: mixing the powder obtained in S1 with a solvent to dissolve extract, to obtain mixture slurry of an extracting solution and slag;
S202: separation of the slag and the extracting solution: separating the mixture slurry made in S201 to obtain the extracting solution and the slag;
S3: drying of the extracting solution: drying the extracting solution made in S2 by using the second configured circulating mill to obtain extract;
or a second method comprises following steps:
S1: preparation of raw material powder: making extracted fresh raw materials into powder by using the fourth configured circulating mill;
S2: preparing an extracting solution,
S201: mixing the powder obtained in S1 with a solvent to dissolve extract, to obtain mixture slurry of an extracting solution and slag;
S202: separation of the slag and the extracting solution: separating the mixture slurry made in S201 to obtain the extracting solution and the slag;
S203: extraction of residual extract from slag: mixing the slag obtained in S202 with a solvent to dissolve residual extract in the slag, to obtain mixture slurry of an extracting solution and slag; separating the slag and the extracting solution by using the method in S202; repeating step S203, till the residual extract in the slag is no longer economically valuable to extract;
S3: drying of the extracting solution: drying the extracting solution made in S2 by using the second configured circulating mill to obtain extract;
or a third method comprises following steps:
S1: preparation of raw material powder: making fresh raw materials into powder by using the fourth configured circulating mill;
S2: preparing an extracting solution;
S201: mixing the powder obtained in S1 with a solvent to dissolve extract, to obtain mixture slurry of an extracting solution and slag;
S202: separation of the slag and the extracting solution: separating the mixture slurry made in S201 to obtain the extracting solution and the slag;
S203: extraction of residual extract from slag: mixing the slag obtained in S202 with a solvent to dissolve residual extract in the slag, to obtain mixture slurry of an extracting solution and slag; separating the slag and the extracting solution by using the method in S202; repeating step S203, till the residual extract in the slag is no longer economically valuable to extract;
S204: purification of the extracting solution: removing impurities from the extracting solution and purifying the extracting solution;
S3: drying of the extracting solution: drying the extracting solution made in S2 by using the second configured circulating mill to obtain extract;
or a fourth method comprises following steps:
S1: preparation of raw material powder: making extracted fresh raw materials into powder by using the fourth configured circulating mill;
S2: preparing an extracting solution,
S201: mixing the powder obtained in S1 with a solvent to dissolve extract, to obtain mixture slurry of an extracting solution and slag;
S202: separation of the slag and the extracting solution: separating the mixture slurry made in S201 to obtain the extracting solution and the slag;
S203: extraction of residual extract from slag: mixing the slag obtained in S202 with a solvent to dissolve residual extract in the slag, to obtain mixture slurry of an extracting solution and slag; separating the slag and the extracting solution by using the method in S202; repeating step S203, till the residual extract in the slag is no longer economically valuable to extract;
S204: purification of the extracting solution: removing impurities from the extracting solution and purifying the extracting solution;
S3: drying of the extracting solution: drying the extracting solution made in S2 by using the second configured circulating mill to obtain extract; and
S4: drying of the slag: making the slag made in S2 into powder by using the fourth configured circulating mill;
or (21) a processing method of forage grass, the method includes making fresh forage grass or forage grass naturally dried for 1 to 5 days into powder by using the fifth configured circulating mill;
or (22) a preparation method of mineral powder and a product processed by same, the method is performed according to following steps: adding raw mineral materials to the sixth configured circulating mill through the feeding port of the mineral mill, pre-crushing, by the mill, the materials into coarse powder, driving, by an air flow in the outer circulation pipe, the coarse powder into the circulating mill main engine to be further crushed into fine powder, collecting fine powder with a required particle size separated out and entering the bag dust collector with the air flow to obtain mineral powder;
or (23) a preparation method of perfume using plant aroma as functional components, the method is performed according to following steps:
S1: preparation of cell fluid: adding fresh plants to the fourth configured circulating mill for processing, and condensing, by the operation medium supply branch, gaseous water and gaseous volatile components formed by gasification of water and volatile components in the materials to obtain cell fluid;
S2: preparation of perfume: making the cell fluid obtained in S2 into perfume;
or (24) a preparation method of fresh corn flour, the method includes:
S1: harvesting fresh corn and choosing fresh and tender corn to harvest;
S2: shelling and threshing: shelling and threshing the fresh tender corn harvested in step S1 to obtain fresh corn kernels;
S3: preparation of fresh corn flour: adding the fresh corn kernels prepared in step S2 to the fourth configured circulating mill to make fresh corn flour;
or (25) a preparation method of fresh bean flour and a product processed by same, the method includes:
S1: harvesting fresh beans and choosing fresh beans near the end of a grain-filling period to harvest;
S2: shelling: shelling the fresh beans harvested in step S1 to obtain fresh bean kernels;
S3: preparation of fresh bean flour: adding the fresh bean kernels prepared in step S2 to the fourth configured circulating mill to make fresh bean flour;
or (26) a preparation method of fresh wheat flour, the method includes:
S1: harvesting fresh wheatears and choosing fresh wheatears near the end of a grain-filling period to harvest;
S2: shelling: shelling the wheatears harvested in step S1 to obtain fresh wheat grains;
S3: preparation of fresh wheat flour: adding the fresh wheat grains prepared in step S2 to the fourth configured circulating mill to make fresh wheat flour;
or (27) a preparation method of fresh rice flour, the method includes:
S1: harvesting rice and choosing rice near the end of a grain-filling period to harvest;
S2: preparation of rice milk: removing rice milk from the rice harvested in step S1;
S3: drying of the rice milk: adding the rice milk prepared in step S2 to the fourth configured circulating mill to make fresh rice flour;
or (28) a preparation method of potato powder, the method includes: controlling the oxygen content of an operation medium to less than 8%, washing, peeling or unpeeling potatoes, and adding the potatoes to the fourth configured circulating mill to make dry powder;
or (29) a preparation method of pumpkin powder, the method includes: washing and peeling pumpkin, removing pulp, and adding the pumpkin to the fourth configured circulating mill to make dry powder;
or (30) a preparation method of tomato powder, the method includes: washing fresh tomatoes, and adding the tomatoes to the fourth configured circulating mill to make dry powder;
or (31) a preparation method of green onion powder, the method includes:
washing fresh green onion, and adding the green onion to the fourth configured circulating mill to make dry powder;
or (32) a preparation method of ginger powder, the method includes: washing fresh ginger, peeling or unpeeling gingers, and adding the ginger to the fourth configured circulating mill to make dry powder;
or (33) a preparation method of cucumber powder, the method includes:
washing fresh cucumber, and adding the cucumber to the fourth configured circulating mill to make dry powder;
or (34) a preparation method of watermelon powder, the method includes:
peeling fresh watermelon, and adding the watermelon to the fourth configured circulating mill to make dry powder;
or (35) a preparation method of pepper powder, the method includes: washing fresh pepper, and adding the pepper to the fourth configured circulating mill to make dry powder;
or (36) a preparation method of garlic bolt powder, the method includes:
washing fresh garlic bolt, and adding the garlic bolt to the fourth configured circulating mill to make dry powder;
or (37) a preparation method of cabbage powder, the method includes: washing fresh cabbage, and adding the cabbage to the fourth configured circulating mill to make dry powder;
or (38) a preparation method of bitter cabbage powder, the method includes:
washing fresh bitter cabbage, and adding the bitter cabbage to the fourth configured circulating mill to make dry powder;
or (39) a preparation method of carrot powder, the method includes: washing fresh carrot, and adding the carrot to the fourth configured circulating mill to make dry powder;
or (40) a preparation method of tea powder, the method includes: washing fresh tea, and adding the tea to the fourth configured circulating mill to make dry powder;
or (41) a preparation method of edible rose powder, the method includes:
washing fresh rose, and adding the rose to the fourth configured circulating mill to make dry powder;
or (42) a preparation method of rose cell fluid, the method includes: adding rose to the fourth configured circulating mill, and condensing, by the operation medium supply branch, vaporized moisture and rose scent into liquid;
or (43) a preparation method of fresh maca powder and maca glucosinolates, the method is performed according to following steps:
S1: washing fresh maca and adding the maca to the fourth configured circulating mill;
S2: collecting fresh maca powder by the bag dust collector, and collecting maca cell fluid by the operation medium supply branch;
S3: purifying the maca cell fluid obtained in S2 to obtain maca glucosinolates. Fresh maca powder is made using the method;
or (44) a preparation method of coffee powder, the method includes:adding the coffee beans to the fourth configured circulating mill to make dry powder;
or (45) a preparation method of instant coffee, the method includes:
S1: preparation of coffee powder: adding fresh or dried coffee beans to the fourth configured circulating mill to make dry powder;
S2: preparation of coffee liquid: adding the coffee powder obtained in S1 to water, to dissolve soluble components in the coffee powder into the water to obtain mixture slurry of coffee liquid and coffee grounds, and filtering the mixture slurry to obtain the coffee liquid;
S3: drying and powder-making of the coffee liquid: adding the coffee liquid obtained in S2 to the second configured circulating mill to make dry powder to obtain instant coffee;
or (46) a preparation method of milk powder, the method includes: adding emulsion to the second configured circulating mill to make milk powder;
or (47) a preparation method of soybean milk powder, the method includes:
adding soybean milk to the second configured circulating mill to make soybean milk powder;
or (48) a preparation method of Chinese herbal medicine powder and Chinese herbal medicine cell fluid , the method includes: washing fresh Chinese herbal medicines and adding them to the fourth configured circulating mill, discharging dry Chinese herbal medicine powder from a main discharge port, and collecting Chinese herbal medicine cell fluid by the operation medium supply branch;
or (49) a preparation method of ginseng powder and ginseng cell fluid, the method includes: washing fresh ginseng and adding it to the fourth configured circulating mill to make dry powder, and collecting ginseng cell fluid by the operation medium supply branch;
or (50) a preparation method of radix linderae powder and radix linderae cell fluid, the method includes: washing fresh radix linderae and adding it to the fourth configured circulating mill to make dry powder, and collecting radix linderae cell fluid by the operation medium supply branch;
or (51) a preparation method of atractylodes powder and atractylodes cell fluid, the method includes: washing fresh atractylodes and adding it to the fourth configured circulating mill to make dry powder, and collecting atractylodes cell fluid by the operation medium supply branch;
or (52) a preparation method of radix paeoniae alba powder and radix paeoniae alba cell fluid, the method includes: washing fresh radix paeoniae alba and adding it to the fourth configured circulating mill to make dry powder, and collecting radix paeoniae alba cell fluid by the operation medium supply branch;
or (53) a preparation method of fritillaria powder and fritillaria cell fluid, the method includes: washing fresh rfritillaria and adding it to the fourth configured circulating mill to make dry powder, and collecting fritillaria cell fluid by the operation medium supply branch;
or (54) a preparation method of hyacinth bletilla powder and hyacinth bletilla cell fluid, the method includes: washing fresh hyacinth bletilla and adding it to the fourth configured circulating mill to make dry powder, and collecting hyacinth bletilla cell fluid by the operation medium supply branch;
or (55) a preparation method of American ginseng powder and American ginseng cell fluid, the method includes: washing fresh American ginseng and adding it to the fourth configured circulating mill to make dry powder, and collecting American ginseng cell fluid by the operation medium supply branch;
or (56) a preparation method of red ginseng powder and red ginseng cell fluid, the method includes: washing fresh red ginseng and adding it to the fourth configured circulating mill to make dry powder, and collecting red ginseng cell fluid by the operation medium supply branch;
or (57) a preparation method of Chinese yam powder and Chinese yam cell fluid, the method includes: washing fresh Chinese yam and adding it to the fourth configured circulating mill to make dry powder, and collecting Chinese yam cell fluid by the operation medium supply branch;
or (58) a preparation method of chrysanthemum morifolium ramat powder and chrysanthemum morifolium ramat cell fluid, the method includes: washing fresh chrysanthemum morifolium ramat and adding it to the fourth configured circulating mill to make dry powder, and collecting chrysanthemum morifolium ramat cell fluid by the operation medium supply branch;
or (59) a preparation method of rhizoma corydalis powder and rhizoma corydalis cell fluid, the method includes: washing fresh rhizoma corydalis and adding it to the fourth configured circulating mill to make dry powder, and collecting rhizoma corydalis cell fluid by the operation medium supply branch;
or (60) a preparation method of radix scrophulariae powder and radix scrophulariae cell fluid, the method includes: washing fresh radix scrophulariae and adding it to the fourth configured circulating mill to make dry powder, and collecting radix scrophulariae cell fluid by the operation medium supply branch;
or (61) a preparation method of radix ophiopogonis powder and radix ophiopogonis cell fluid, the method includes: washing fresh radix ophiopogonis and adding it to the fourth configured circulating mill to make dry powder, and collecting radix ophiopogonis cell fluid by the operation medium supply branch;
or (62) a preparation method of radix curcumae powder and radix curcumae cell fluid, the method includes: washing fresh radix curcumae and adding it to the fourth configured circulating mill to make dry powder, and collecting radix curcumae cell fluid by the operation medium supply branch;
or (63) a preparation method of notoginseng powder and notoginseng cell fluid, the method includes: washing fresh notoginseng and adding it to the fourth configured circulating mill to make dry powder, and collecting notoginseng cell fluid by the operation medium supply branch;
or (64) a preparation method of pine needles powder and pine needles cell fluid, the method includes: washing fresh pine needles and adding it to the fourth configured circulating mill to make dry powder, and collecting pine needles cell fluid by the operation medium supply branch;
or (65) a preparation method of pea powder and pea cell fluid, the method includes: washing fresh pea and adding it to the fourth configured circulating mill to make dry powder, and collecting pea cell fluid by the operation medium supply branch;
or (66) a preparation method of notoginseng flower powder and notoginseng flower cell fluid, the method includes: washing fresh notoginseng flower and adding it to the fourth configured circulating mill to make dry powder, and collecting notoginseng flower cell fluid by the operation medium supply branch;
or (67) a preparation method of notoginseng leaf powder and notoginseng leaf cell fluid, the method includes: washing fresh notoginseng leaf and adding it to the fourth configured circulating mill to make dry powder, and collecting notoginseng leaf cell fluid by the operation medium supply branch;
or (68) a preparation method of gastrodia elata powder and gastrodia elata cell fluid, the method includes: washing fresh gastrodia elata and adding it to the fourth configured circulating mill to make dry powder, and collecting gastrodia elata cell fluid by the operation medium supply branch;
or (69) a preparation method of erigeron breviscapus powder and erigeron breviscapus cell fluid, the method includes: washing fresh erigeron breviscapus and adding it to the fourth configured circulating mill to make dry powder, and collecting erigeron breviscapus cell fluid by the operation medium supply branch;
or (70) a preparation method of caulis dendrobii powder and caulis dendrobii cell fluid, the method includes: washing fresh caulis dendrobii and adding it to the fourth configured circulating mill to make dry powder, and collecting caulis dendrobii cell fluid by the operation medium supply branch;
or (71) a preparation method of radix angelicae sinensis powder and radix angelicae sinensis cell fluid, the method includes: washing fresh radix angelicae sinensis and adding it to the fourth configured circulating mill to make dry powder, and collecting radix angelicae sinensis cell fluid by the operation medium supply branch;
or (72) a preparation method of magnolia officinalis powder and magnolia officinalis cell fluid, the method includes: washing fresh magnolia officinalis and adding it to the fourth configured circulating mill to make dry powder, and collecting magnolia officinalis cell fluid by the operation medium supply branch;
or (73) a preparation method of radix scutellariae powder and radix scutellariae cell fluid, the method includes: washing fresh radix scutellariae and adding it to the fourth configured circulating mill to make dry powder, and collecting radix scutellariae cell fluid by the operation medium supply branch;
or (74) a preparation method of amomum villosum powder and amomum villosum cell fluid, the method includes: washing fresh amomum villosum fruit and adding it to the fourth configured circulating mill to make dry powder, and collecting amomum villosum cell fluid by the operation medium supply branch;
or (75) a preparation method of polygonum multiflorum powder and polygonum multiflorum cell fluid, the method includes: washing fresh polygonum multiflorum and adding it to the fourth configured circulating mill to make dry powder, and collecting polygonum multiflorum cell fluid by the operation medium supply branch;
or (76) a preparation method of resina draconis powder and resina draconis cell fluid, the method includes: washing fresh resina draconis and adding it to the fourth configured circulating mill to make dry powder, and collecting resina draconis cell fluid by the operation medium supply branch;
or (77) a preparation method of radix aconiti brachypodi powder and radix aconiti brachypodi cell fluid, the method includes: washing fresh radix aconiti brachypodi and adding it to the fourth configured circulating mill to make dry powder, and collecting radix aconiti brachypodi cell fluid by the operation medium supply branch;
or (78) a preparation method of common alstonia leaf powder and common alstonia leaf cell fluid, the method includes: washing fresh common alstonia leaf and adding it to the fourth configured circulating mill to make dry powder, and collecting common alstonia leaf cell fluid by the operation medium supply branch;
or (79) a preparation method of kusnezoff monkshood root powder and kusnezoff monkshood root cell fluid, the method includes: washing fresh kusnezoff monkshood root and adding it to the fourth configured circulating mill to make dry powder, and collecting kusnezoff monkshood root cell fluid by the operation medium supply branch;
or (80) a preparation method of pinellia powder and pinellia cell fluid, the method includes: washing fresh pinellia and adding it to the fourth configured circulating mill to make dry powder, and collecting pinellia cell fluid by the operation medium supply branch;
or (81) a preparation method of radix geutianae powder and radix geutianae cell fluid, the method includes: washing fresh radix geutianae and adding it to the fourth configured circulating mill to make dry powder, and collecting radix geutianae cell fluid by the operation medium supply branch;
or (82) a preparation method of eucommia powder and eucommia cell fluid, the method includes: washing fresh eucommia bark and adding it to the fourth configured circulating mill to make dry powder, and collecting rhizoma corydalis cell fluid by the operation medium supply branch;
or (83) a preparation method of radix saposhnikovia powder and radix saposhnikovia cell fluid, the method includes: washing fresh radix saposhnikovia and adding it to the fourth configured circulating mill to make dry powder, and collecting radix saposhnikovia cell fluid by the operation medium supply branch;
or (84) a preparation method of poria cocos powder and poria cocos cell fluid, the method includes: washing fresh poria cocos and adding it to the fourth configured circulating mill to make dry powder, and collecting poria cocos cell fluid by the operation medium supply branch;
or (85) a preparation method of honeysuckle powder and honeysuckle cell fluid, the method includes: washing fresh honeysuckle and adding it to the fourth configured circulating mill to make dry powder, and collecting honeysuckle cell fluid by the operation medium supply branch;
or (86) a preparation method of rhizoma polygonati powder and rhizoma polygonati cell fluid, the method includes: washing fresh rhizoma polygonati and adding it to the fourth configured circulating mill to make dry powder, and collecting rhizoma polygonati cell fluid by the operation medium supply branch;
or (87) a preparation method of cordyceps sinensis powder and cordyceps sinensis cell fluid, the method includes: washing fresh cordyceps sinensis and adding it to the fourth configured circulating mill to make dry powder, and collecting cordyceps sinensis cell fluid by the operation medium supply branch;
or (88) a preparation method of radix bupleuri powder and radix bupleuri cell fluid, the method includes: washing fresh radix bupleuri and adding it to the fourth configured circulating mill to make dry powder, and collecting radix bupleuri cell fluid by the operation medium supply branch;
or (89) a preparation method of radix codonopsis powder and radix codonopsis cell fluid, the method includes: washing fresh radix codonopsis and adding it to the fourth configured circulating mill to make dry powder, and collecting radix codonopsis cell fluid by the operation medium supply branch;
or (90) a preparation method of pepper powder and pepper cell fluid, the method includes: washing fresh pepper and adding it to the fourth configured circulating mill to make dry powder, and collecting peppers cell fluid by the operation medium supply branch;
or (91) a preparation method of radix isatidis powder and radix isatidiss cell fluid, the method includes: washing fresh radix isatidis and adding it to the fourth configured circulating mill to make dry powder, and collecting radix isatidis cell fluid by the operation medium supply branch;
or (92) a preparation method of aloe vera powder and aloe vera cell fluid, the method includes: washing fresh aloe vera and adding it to the fourth configured circulating mill to make dry powder, and collecting aloe vera cell fluid by the operation medium supply branch;
or (93) a preparation method of amomum powder and amomum cell fluid, the method includes: washing fresh amomum and adding it to the fourth configured circulating mill to make dry powder, and collecting amomum cell fluid by the operation medium supply branch;
or (94) a preparation method of rhizoma paridis powder and rhizoma paridis cell fluid, the method includes: washing fresh rhizoma paridis and adding it to the fourth configured circulating mill to make dry powder, and collecting rhizoma paridis cell fluid by the operation medium supply branch;
or (95) a preparation method of rhizoma ligustici wallichii powder and rhizoma ligustici wallichii cell fluid, the method includes: washing fresh rhizoma ligustici wallichii and adding it to the fourth configured circulating mill to make dry powder, and collecting rhizoma ligustici wallichii cell fluid by the operation medium supply branch;
or (96) a preparation method of cordate houttuynia powder and cordate houttuynia cell fluid, the method includes: washing fresh cordate houttuynia and adding it to the fourth configured circulating mill to make dry powder, and collecting cordate houttuynia cell fluid by the operation medium supply branch;
or (97) a preparation method of loquat leaf powder and loquat leaf cell fluid, the method includes: washing fresh loquat leaf and adding it to the fourth configured circulating mill to make dry powder, and collecting loquat leaf cell fluid by the operation medium supply branch;
or (98) a preparation method of croton powder and croton cell fluid, the method includes: washing freshcroton and adding it to the fourth configured circulating mill to make dry powder, and collecting croton cell fluid by the operation medium supply branch;
or (99) a preparation method of gallnut powder and gallnut cell fluid, the method includes: washing fresh gallnut and adding it to the fourth configured circulating mill to make dry powder, and collecting gallnut cell fluid by the operation medium supply branch;
or (100) a preparation method of cornus powder and cornus cell fluid, the method includes: washing fresh cornus and adding it to the fourth configured circulating mill to make dry powder, and collecting cornus cell fluid by the operation medium supply branch;
or (101) a preparation method of radix dipsaci powder and radix dipsacis cell fluid, the method includes: washing fresh radix dipsaci and adding it to the fourth configured circulating mill to make dry powder, and collecting radix dipsaci cell fluid by the operation medium supply branch;
or (102) a preparation method of rhodiola powder and rhodiola cell fluid, the method includes: washing fresh rhodiola and adding it to the fourth configured circulating mill to make dry powder, and collecting rhodiola cell fluid by the operation medium supply branch;
or (103) a preparation method of sea buckthorn powder powder and sea buckthorn powder cell fluid, the method includes: washing fresh sea buckthorn powder and adding it to the fourth configured circulating mill to make dry powder, and collecting sea buckthorn powder cell fluid by the operation medium supply branch;
or (104) a preparation method of desertliving cistanch powder and desertliving cistanch cell fluid, the method includes: washing fresh desertliving cistanch and adding it to the fourth configured circulating mill to make dry powder, and collecting desertliving cistanch cell fluid by the operation medium supply branch;
or (105) a preparation method of astragalus powder and astragalus cell fluid, the method includes: washing fresh astragalus and adding it to the fourth configured circulating mill to make dry powder, and collecting astragalus cell fluid by the operation medium supply branch;
or (106) a preparation method of licorice powder and licorice cell fluid, the method includes: washing fresh licorice and adding it to the fourth configured circulating mill to make dry powder, and collecting licorice cell fluid by the operation medium supply branch;
or (107) a preparation method of Chinese wolfberry powder and Chinese wolfberry cell fluid, the method includes: washing fresh Chinese wolfberry and adding it to the fourth configured circulating mill to make dry powder, and collecting Chinese wolfberry cell fluid by the operation medium supply branch;
or (108) a preparation method of spikenard powder and spikenard cell fluid, the method includes: washing fresh spikenard and adding it to the fourth configured circulating mill to make dry powder, and collecting spikenard cell fluid by the operation medium supply branch;
or (109) a preparation method of valerian powder and valerian cell fluid, the method includes: washing fresh valerian and adding it to the fourth configured circulating mill to make dry powder, and collecting valerian cell fluid by the operation medium supply branch;
or (110) a preparation method of red paeony root powder and red paeony root cell fluid, the method includes: washing fresh red paeony root and adding it to the fourth configured circulating mill to make dry powder, and collecting red paeony root cell fluid by the operation medium supply branch;
or (111) a preparation method of notopterygium powder and notopterygium cell fluid, the method includes: washing fresh notopterygium and adding it to the fourth configured circulating mill to make dry powder, and collecting notopterygium cell fluid by the operation medium supply branch;
or (112) a preparation method of selfheal powder and selfheal cell fluid, the method includes: washing fresh selfheal and adding it to the fourth configured circulating mill to make dry powder, and collecting selfheal cell fluid by the operation medium supply branch;
or (113) a preparation method of radix angelicae pubescentis powder and radix angelicae pubescentis cell fluid, the method includes: washing fresh radix angelicae pubescentis and adding it to the fourth configured circulating mill to make dry powder, and collecting radix angelicae pubescentis cell fluid by the operation medium supply branch;
or (114) a preparation method of lily powder and lily cell fluid, the method includes: washing fresh lily and adding it to the fourth configured circulating mill to make dry powder, and collecting lily cell fluid by the operation medium supply branch;
or (115) a preparation method of radix polygonati officinalis powder and radix polygonati officinalis cell fluid, the method includes: washing fresh radix polygonati officinalis and adding it to the fourth configured circulating mill to make dry powder, and collecting radix polygonati officinalis cell fluid by the operation medium supply branch;
or (116) a preparation method of gynostemma powder and gynostemma cell fluid, the method includes: washing fresh gynostemma and adding it to the fourth configured circulating mill to make dry powder, and collecting gynostemma cell fluid by the operation medium supply branch;
or (117) a preparation method of Chinese bulbul powder and Chinese bulbul cell fluid, the method includes: washing fresh Chinese bulbul and adding it to the fourth configured circulating mill to make dry powder, and collecting Chinese bulbul cell fluid by the operation medium supply branch;
or (118) a preparation method of cowherb seed powder and cowherb seed cell fluid, the method includes: washing fresh cowherb seed and adding it to the fourth configured circulating mill to make dry powder, and collecting cowherb seeds cell fluid by the operation medium supply branch;
or (119) a preparation method of fruit of Chinese magnoliavine powder and fruit of Chinese magnoliavine cell fluid, the method includes: washing fresh fruit of Chinese magnoliavine and adding it to the fourth configured circulating mill to make dry powder, and collecting fruit of Chinese magnoliavine cell fluid by the operation medium supply branch;
or (120) a preparation method of dodder powder and dodder cell fluid, the method includes: washing fresh dodder and adding it to the fourth configured circulating mill to make dry powder, and collecting dodder cell fluid by the operation medium supply branch;
or (121) a preparation method of hawthorn powder and hawthorn cell fluid, the method includes: washing fresh hawthorn and adding it to the fourth configured circulating mill to make dry powder, and collecting hawthorn cell fluid by the operation medium supply branch;
or (122) a preparation method of artemisinin powder and artemisinin cell fluid, the method includes: washing fresh artemisinin and adding it to the fourth configured circulating mill to make dry powder, and collecting artemisinin cell fluid by the operation medium supply branch;
or (123) a preparation method of cortex periploca powder and cortex periploca cell fluid, the method includes: washing fresh cortex periploca and adding it to the fourth configured circulating mill to make dry powder, and collecting cortex periploca cell fluid by the operation medium supply branch;
or (124) a preparation method of moringa fresh leaf powder and moringa leaf cell fluid, the method includes: washing fresh moringa leaf and adding it to the fourth configured circulating mill to make dry powder, and collecting moringa leaf cell fluid by the operation medium supply branch;
or (125) a preparation method of rhizoma zedoariae powder and rhizoma zedoariae cell fluid, the method includes: washing fresh rhizoma zedoariae and adding it to the fourth configured circulating mill to make dry powder, and collecting rhizoma zedoariae cell fluid by the operation medium supply branch;
or (126) a preparation method of gardenia powder and gardenia cell fluid, the method includes: washing fresh gardenia and adding it to the fourth configured circulating mill to make dry powder, and collecting gardenia cell fluid by the operation medium supply branch;
or (127) a preparation method of folium artemisiae argyi powder and folium artemisiae argyi cell fluid, the method includes: washing fresh folium artemisiae argyi and adding it to the fourth configured circulating mill to make dry powder, and collecting folium artemisiae argyi cell fluid by the operation medium supply branch;
or (128) a preparation method of cinnamon powder and cinnamon cell fluid, the method includes: washing fresh cinnamon and adding it to the fourth configured circulating mill to make dry powder, and collecting cinnamon cell fluid by the operation medium supply branch;
or (129) a preparation method of ageratum powder and ageratum cell fluid, the method includes: washing fresh ageratum and adding it to the fourth configured circulating mill to make dry powder, and collecting ageratum cell fluid by the operation medium supply branch;
or (130) a preparation method of fructus anisi stellati powder and fructus anisi stellati cell fluid, the method includes: washing fresh fructus anisi stellati and adding it to the fourth configured circulating mill to make dry powder, and collecting fructus anisi stellati cell fluid by the operation medium supply branch;
or (131) a preparation method of ganoderma lucidum powder and ganoderma lucidum cell fluid, the method includes: washing fresh ganoderma lucidum and adding it to the fourth configured circulating mill to make dry powder, and collecting ganoderma lucidum cell fluid by the operation medium supply branch;
or (132) a preparation method of sporoderm-broken ganoderma lucidum spore powder and ganoderma lucidum spore cell fluid, the method includes: washing fresh ganoderma lucidum spore spore and adding it to the fourth configured circulating mill to make sporoderm-broken ganoderma lucidum, and collecting ganoderma lucidum spore cell fluid by the operation medium supply branch;
or (133) a preparation method of wild fungus powder and wild fungus cell fluid, the method includes: washing fresh wild fungus and adding it to the fourth configured circulating mill to make dry powder, and collecting wild fungus cell fluid by the operation medium supply branch;
or (134) a preparation method of mushrooms powder and mushrooms cell fluid, the method includes: washing fresh mushrooms and adding it to the fourth configured circulating mill to make dry powder, and collecting mushrooms cell fluid by the operation medium supply branch;
or (135) a preparation method of stevia powder and stevia cell fluid, the method includes: washing fresh stevia and adding it to the fourth configured circulating mill to make dry powder, and collecting stevia cell fluid by the operation medium supply branch;
or (136) a preparation method of rhizoma acori tatarinowii powder and rhizoma acori tatarinowii cell fluid, the method includes: washing fresh rhizoma acori tatarinowii and adding it to the fourth configured circulating mill to make dry powder, and collecting rhizoma acori tatarinowii cell fluid by the operation medium supply branch;
or (137) a preparation method of radix puerariae powder and radix puerariae cell fluid, the method includes: washing fresh radix puerariae and adding it to the fourth configured circulating mill to make dry powder, and collecting radix puerariae cell fluid by the operation medium supply branch;
or (138) a preparation method of radix pseudostellariae powder and radix pseudostellariae cell fluid, the method includes: washing fresh radix pseudostellariae and adding it to the fourth configured circulating mill to make dry powder, and collecting radix pseudostellariae cell fluid by the operation medium supply branch;
or (139) a preparation method of phytolacca acinosa powder and phytolacca acinosa cell fluid, the method includes: washing fresh phytolacca acinosa and adding it to the fourth configured circulating mill to make dry powder, and collecting phytolacca acinosa cell fluid by the operation medium supply branch;
or (140) a preparation method of polygonum cuspidatum powder and polygonum cuspidatum cell fluid, the method includes: washing fresh polygonum cuspidatum and adding it to the fourth configured circulating mill to make dry powder, and collecting polygonum cuspidatum cell fluid by the operation medium supply branch;
or (141) a preparation method of rhubarb powder and rhubarb cell fluid, the method includes: washing fresh rhubarb and adding it to the fourth configured circulating mill to make dry powder, and collecting rhubarb cell fluid by the operation medium supply branch;
or (142) a preparation method of paniculate swallowwort root powder and paniculate swallowwort root cell fluid, the method includes: washing fresh paniculate swallowwort root and adding it to the fourth configured circulating mill to make dry powder, and collecting paniculate swallowwort root cell fluid by the operation medium supply branch;
or (143) a preparation method of motherwort powder and motherwort cell fluid, the method includes: washing fresh motherwort and adding it to the fourth configured circulating mill to make dry powder, and collecting motherwort cell fluid by the operation medium supply branch;
or (144) a preparation method of sophora powder and sophora cell fluid, the method includes: washing fresh sophora and adding it to the fourth configured circulating mill to make dry powder, and collecting sophora cell fluid by the operation medium supply branch;
or (145) a preparation method of chrysanthemum powder and chrysanthemum cell fluid, the method includes: washing fresh chrysanthemums and adding it to the fourth configured circulating mill to make dry powder, and collecting chrysanthemum cell fluid by the operation medium supply branch;
or (146) a preparation method of gordon euryale seed powder and gordon euryale seed cell fluid, the method includes: washing fresh gordon euryale seed and adding it to the fourth configured circulating mill to make dry powder, and collecting gordon euryale seed cell fluid by the operation medium supply branch;
or (147) a preparation method of tribulus terrestris powder and tribulus terrestris cell fluid, the method includes: washing fresh tribulus terrestris and adding it to the fourth configured circulating mill to make dry powder, and collecting tribulus terrestris cell fluid by the operation medium supply branch;
or (148) a preparation method of rhizoma bistortae powder and rhizoma bistortae cell fluid, the method includes: washing fresh rhizoma bistortae and adding it to the fourth configured circulating mill to make dry powder, and collecting rhizoma bistortae cell fluid by the operation medium supply branch;
or (149) a preparation method of rhizoma drynariae powder and rhizoma drynariae cell fluid, the method includes: washing fresh rhizoma drynariae and adding it to the fourth configured circulating mill to make dry powder, and collecting rhizoma drynariae cell fluid by the operation medium supply branch;
or (150) a preparation method of herba artemisiae scopariae powder and herba artemisiae scopariae cell fluid, the method includes: washing fresh herba artemisiae scopariae and adding it to the fourth configured circulating mill to make dry powder, and collecting herba artemisiae scopariae cell fluid by the operation medium supply branch;
or (151) a preparation method of fructus arctii powder and fructus arctii cell fluid, the method includes: washing fresh fructus arctii and adding it to the fourth configured circulating mill to make dry powder, and collecting fructus arctii cell fluid by the operation medium supply branch;
or (152) a preparation method of forsythia powder and forsythia cell fluid, the method includes: washing fresh forsythia and adding it to the fourth configured circulating mill to make dry powder, and collecting forsythia cell fluid by the operation medium supply branch;
or (153) a preparation method of herba schizonepetae powder and herba schizonepetae cell fluid, the method includes: washing fresh herba schizonepetae and adding it to the fourth configured circulating mill to make dry powder, and collecting herba schizonepetae cell fluid by the operation medium supply branch;
or (154) a preparation method of uncaria powder and uncaria cell fluid, the method includes: washing fresh uncaria and adding it to the fourth configured circulating mill to make dry powder, and collecting uncaria cell fluid by the operation medium supply branch;
or (155) a preparation method of daphne genkwa powder and daphne genkwa cell fluid, the method includes: washing fresh daphne genkwa and adding it to the fourth configured circulating mill to make dry powder, and collecting daphne genkwa cell fluid by the operation medium supply branch;
or (156) a preparation method of mint powder and mint cell fluid, the method includes: washing fresh mint and adding it to the fourth configured circulating mill to make dry powder, and collecting mint cell fluid by the operation medium supply branch;
or (157) a preparation method of coix seed powder and coix seed cell fluid, the method includes: washing fresh coix seed and adding it to the fourth configured circulating mill to make dry powder, and collecting coix seed cell fluid by the operation medium supply branch;
or (158) a preparation method of fructus xanthii powder and fructus xanthii cell fluid, the method includes: washing fresh fructus xanthii and adding it to the fourth configured circulating mill to make dry powder, and collecting fructus xanthii cell fluid by the operation medium supply branch;
or (159) a preparation method of rhizoma arisaematis powder and rhizoma arisaematis cell fluid, the method includes: washing fresh rhizoma arisaematis and adding it to the fourth configured circulating mill to make dry powder, and collecting rhizoma arisaematis cell fluid by the operation medium supply branch;
or (160) a preparation method of radix fici hirtae powder and radix fici hirtae cell fluid, the method includes: washing fresh radix fici hirtae and adding it to the fourth configured circulating mill to make dry powder, and collecting radix fici hirtae cell fluid by the operation medium supply branch;
or (161) a preparation method of sargentodoxa cuneata powder and sargentodoxa cuneata cell fluid, the method includes: washing fresh sargentodoxa cuneata and adding it to the fourth configured circulating mill to make dry powder, and collecting sargentodoxa cuneata cell fluid by the operation medium supply branch;
or (162) a preparation method of lysimachia christinae hance powder and lysimachia christinae hance cell fluid, the method includes: washing fresh lysimachia christinae hance and adding it to the fourth configured circulating mill to make dry powder, and collecting lysimachia christinae hance cell fluid by the operation medium supply branch;
or (163) a preparation method of raspberry powder and raspberry cell fluid, the method includes: washing fresh raspberry and adding it to the fourth configured circulating mill to make dry powder, and collecting raspberry cell fluid by the operation medium supply branch;
or (164) a preparation method of dogbane leaf powder and dogbane leaf cell fluid, the method includes: washing fresh dogbane leaf and adding it to the fourth configured circulating mill to make dry powder, and collecting dogbane leaf cell fluid by the operation medium supply branch;
or (165) a preparation method of radix ranunculi ternati powder and radix ranunculi ternati cell fluid, the method includes: washing fresh radix ranunculi ternati and adding it to the fourth configured circulating mill to make dry powder, and collecting radix ranunculi ternati cell fluid by the operation medium supply branch;
or (166) a preparation method of semen cassiae powder and semen cassiae cell fluid, the method includes: washing fresh semen cassiae and adding it to the fourth configured circulating mill to make dry powder, and collecting semen cassiae cell fluid by the operation medium supply branch;
or (167) a preparation method of platycodon grandiflorum powder and platycodon grandiflorum cell fluid, the method includes: washing fresh rhizoma corydalis and adding it to the fourth configured circulating mill to make dry powder, and collecting platycodon grandiflorum cell fluid by the operation medium supply branch;
or (168) a preparation method of papaya powder and papaya cell fluid, the method includes: washing fresh papaya and adding it to the fourth configured circulating mill to make dry powder, and collecting papaya cell fluid by the operation medium supply branch;
or (169) a preparation method of radix sanguisorbae powder and radix sanguisorbae cell fluid, the method includes: washing fresh radix sanguisorbae and adding it to the fourth configured circulating mill to make dry powder, and collecting radix sanguisorbae cell fluid by the operation medium supply branch;
or (170) a preparation method of fructus gleditsiae sinensis powder and fructus gleditsiae sinensis cell fluid, the method includes: washing fresh fructus gleditsiae sinensis and adding it to the fourth configured circulating mill to make dry powder, and collecting fructus gleditsiae sinensis cell fluid by the operation medium supply branch;
or (171) a preparation method of antipyretic dichroa powder and antipyretic dichroa cell fluid, the method includes: washing fresh antipyretic dichroa and adding it to the fourth configured circulating mill to make dry powder, and collecting antipyretic dichroa cell fluid by the operation medium supply branch;
or (172) a preparation method of cirsium japonicum powder and cirsium japonicum cell fluid, the method includes: washing fresh cirsium japonicum and adding it to the fourth configured circulating mill to make dry powder, and collecting cirsium japonicum cell fluid by the operation medium supply branch;
or (173) a preparation method of radix aconiti carmichaeli powder and radix aconiti carmichaeli cell fluid, the method includes: washing fresh radix aconiti carmichaeli and adding it to the fourth configured circulating mill to make dry powder, and collecting radix aconiti carmichaeli cell fluid by the operation medium supply branch;
or (174) a preparation method of radix peucedani powder and radix peucedani cell fluid, the method includes: washing fresh radix peucedani and adding it to the fourth configured circulating mill to make dry powder, and collecting radix peucedani cell fluid by the operation medium supply branch;
or (175) a preparation method of acanthopanax powder and acanthopanax cell fluid, the method includes: washing fresh acanthopanax and adding it to the fourth configured circulating mill to make dry powder, and collecting acanthopanax cell fluid by the operation medium supply branch;
or (176) a preparation method of rhizoma anemarrhenae powder and rhizoma anemarrhenae cell fluid, the method includes: washing fresh rhizoma anemarrhenae and adding it to the fourth configured circulating mill to make dry powder, and collecting rhizoma anemarrhenae cell fluid by the operation medium supply branch;
or (177) a preparation method of lycium ruthenicum powder and lycium ruthenicum cell fluid, the method includes: washing fresh lycium ruthenicum and adding it to the fourth configured circulating mill to make dry powder, and collecting lycium ruthenicum cell fluid by the operation medium supply branch;
or (178) a preparation method of rhizoma alismatis powder and rhizoma alismatis cell fluid, the method includes: washing fresh rhizoma alismatis and adding it to the fourth configured circulating mill to make dry powder, and collecting rhizoma alismatis cell fluid by the operation medium supply branch;
or (179) a preparation method of saffron powder and saffron cell fluid, the method includes: washing fresh saffron and adding it to the fourth configured circulating mill to make dry powder, and collecting saffron cell fluid by the operation medium supply branch;
or (180) a preparation method of cardamom powder and cardamom cell fluid, the method includes: washing fresh cardamom and adding it to the fourth configured circulating mill to make dry powder, and collecting cardamom cell fluid by the operation medium supply branch;
or (181) a preparation method of matsutake powder and matsutake cell fluid, the method includes: washing fresh matsutake and adding it to the fourth configured circulating mill to make dry powder, and collecting matsutake cell fluid by the operation medium supply branch;
or (182) a preparation method of smanthus fragrans powder and smanthus fragrans cell fluid, the method includes: washing fresh smanthus fragrans and adding it to the fourth configured circulating mill to make dry powder, and collecting smanthus fragrans cell fluid by the operation medium supply branch;
or (183) a preparation method of saussurea involucrata powder and saussurea involucrata cell fluid, the method includes: washing fresh saussurea involucrata and adding it to the fourth configured circulating mill to make dry powder, and collecting saussurea involucrata cell fluid by the operation medium supply branch;
or (184) a preparation method of folium mori powder and folium mori cell fluid, the method includes: washing fresh folium mori and adding it to the fourth configured circulating mill to make dry powder, and collecting folium mori cell fluid by the operation medium supply branch;
or (185) a preparation method of eurycoma longifolia powder and eurycoma longifolia cell fluid, the method includes: washing fresh eurycoma longifolia and adding it to the fourth configured circulating mill to make dry powder, and collecting eurycoma longifolia cell fluid by the operation medium supply branch;
or (186) a preparation method of gecko powder and gecko cell fluid, the method includes: removing impurities from fresh geckos, washing them, and adding them to the fourth configured circulating mill to make dry powder;
or (187) a preparation method of cuttlefish bone powder and cuttlefish bone cell fluid, the method includes: washing fresh cuttlefish bone and adding it to the fourth configured circulating mill to make dry powder;
or (188) a preparation method of leech powder and leech cell fluid, the method includes: washing fresh leech and adding it to the fourth configured circulating mill to make dry powder;
or (189) a preparation method of bezoar powder and bezoar cell fluid, the method includes: washing fresh bezoar and adding it to the fourth configured circulating mill to make dry powder;
or (190) a preparation method of deer antler powder and deer antler cell fluid, the method includes: washing fresh deer antler and adding it to the fourth configured circulating mill to make dry powder;
or (191) a preparation method of bear bile powder and bear bile cell fluid, the method includes: washing fresh bear bile and adding it to the fourth configured circulating mill to make dry powder;
or (192) a preparation method of ground beeltle powder and ground beeltle cell fluid, the method includes: washing fresh ground beeltle and adding it to the fourth configured circulating mill to make dry powder;
or (193) a preparation method of cantharidopsis powder powder and cantharidopsis powder cell fluid, the method includes: washing fresh cantharidopsis powder and adding it to the fourth configured circulating mill to make dry powder;
or (194) a preparation method of cicada slough powder and cicada slough cell fluid, the method includes: washing fresh cicada slough and adding it to the fourth configured circulating mill to make dry powder;
or (195) a preparation method of ant powder and ant cell fluid, the method includes: washing fresh ant and adding it to the fourth configured circulating mill to make dry powder;
or (196) a preparation method of centipede powder and centipede cell fluid, the method includes: washing fresh centipede and adding it to the fourth configured circulating mill to make dry powder;
or (197) a preparation method of pearl powder and pearl cell fluid, the method includes: washing fresh pearl and adding it to the fourth configured circulating mill to make dry powder;
or (198) a preparation method of black chicken powder and rhizoma corydalis cell fluid, the method includes: washing fresh black chicken and adding it to the fourth configured circulating mill to make dry powder;
or (199) a preparation method of pig blood powder and pig blood cell fluid, the method includes: washing fresh pig blood and adding it to the fourth configured circulating mill to make dry powder;
or (200) a preparation method of eel powder and eel cell fluid, the method includes: washing fresh eel and adding it to the fourth configured circulating mill to make dry powder;
or (201) a preparation method of cubilose powder and cubilose cell fluid, the method includes: washing fresh cubilose and adding it to the fourth configured circulating mill to make dry powder;
or (202) a preparation method of crab shell powder and crab shell cell fluid, the method includes: washing fresh crab shell and adding it to the fourth configured circulating mill to make dry powder;
or (203) a preparation method of medicinal talc powder, the method includes:
adding talc powder raw material to the fourth configured circulating mill to make dry powder;
or (204) a preparation method of medicinal mirabilite powder, the method includes: adding mirabilite powder raw material to the fourth configured circulating mill to make dry powder;
or (205) a preparation method of seaweed powder, the method includes: draining fresh seaweeds and adding them to the fourth configured circulating mill to make dry powder;
or (206) a preparation method of fragmented spirulina powder, the method includes: washing fresh spirulina and adding it to the fourth configured circulating mill to make fragmented spirulina powder;
or (207) a preparation method of putty for construction, the method includes:
adding raw putty materials for construction to the sixth configured circulating mill to make powder;
or (208) a grinding method for cement clinker, the method includes: operating the sixth configured circulating mill to add cement clinker to equipment through a feeding port of the mill, pre-crushing, by the mill, the materials into coarse powder, and driving, by an air flow in an outer circulation pipe, the coarse powder into the circulating mill main engine to further crush it into fine powder which is separated by the bag dust collector to obtain cement powder;
or (209) a grinding method for titanium dioxide, in which intermediate raw material products of titanium dioxide finished by a sulphuric acid calcination process are added to a sixth configured circulating mill to make powder, or intermediate raw material products of titanium dioxide after sulfuric acid dechlorination are added to a sixth configured circulating mill to make powder;
or (210) a grinding method for calcium carbonate, in which raw materials of calcium carbonate are added into the sixth configured circulating mill to make fine powder;
or (211) a grinding method for lithopone, in which raw materials of lithopone are added into the sixth configured circulating mill to make fine powder;
or (212) a grinding method for kaolin powder, in which added kaolin into the sixth configured circulating mill to make fine powder;
or (213) a grinding method for stone powder, in which raw materials of stone powder are added into the sixth configured circulating mill to make fine powder;
or (214) a grinding method for medicinal gypsum powder, in which raw materials of medicinal gypsum powder are added into the fourth configured circulating mill to make fine powder;
or (215) a grinding method for gypsum powder for construction, in which raw materials of gypsum powder for construction are added into the sixth configured circulating mill to make fine powder;
or (216) a grinding method for graphite powder, in which raw materials of graphite powder are added into the sixth configured circulating mill to make fine powder;
or (217) a grinding method of iron powder, the method includes: pre-fabricating iron powder raw materials into small pieces below 5mm and adding them to the circulating mill to make fine powder;
or (218) a grinding method of tungsten powder, the method includes:
pre-fabricating tungsten powder raw materials into small pieces below 5mm and
adding them to the circulating mill to make fine powder;
or (219) a grinding method of copper powder, the method includes:
pre-fabricating copper powder raw materials into small pieces below 5mm and adding them to the circulating mill to make fine powder;
or (220) a grinding method of cobalt powder, the method includes:
pre-fabricating cobalt powder raw materials into small pieces below 5mm and adding them to the circulating mill to make fine powder;
or (221) a grinding method of nickel powder, the method includes:
pre-fabricating nickel powder raw materials into small pieces below 5mm and adding them to the circulating mill to make fine powder;
or (222) a grinding method of titanium powder, the method includes:
pre-fabricating titanium powder raw materials into small pieces below 5mm and
adding them to the circulating mill to make fine powder;
or (223) a grinding method of tantalum powder, the method includes:
pre-fabricating tantalum powder raw materials into small pieces below 5mm and
adding them to the circulating mill to make fine powder;
or (224) a grinding method of aluminum powder, the method includes:
pre-fabricating aluminum powder raw materials into small pieces below 5mm and
adding them to the circulating mill to make fine powder;
or (225) a grinding method of tin powder, the method includes: pre-fabricating tin powder raw materials into small pieces below 5mm and adding them to the circulating mill to make fine powder;
or (226) a grinding method of lead powder, the method includes: pre-fabricating lead powder raw materials into small pieces below 5mm and adding them to the circulating mill to make fine powder;
or (227) a grinding method of pesticide powder, the method includes: adding pesticide raw materials to the fourth configured circulating mill to make fine powder;
or (228) a method of sea water desalinization, the method includes: adding sea water to the second configured circulating mill for spray drying, and condensing, by the operation medium supply branch, vaporized moisture into liquid water to obtain fresh water;
or (229) a method of drying sludge, the method includes adding sludge into the fifth configured circulating mill to make dry powder;
or (230) a method of drying sewage sludge, the method includes adding sewage sludge into the fourth configured circulating mill to make dry powder;
or (231) a method of drying septic tank sludge, the method includes adding septic tank sludge into the fourth configured circulating mill to make dry powder;
or (232) a method of drying farm manure, the method includes adding farm manure into the fourth configured circulating mill to make dry powder;
or (233) a method of drying tailings discharged from water treatment equipment, the method includes adding tailings discharged from water treatment equipment into the fifth configured circulating mill to make dry powder;
or (234) a method of drying vegetable waste, the method includes adding vegetable waste into the fifth configured circulating mill to make dry powder;
or (235) a method of processing edible and medicinal powder and retrieving cell fluid, the method includes: washing edible and medicinal raw materials and adding them to the fourth configured circulating mill to make powder, obtaining the powder discharged from a main discharge port, and condensing, by the operation medium supply branch, gaseous water and gaseous volatile components generated during processing into liquid to obtain cell fluid;
or (236) a preparation method of banana powder, the method includes:
controlling the oxygen content in the operation medium to be less than 5% by mass,and making edible parts of bananas into banana powder by using the fourth configured circulating mill;
or (237) a preparation method of green banana powder, the method includes:
controlling the oxygen content in the operation medium to be less than 5% by mass,
and making peeled or unpeeled green bananas into green banana powder by using the fourth configured circulating mill;
or (238) a fragmentation method for washed pine pollen, the method includes centrifugally dehydrating washed pine pollen with water content of 65% to 75% into fragmented powder by using the fourth configured circulating mill;
or (239) a drying method for juice prepared by pressing, the method is performed according to following steps:
S1: equipment configuration: selecting the second configured circulating mill, and selecting nitrogen with oxygen content less than 6% as the operation medium;
S2: adding the juice prepared by pressing to the equipment configured in S1 to make powder, and obtaining the powder discharged from a maim discharge port;
or (240) a preparation method of barley green, the method is performed according to following steps:
S1: equipment configuration: selecting the second configured circulating mill, and controlling the oxygen content of the operation medium to be less than 5%;
S2: preparing barley grass juice:
S201: treatment of raw materials: rinsing tender barley grass; S202: juicing: juicing the barley grass prepared in S201 to obtain barley grass juice;
S203: filtering: filtering solid substances in the barley grass juice prepared in S202 to obtain fine barley grass juice;
S3: spray drying: adding the fine barley grass juice prepared in S2 to the equipment configured in S1 for spray drying, and obtaining barley green discharged from a main discharge port;
or (241) a preparation method of soluble notoginseng powder, the method includes making fresh notoginseng juice prepared by pressing into soluble notoginseng powder by using the second configured circulating mill;
or (242) a preparation method of soluble maca powder, the method includes making fresh maca juice prepared by pressing into soluble maca powder by using the second configured circulating mill;
or (243) a preparation method of soluble apple powder, the method includes making fresh apple juice prepared by pressing into soluble apple powder by using the second configured circulating mill;
or (244) a preparation method of soluble emblic leafflower, the method includes making fresh emblic juice prepared by pressing into soluble emblic powder by using the second configured circulating mill;
or (245) a preparation method of soluble matsutake powder, the method includes making fresh matsutake juice prepared by pressing into soluble matsutake powder by using the second configured circulating mill;
or (246) a fragmentation method of pine pollen, the method is performed according to following steps:
S1: configuring equipment:
S101: employing the fourth circulating mill and the second circulating mill main engine, and configuring the accessory device with the fourth operation medium supply branch;
S102: configuring the accessory device with the second feeding device and the second return device;
S103: configuring the third or fourth optical device, and selecting an ultraviolet sterilization light source as the light source of the optical device;
S104: setting the switching valve of the fourth operation medium supply branch to make the compressor exhaust pipe connected to the second branch and disconnected from the first branch, and opening the valve on the pipeline between the air duct and the outlet of the heater;
S105: selecting nitrogen with oxygen content less than 10% as the operation medium;
S2: fragmentation of pine pollen: adding pine pollen to the equipment configured in S1 to make fragmented pine pollen;
or (247) a preparation method of ultrafine powder of Chinese herbal medicines, the method includes: making dry Chinese herbal medicines into ultrafine powder by using the equipment configured in step S1 in the fragmentation method of pine pollen in claim 9 (248);

10. A product processed by a circulating mill, wherein
(1) the product is a plant fresh fruit powder processed by using the method for preparing plant fresh fruit powder by using a circulating mill according to claim 9(1);
or (2) the product is dry powder made by a spray drying processed by using the method for drying spray by using a circulating mill according to claim 9 (2);
or (3) the product is a feedstuff processed by using the method for Processing feedstuff by using a circulating mill according to claim 9(3);
or (4) the product is a farm produce powder processed by using the method for improving nutrient output of cultivated land according to claim 9(4);
or (5) the product is a a pharmaceutical with volatile components as functional ingredients, which is one of two pharmaceuticals prepared or developed by using the method for preparation and development of a pharmaceutical with volatile components as functional ingredients according to claim 9(5);
or (6) the product is a volatile component in a powder and powder feedstock, prepared by using the method of simultaneously preparing volatile components in powder and powder feedstock according to claim 9(6);
or (7) the product is a volatile components processed by using the method for extracting volatile components from materials according to claim 9(7);
or (8) the product is a plant dew beverage processed by using the method for preparing plant dew beverage according to claim 9(8);
or (9) the product is a crude oil distillate processed by using the method for preparing crude oil distillate according to claim 9(9);
or (10) the product is one of four kinds of a sulfur-free konjac powder processed by using the method for producing sulfur-free konjac powder according to claim 9(10);
or (11) the product is a starch processed by using the method for producing starch according to claim 9(11);
or (12) the product is one of the four a fertilizers processed by using the method for producing fertilizers according to claim 9(12);
or (13) the product is a barley seedling powder processed by using the method for preparing barley seedling powder according to claim 9(13);
or (14) the product is a hemp seed protein powder processed by using the method for preparing hemp seed protein powder according to claim 9(14);
or (15) the product is a a hemp stem powder and products thereof, which are one of three hemp stem powders, one of three profiles, and one of three toothpaste fillers processed by using the processing and utilization method of hemp stem powder according to claim 9.(15);
or (16) the product is a hemp flower and leaf powder processed by using the method for primary processing of hemp flower and leaf in a production area according to claim 9(14);
or (17) the product is a dry granulation raw material powder, prepared by the preparation method of dry granulation raw material powder according to claim 9(17);
or (18) the product is a fish powder processed by using the method for processing fish powder according to claim 9(18);
or (19) the product is a feeding bone powder processed by using the method for processing feeding bone powder according to claim 9(19);
or (20) the product is one of the four a extract processed by using the method for preparing extract according to claim 9(20);
or (21) the product is one of the two a forage grass powder processed by using the method for processing forage grass powder according to claim 9(21);
or (22) the product is a mineral powder processed by using the method for processing mineral powder according to claim 9(22);
or (23) the product is a perfume processed by using the method for preparing perfume with plant aroma as functional component according to claim 9(23);
or (24) the product is a fresh corn flour processed by using the method for preparing fresh corn flour according to claim 9(24);
or (25) the product is a fresh bean flour processed by using the method for preparing fresh bean flour according to claim 9(25);
or (26) the product is a fresh wheat flour processed by using the method for preparing fresh wheat flour according to claim 9(26);
or (27) the product is a fresh rice flour processed by using the method for preparing fresh rice flour according to claim 9(27);
or (28) the product is one of two kinds of potato powder processed by using the method for preparing potato powder according to claim 9(28);
or (29) the product is a pumpkin powder processed by using the method for preparing pumpkin powder according to claim 9(29);
or (30) the product is a tomato powder processed by using the method for preparing tomato powder according to claim 9(30);
or (31) the product is a green onion powder processed by using the method for preparing green onion powder according to claim 9(31);
or (32) the product is one of two kinds of ginger powder processed by using the method for preparing ginger powder according to claim 9(32);
or (33) the product is a cucumber powder processed by using the method for preparing cucumber powder according to claim 9(33);
or (34) the product is a watermelon powder processed by using the method for preparing watermelon powder according to claim 9(34);
or (35) the product is a pepper powder processed by using the method for preparing pepper powder according to claim 9(35);
or (36) the product is a garlic bolt powder processed by using the method for preparing garlic bolt powder according to claim 9(36);
or (37) the product is a cabbage powder processed by using the method for preparing cabbage powder according to claim 9(37);
or (38) the product is a bitter cabbage powder processed by using the method for preparing bitter cabbage powder according to claim 9(38);
or (39) the product is a carrot powder processed by using the method for preparing carrot powder according to claim 9(39);
or (40) the product is a tea powder processed by using the method for preparing tea powder according to claim 9(40);
or (41) the product is a edible rose powder processed by using the method for preparing edible rose powder according to claim 9(41);
or (42) the product is a rose cell fluid processed by using the method for preparing rose cell fluid according to claim 9(42);
or (43) the product is a fresh maca powder and maca glucosinolates processed by using the method for preparing fresh maca powder and maca glucosinolates according to claim 9(43);
or (44) the product is a coffee powder processed by using the method for preparing coffee powder according to claim 9(44);
or (45) the product is one of two kinds of instant coffee processed by using the method for preparing instant coffee according to claim 9(45);
or (46) the product is a milk powder processed by using the method for preparing milk powder according to claim 9(46);
or (47) the product is a soybean milk powder processed by using the method for preparing soybean milk powder according to claim 9(47);
or (48) the product is a Chinese herbal medicine powder and Chinese herbal medicine cell fluid processed by using the method for preparing Chinese herbal medicine powder and Chinese herbal medicine cell fluid according to claim 9(48);
or (49) the product is a ginseng powder and ginseng cell fluid processed by using the method for preparing ginseng powder and ginseng cell fluid according to claim 9(49);
or (50) the product is a radix linderae powder and radix linderae cell fluid processed by using the method for preparing radix linderae powder and radix linderae cell fluid according to claim 9(50);
or (51) the product is a atractylodes powder and atractylodes cell fluid processed by using the method for preparing atractylodes powder and atractylodes cell fluid according to claim 9(51);
or (52) the product is a radix paeoniae alba powder and radix paeoniae alba cell fluid processed by using the method for preparing radix paeoniae alba powder and radix paeoniae alba cell fluid according to claim 9(52);
or (53) the product is a fritillaria powder and fritillaria cell fluid processed by using the method for preparing fritillaria powder and fritillaria cell fluid according to claim 9(53);
or (54) the product is a hyacinth bletilla powder and hyacinth bletilla cell fluid processed by using the method for preparing hyacinth bletilla powder and hyacinth bletilla cell fluid according to claim 9(54);
or (55) the product is a American ginseng powder and American ginseng cell fluid processed by using the method for preparing American ginseng powder and American ginseng cell fluid according to claim 9(55);
or (56) the product is a red ginseng powder and red ginseng cell fluid processed by using the method for preparing red ginseng powder and red ginseng cell fluid according to claim 9(56);
or (57) the product is a Chinese yam powder and Chinese yam cell fluid processed by using the method for preparing Chinese yam powder and Chinese yam cell fluid according to claim 9(57);
or (58) the product is a chrysanthemum morifolium ramat powder and chrysanthemum morifolium ramat cell fluid processed by using the method for preparing chrysanthemum morifolium ramat powder and chrysanthemum morifolium ramat cell fluid according to claim 9(58);
or (59) the product is a chrysanthemum rhizoma corydalis powder and rhizoma corydalis cell fluid processed by using the method for preparing rhizoma corydalis powder and rhizoma corydalis cell fluid according to claim 9(59);
or (60) the product is a radix scrophulariae powder and radix scrophulariae cell fluid processed by using the method for preparing radix scrophulariae powder and radix scrophulariae cell fluid according to claim 9(60);
or (61) the product is a radix ophiopogonis powder and radix ophiopogonis cell fluid processed by using the method for preparing radix ophiopogonis powder and radix ophiopogonis cell fluid according to claim 9(61);
or (62) the product is a radix curcumae powder and radix curcumae cell fluid processed by using the method for preparing radix curcumae powder and radix curcumae cell fluid according to claim 9(62);
or (63) the product is a notoginseng powder and notoginseng cell fluid processed by using the method for preparing notoginseng powder and notoginseng cell fluid according to claim 9(63);
or (64) the product is a pine needles powder and pine needles cell fluid processed by using the method for preparing pine needles powder and pine needles cell fluid according to claim 9(64);
or (65) the product is a pea powder and pea cell fluid, processed by using the method for preparing pea powder and pea cell fluid, according to claim 9(65);
or (66) the product is a notoginseng flower powder and notoginseng flower cell fluid processed by using the method for preparing notoginseng flower powder and notoginseng flower cell fluid according to claim 9(66);
or (67) the product is a notoginseng leaf powder and notoginseng leaf cell fluid processed by using the method for preparing notoginseng leaf powder and notoginseng leaf cell fluid according to claim 9(67);
or (68) the product is a gastrodia elata powder and gastrodia elata cell fluid processed by using the method for preparing gastrodia elata powder and gastrodia elata cell fluid according to claim 9(68);
or (69) the product is a erigeron breviscapus powder and erigeron breviscapus cell fluid processed by using the method for preparing erigeron breviscapus powder and erigeron breviscapus cell fluid according to claim 9(69);
or (70) the product is a caulis dendrobii powder and caulis dendrobii cell fluid processed by using the method for preparing caulis dendrobii powder and caulis dendrobii cell fluid according to claim 9(70);
or (71) the product is a radix angelicae sinensis powder and radix angelicae sinensis cell fluid processed by using the method for preparing radix angelicae sinensis powder and radix angelicae sinensis cell fluid according to claim 9(71);
or (72) the product is a magnolia officinalis powder and magnolia officinalis cell fluid processed by using the method for preparing magnolia officinalis powder and magnolia officinalis cell fluid according to claim 9(72);
or (73) the product is a radix scutellariae powder and radix scutellariae cell fluid processed by using the method for preparing radix scutellariae powder and radix scutellariae cell fluid according to claim 9(73);
or (74) the product is amomum villosum powder and amomum villosum cell fluid processed by using the method for preparing amomum villosum powder and amomum villosum cell fluid according to claim 9(74);
or (75) the product is a polygonum multiflorum powder and polygonum multiflorum cell fluid processed by using the method for preparing polygonum multiflorum powder and polygonum multiflorum cell fluid according to claim 9(75);
or (76) the product is a resina draconis powder and resina draconis cell fluid processed by using the method for preparing eresina draconis powder and resina draconis cell fluid according to claim 9(76);
or (77) the product is radix aconiti brachypodi powder and radix aconiti brachypodi cell fluid processed by using the method for preparing radix aconiti brachypodi powder and radix aconiti brachypodi cell fluid according to claim 9(77);
or (78) the product is a common alstonia leaf powder and common alstonia leaf cell fluid processed by using the method for preparing common alstonia leaf powder and common alstonia leaf cell fluid according to claim 9(78);
or (79) the product is a kusnezoff monkshood root powder and kusnezoff monkshood root cell fluid processed by using the method for preparing kusnezoff monkshood root powder and kusnezoff monkshood root cell fluid according to claim 9(79);
or (80) the product is a pinellia powder and pinellia cell fluid processed by using the method for preparing pinellia powder and pinellia cell fluid according to claim 9(80);
or (81) the product is a radix geutianae powder and radix geutianae cell fluid processed by using the method for preparing radix geutianae powder and radix geutianae cell fluid according to claim 9(81);
or (82) the product is a eucommia powder and eucommia cell fluid processed by using the method for preparing eucommia powder and eucommia cell fluid according to claim 9(82);
or (83) the product is a radix saposhnikovia powder and radix saposhnikovia cell fluid processed by using the method for preparing radix saposhnikovia powder and radix saposhnikovia cell fluid according to claim 9(83);
or (84) the product is a poria cocos powder and poria cocos cell fluid processed by using the method for preparing poria cocos powder and poria cocos cell fluid according to claim 9(84);
or (85) the product is a honeysuckle powder and honeysuckle cell fluid processed by using the method for preparing honeysuckle powder and honeysuckle cell fluid according to claim 9(85);
or (86) the product is a rhizoma polygonati powder and rhizoma polygonati cell fluid processed by using the method for preparing rhizoma polygonati powder and rhizoma polygonati cell fluid according to claim 9(86);
or (87) the product is a cordyceps sinensis powder and cordyceps sinensis cell fluid processed by using the method for preparing cordyceps sinensis powder and cordyceps sinensis cell fluid according to claim 9(87);
or (88) the product is a radix bupleuri powder and radix bupleuri cell fluid processed by using the method for preparing radix bupleuri powder and radix bupleuri cell fluid according to claim 9(88);
or (89) the product is a radix codonopsis powder and radix codonopsis cell fluid processed by using the method for preparing radix codonopsis powder and radix codonopsis cell fluid according to claim 9(89);
or (90) the product is a pepper powder and pepper cell fluid processed by using the method for preparing pepper powder and pepper cell fluid according to claim 9(90);
or (91) the product is a radix isatidis powder and radix isatidiss cell fluid processed by using the method for preparing radix isatidis powder and radix isatidiss cell fluid according to claim 9(91);
or (92) the product is a aloe vera powder and aloe vera cell fluid processed by using the method for preparing aloe vera powder and aloe vera cell fluid according to claim 9(92);
or (93) the product is a amomum powder and amomum cell fluid processed by using the method for preparing amomum powder and amomum cell fluid according to claim 9(93);
or (94) the product is a rhizoma paridis powder and rhizoma paridis cell fluid processed by using the method for preparing rhizoma paridis powder and rhizoma paridis cell fluid according to claim 9(94);
or (95) the product is a rhizoma ligustici wallichii powder and rhizoma ligustici wallichii cell fluid processed by using the method for preparing rhizoma ligustici wallichii powder and rhizoma ligustici wallichii cell fluid according to claim 9(95);
or (96) the product is a cordate houttuynia powder and cordate houttuynia cell fluid processed by using the method for preparing cordate houttuynia powder and cordate houttuynia cell fluid according to claim 9(96);
or (97) the product is a loquat leaf powder and loquat leaf cell fluid processed by using the method for preparing loquat leaf powder and loquat leaf cell fluid according to claim 9(97);
or (98) the product is a croton powder and croton cell fluid processed by using the method for preparing croton powder and croton cell fluid according to claim 9(98);
or (99) the product is a gallnut powder and gallnut cell fluid processed by using the method for preparing gallnut powder and gallnut cell fluid according to claim 9(99);
or (100) the product is a cornus powder and cornus cell fluid processed by using the method for preparing cornus powder and cornus cell fluid according to claim 9(100);
or (101) the product is a radix dipsaci powder and radix dipsacis cell fluid processed by using the method for preparing radix dipsaci powder and radix dipsacis cell fluid according to claim 9(101);
or (102) the product is a rhodiola powder and rhodiola cell fluid processed by using the method for preparing rhodiola powder and rhodiola cell fluid according to claim 9(102);
or (103) the product is a sea buckthorn powder powder and sea buckthorn powder cell fluid processed by using the method for preparing sea buckthorn powder powder and sea buckthorn powder cell fluid according to claim 9(103);
or (104) the product is a desertliving cistanch powder and desertliving cistanch cell fluid processed by using the method for preparing desertliving cistanch powder and desertliving cistanch cell fluid according to claim 9(104);
or (105) the product is a astragalus powder and astragalus cell fluid processed by using the method for preparing astragalus powder and astragalus cell fluid according to claim 9(105);
or (106) the product is a licorice powder and licorice cell fluid processed by using the method for preparing licorice powder and licorice cell fluid according to claim 9(106);
or (107) the product is a Chinese wolfberry powder and Chinese wolfberry cell fluid processed by using the method for preparing Chinese wolfberry powder and Chinese wolfberry cell fluid according to claim 9(107);
or (108) the product is a spikenard powder and spikenard cell fluid processed by using the method for preparing spikenard powder and spikenard cell fluid according to claim 9(108);
or (109) the product is a valerian powder and valerian cell fluid processed by using the method for preparing valerian powder and valerian cell fluid according to claim 9(109);
or (110) the product is a red paeony root powder and red paeony root cell fluid processed by using the method for preparing red paeony root powder and red paeony root cell fluid according to claim 9(110);
or (111) the product is a notopterygium powder and notopterygium cell fluid processed by using the method for preparing notopterygium powder and notopterygium cell fluid according to claim 9(111);
or (112) the product is a selfheal powder and selfheal cell fluid processed by using the method for preparing selfheal powder and selfheal cell fluid according to claim 9(112);
or (113) the product is a radix angelicae pubescentis powder and radix angelicae pubescentis cell fluid processed by using the method for preparing radix angelicae pubescentis powder and radix angelicae pubescentis cell fluid according to claim 9(113);
or (114) the product is a lily powder and lily cell fluid processed by using the method for preparing lily powder and lily cell fluid according to claim 9(114);
or (115) the product is a radix polygonati officinalis powder and radix polygonati officinalis cell fluid processed by using the method for preparing radix polygonati officinalis powder and radix polygonati officinalis cell fluid according to claim 9(115);
or (116) the product is a gynostemma powder and gynostemma cell flui processed by using the method for preparing gynostemma powder and gynostemma cell flui according to claim 9(116);
or (117) the product is a Chinese bulbul powder and Chinese bulbul cell fluid processed by using the method for preparing Chinese bulbul powder and Chinese bulbul cell fluid according to claim 9(117);
or (118) the product is a cowherb seed powder and cowherb seed cell fluid processed by using the method for preparing cowherb seed powder and cowherb seed cell fluid according to claim 9(118);
or (119) the product is a fruit of Chinese magnoliavine powder and fruit of Chinese magnoliavine cell fluid processed by using the method for preparing fruit of Chinese magnoliavine powder and fruit of Chinese magnoliavine cell fluid according to claim 9(119);
or (120) the product is a dodder powder and dodder cell fluid processed by using the method for preparing dodder powder and dodder cell fluid according to claim 9(120);
or (121) the product is a hawthorn powder and hawthorn cell fluid processed by using the method for preparing hawthorn powder and hawthorn cell fluid according to claim 9(121);
or (122) the product is a artemisinin powder and artemisinin cell fluid processed by using the method for preparing artemisinin powder and artemisinin cell fluid according to claim 9(122);
or (123) the product is a cortex periploca powder and cortex periploca cell fluid processed by using the method for preparing cortex periploca powder and cortex periploca cell fluid according to claim 9(123);
or (124) the product is a moringa fresh leaf powder and moringa leaf cell fluid processed by using the method for preparing moringa fresh leaf powder and moringa leaf cell fluid according to claim 9(124);
or (125) the product is a rhizoma zedoariae powder and rhizoma zedoariae cell fluid processed by using the method for preparing rhizoma zedoariae powder and rhizoma zedoariae cell fluid according to claim 9(125);
or (126) the product is a gardenia powder and gardenia cell fluid processed by using the method for preparing gardenia powder and gardenia cell fluid according to claim 9(126);
or (127) the product is a folium artemisiae argyi powder and folium artemisiae argyi cell fluid processed by using the method for preparing folium artemisiae argyi powder and folium artemisiae argyi cell fluid according to claim 9(127);
or (128) the product is a cinnamon powder and cinnamon cell fluid processed by using the method for preparing cinnamon powder and cinnamon cell fluid according to claim 9(128);
or (129) the product is a ageratum powder and ageratum cell fluid processed by using the method for preparing ageratum powder and ageratum cell fluid according to claim 9(129);
or (130) the product is a fructus anisi stellati powder and fructus anisi stellati cell fluid processed by using the method for preparing fructus anisi stellati powder and fructus anisi stellati cell fluid according to claim 9(130);
or (131) the product is a ganoderma lucidum powder and ganoderma lucidum cell flui processed by using the method for preparing ganoderma lucidum powder and ganoderma lucidum cell flui according to claim 9(131);
or (132) the product is a sporoderm-broken ganoderma lucidum spore powder and ganoderma lucidum spore cell fluid processed by using the method for preparing sporoderm-broken ganoderma lucidum spore powder and ganoderma lucidum spore cell fluid according to claim 9(132);
or (133) the product is a wild fungus powder and wild fungus cell fluid processed by using the method for preparing wild fungus powder and wild fungus cell fluid according to claim 9(133);
or (134) the product is a mushrooms powder and mushrooms cell fluid processed by using the method for preparing mushrooms powder and mushrooms cell fluid according to claim 9(134);
or (135) the product is a stevia powder and stevia cell fluid processed by using the method for preparing stevia powder and stevia cell fluid according to claim 9(135);
or (136) the product is a rhizoma acori tatarinowii powder and rhizoma acori tatarinowii cell fluid processed by using the method for preparing rhizoma acori tatarinowii powder and rhizoma acori tatarinowii cell fluid according to claim 9(136);
or (137) the product is a radix puerariae powder and radix puerariae cell fluid processed by using the method for preparing radix puerariae powder and radix puerariae cell fluid according to claim 9(137);
or (138) the product is a radix pseudostellariae powder and radix pseudostellariae cell fluid processed by using the method for preparing radix pseudostellariae powder and radix pseudostellariae cell fluid according to claim 9(138);
or (139) the product is a phytolacca acinosa powder and phytolacca acinosa cell fluid processed by using the method for preparing phytolacca acinosa powder and phytolacca acinosa cell fluid according to claim 9(139);
or (140) the product is a polygonum cuspidatum powder and polygonum cuspidatum cell fluid processed by using the method for preparing polygonum cuspidatum powder and polygonum cuspidatum cell fluid according to claim 9(140);
or (141) the product is a rhubarb powder and rhubarb cell fluid processed by using the method for preparing rhubarb powder and rhubarb cell fluid according to claim 9(141);
or (142) the product is a paniculate swallowwort root powder and paniculate swallowwort root cell fluid processed by using the method for preparing paniculate swallowwort root powder and paniculate swallowwort root cell fluid according to claim 9(142);
or (143) the product is a motherwort powder and motherwort cell fluid processed by using the method for preparing motherwort powder and motherwort cell fluid according to claim 9(143);
or (144) the product is a sophora powder and sophora cell fluid processed by using the method for preparing sophora powder and sophora cell fluid according to claim 9(144);
or (145) the product is a chrysanthemum powder and chrysanthemum cell fluid processed by using the method for preparing chrysanthemum powder and chrysanthemum cell fluid according to claim 9(145);
or (146) the product is a gordon euryale seed powder and gordon euryale seed cell fluid processed by using the method for preparing gordon euryale seed powder and gordon euryale seed cell fluid according to claim 9(146);
or (147) the product is a tribulus terrestris powder and tribulus terrestris cell fluid processed by using the method for preparing tribulus terrestris powder and tribulus terrestris cell fluid according to claim 9(147);
or (148) the product is a rhizoma bistortae powder and rhizoma bistortae cell fluid processed by using the method for preparing rhizoma bistortae powder and rhizoma bistortae cell fluid according to claim 9(148);
or (149) the product is a rhizoma drynariae powder and rhizoma drynariae cell fluid processed by using the method for preparing rhizoma drynariae powder and rhizoma drynariae cell fluid according to claim 9(149);
or (150) the product is a herba artemisiae scopariae powder and herba artemisiae scopariae cell fluid processed by using the method for preparing herba artemisiae scopariae powder and herba artemisiae scopariae cell fluid according to claim 9(150);
or (151) the product is a fructus arctii powder and fructus arctii cell fluid processed by using the method for preparing fructus arctii powder and fructus arctii cell fluid according to claim 9(151);
or (152) the product is a forsythia powder and forsythia cell fluid processed by using the method for preparing forsythia powder and forsythia cell fluid cell fluid according to claim 9(152);
or (153) the product is a herba schizonepetae powder and herba schizonepetae cell fluid processed by using the method for preparing herba schizonepetae powder and herba schizonepetae cell fluid according to claim 9(153);
or (154) the product is a uncaria powder and uncaria cell fluid processed by using the method for preparing uncaria powder and uncaria cell fluid according to claim 9(154);
or (155) the product is a daphne genkwa powder and daphne genkwa cell fluid processed by using the method for preparing daphne genkwa powder and daphne genkwa cell fluid according to claim 9(155);
or (156) the product is a mint powder and mint cell fluid processed by using the method for preparing mint powder and mint cell fluid according to claim 9(156);
or (157) the product is a coix seed powder and coix seed cell fluid processed by using the method for preparing coix seed powder and coix seed cell fluidd according to claim 9(157);
or (158) the product is a fructus xanthii powder and fructus xanthii cell fluid processed by using the method for preparing fructus xanthii powder and fructus xanthii cell fluid according to claim 9(158);
or (159) the product is a rhizoma arisaematis powder and rhizoma arisaematis cell fluid processed by using the method for preparing rhizoma arisaematis powder and rhizoma arisaematis cell fluid according to claim 9(159);
or (160) the product is a radix fici hirtae powder and radix fici hirtae cell fluid processed by using the method for preparing radix fici hirtae powder and radix fici hirtae cell fluid according to claim 9(160);
or (161) the product is a sargentodoxa cuneata powder and sargentodoxa cuneata cell fluid processed by using the method for preparing sargentodoxa cuneata powder and sargentodoxa cuneata cell fluid according to claim 9(161);
or (162) the product is a lysimachia christinae hance powder and lysimachia christinae hance cell flui processed by using the method for preparing lysimachia christinae hance powder and lysimachia christinae hance cell flui according to claim 9(162);
or (163) the product is a raspberry powder and raspberry cell fluid processed by using the method for preparing raspberry powder and raspberry cell fluid according to claim 9(163);
or (164) the product is a dogbane leaf powder and dogbane leaf cell fluid processed by using the method for preparing dogbane leaf powder and dogbane leaf cell fluid according to claim 9(164);
or (165) the product is a radix ranunculi ternati powder and radix ranunculi ternati cell fluid processed by using the method for preparing radix ranunculi ternati powder and radix ranunculi ternati cell fluid according to claim 9(165);
or (166) the product is a semen cassiae powder and semen cassiae cell fluid processed by using the method for preparing semen cassiae powder and semen cassiae cell fluid according to claim 9(166);
or (167) the product is a platycodon grandiflorum powder and platycodon grandiflorum cell fluid processed by using the method for preparing platycodon grandiflorum powder and platycodon grandiflorum cell fluid according to claim 9(167);
or (168) the product is a papaya powder and papaya cell fluid processed by using the method for preparing papaya powder and papaya cell fluid according to claim 9(168);
or (169) the product is a radix sanguisorbae powder and radix sanguisorbae cell fluid processed by using the method for preparing radix sanguisorbae powder and radix sanguisorbae cell fluid according to claim 9(169);
or (170) the product is a fructus gleditsiae sinensis powder and fructus gleditsiae sinensis cell flui processed by using the method for preparing fructus gleditsiae sinensis powder and fructus gleditsiae sinensis cell flui according to claim 9(170);
or (171) the product is a antipyretic dichroa powder and antipyretic dichroa cell fluid processed by using the method for preparing antipyretic dichroa powder and antipyretic dichroa cell fluid according to claim 9(171);
or (172) the product is a cirsium japonicum powder and cirsium japonicum cell fluid processed by using the method for preparing cirsium japonicum powder and cirsium japonicum cell fluid according to claim 9(172);
or (173) the product is a radix aconiti carmichaeli powder and radix aconiti carmichaeli cell flui processed by using the method for preparing radix aconiti carmichaeli powder and radix aconiti carmichaeli cell flui according to claim 9(173);
or (174) the product is a radix peucedani powder and radix peucedani cell fluid processed by using the method for preparing common radix peucedani powder and radix peucedani cell fluid according to claim 9(174);
or (175) the product is a acanthopanax powder and acanthopanax cell fluid processed by using the method for preparing acanthopanax powder and acanthopanax cell fluid according to claim 9(175);
or (176) the product is a rhizoma anemarrhenae powder and rhizoma anemarrhenae cell fluid processed by using the method for preparing rhizoma anemarrhenae powder and rhizoma anemarrhenae cell fluid according to claim 9(176);
or (177) the product is a lycium ruthenicum powder and lycium ruthenicum cell fluid processed by using the method for preparing lycium ruthenicum powder and lycium ruthenicum cell fluid according to claim 9(177);
or (178) the product is a rhizoma alismatis powder and rhizoma alismatis cell fluid processed by using the method for preparing rhizoma alismatis powder and rhizoma alismatis cell fluid according to claim 9(178);
or (179) the product is a saffron powder and saffron cell flui processed by using the method for preparing saffron powder and saffron cell flui according to claim 9(179);
or (180) the product is a cardamom powder and cardamom cell fluid processed by using the method for preparing cardamom powder and cardamom cell fluid according to claim 9(180);
or (181) the product is a matsutake powder and matsutake cell fluid processed by using the method for preparing matsutake powder and matsutake cell fluid according to claim 9(181);
or (182) the product is a smanthus fragrans powder and smanthus fragrans cell fluid processed by using the method for preparing smanthus fragrans powder and smanthus fragrans cell fluid according to claim 9(182);
or (183) the product is a saussurea involucrata powder and saussurea involucrata cell fluid processed by using the method for preparing saussurea involucrata powder and saussurea involucrata cell fluid according to claim 9(183);
or (184) the product is a folium mori powder and folium mori cell fluid processed by using the method for preparing folium mori powder and folium mori cell fluid according to claim 9(184);
or (185) the product is a gecko powder and gecko cell fluid processed by using the method for preparing gecko powder and gecko cell fluid according to claim 9(185);
or (186)the product is a gecko powder processed by using the method for preparing gecko powder according to claim 9(186);
or (187) the product is a cuttlefish bone powder processed by using the method for preparing cuttlefish bone powder according to claim 9(187);
or (188) the product is a leech powder processed by using the method for preparing leech powder according to claim 9(188);
or (189) the product is a bezoar powder processed by using the method for preparing bezoar powder according to claim 9(189);
or (190)the product is a deer antler powder processed by using the method for preparing deer antler powder according to claim 9(190);
or (191) the product is a bear bile powder processed by using the method for preparing bear bile powder according to claim 9(191);
or (192) the product is a ground beeltle powder processed by using the method for preparing ground beeltle powder according to claim 9(192);
or (193) the product is a beeltle processed by using the method for preparing beeltle according to claim 9(193);
or (194) the product is a cicada slough powder processed by using the method for preparing cicada slough powder according to claim 9(194);
or (195) the product is a ant powder processed by using the method for preparing ant powder according to claim 9(195);
or (196) the product is a centipede powder processed by using the method for preparing centipede powder according to claim 9(196);
or (197)the product is a pearl powder processed by using the method for preparing pearl powder according to claim 9(197);
or (198) the product is a black chicken powder processed by using the method for preparing black chicken powder according to claim 9(198);
or (199) the product is a pig blood powder processed by using the method for preparing pig blood powder according to claim 9(199);
or (200)the product is a eel powder processed by using the method for preparing eel powder according to claim 9(200);
or (201) the product is a cubilose powder processed by using the method for preparing cubilose powder according to claim 9(201);
or (202) the product is a crab shell powder processed by using the method for preparing crab shell powder according to claim 9(202);
or (203) the product is a medicinal talc powder processed by using the method for preparing talc powder according to claim 9(203);
or (204) the product is a medicinal mirabilite powder processed by using the method for preparing mirabilite powder according to claim 9(204);
or (205) the product is a seaweed powder processed by using the method for preparing seaweed powder according to claim 9(205);
or (206) the product is a fragmented spirulina powder processed by using the method for preparing fragmented spirulina powder according to claim 9(206);
or (207) the product is a putty for construction processed by using the method for preparing putty for construction according to claim 9(207);
or (208) the product is a cement processed by using the method for grinding cement clinker according to claim 9(208);
or (209) the product is a titanium dioxide processed by using the method for grinding titanium dioxide according to claim 9(209);
or (210) the product is a calcium carbonate processed by using the method for grinding calcium carbonate according to claim 9(210);
or (211) the product is a lithopone processed by using the method for grinding lithopone according to claim 9(211);
or (212) the product is a kaolin powder processed by using the method for grinding kaolin powder according to claim 9(212);
or (213) the product is a coal powder processed by using the method for grinding coal powder according to claim 9(213);
or (214)the product is a stone powder processed by using the method for grinding stone powder according to claim 9(214);
or (215)the product is a ore powder processed by using the method for grinding ore powder according to claim 9(215);
or (216) the product is a gypsum powder processed by using the method for grinding gypsum powder according to claim 9(216);
or (217) the product is a iron powder processed by using the method for grinding iron powder according to claim 9(217);
or (218) the product is a tungsten powder processed by using the method for grinding tungsten powder according to claim 9(218);
or (219) the product is a copper powder processed by using the method for grinding copper powderd according to claim 9(219);
or (220) the product is a cobalt powder processed by using the method for grinding cobalt powder according to claim 9(220);
or (221) the product is a nickel powder processed by using the method for grinding nickel powder according to claim 9(221);
or (222) the product is a titanium powder processed by using the method for grinding titanium powder according to claim 9(222);
or (223) the product is a tantalum powder processed by using the method for grinding tantalum powder according to claim 9(223);
or (224) the product is a aluminum powder processed by using the method for grinding aluminum powder according to claim 9(224);
or (225) the product is a tin powder processed by using the method for grinding tin powder according to claim 9(225);
or (226) the product is a lead powder processed by using the method for preparing grinding lead powder according to claim 9(226);
or (227) the product is a pesticide powder processed by using the method for grinding pesticide powder according to claim 9(227);
or (228) the product is a fresh water processed by using the method for preparing sea water desalinization according to claim 9(228);
or (229) the product is a sludge processed by using the method for drying sludge according to claim 9(229);
or (230) the product is a sewage sludge processed by using the method for drying sewage sludge according to claim 9(230);
or (231) the product is a septic tank sludge processed by using the method for drying septic tank sludge according to claim 9(231);
or (232) the product is a farm manure processed by using the method for drying farm manure according to claim 9(232);
or (233) the product is a tailings discharged from water treatment equipment processed by using the method for drying tailings discharged from water treatment equipment according to claim 9(233);
or (234) the product is a vegetable waste powder processed by using the method for drying vegetable waste powder according to claim 9(234);
or (235) the product is a edible and medicinal powder and retrieving cell fluid processed by using the method for preparing edible and medicinal powder and retrieving cell fluid according to claim 9(235);
or (236) the product is a banana powder processed by using the method for preparing banana powder according to claim 9(236);
or (237) the product is a green banana powder processed by using the method for preparing green banana powder according to claim 9(237);
or (238) the product is a washed pine pollen processed by using the method for preparing washed pine pollen according to claim 9(238);
or (239) the product is a powder processed by using the method for preparing drying method for juice prepared by pressing according to claim 9(239);
or (240) the product is a barley green processed by using the method for preparing barley green according to claim 9(240);
or (241) the product is a soluble notoginseng powder processed by using the method for preparing soluble notoginseng powder according to claim 9(241);
or (242) the product is a soluble maca powder processed by using the method for preparing soluble maca powder according to claim 9(242);
or (243) the product is a soluble apple powder fluid processed by using the method for preparing soluble apple powder according to claim 9(243);
or (244) the product is a soluble emblic leafflower processed by using the method for preparing soluble emblic leafflower according to claim 9(244);
or (245) the product is a soluble matsutake powder processed by using the method for preparing soluble matsutake powder according to claim 9(245);
or (246) the product is a fragmented pine pollen processed by using the method for preparing fragmented pine pollen according to claim 9(246);
or (247) the product is a ultrafine powder of Chinese herbal medicines processed by using the method for preparing ultrafine powder of Chinese herbal medicines according to claim 9(247).
